# EUROPEAN PATENT SPECIFICATION

(11) **EP 2 783 369 B1**
(45) Date of publication and mention of the grant of the patent: **14.06.2017**
(21) Application number: 12816683.2
(22) Date of filing: 27.11.2012
(51) Int. Cl.: G21B 3/00

(54) **THERMAL-ENERGY PRODUCING SYSTEM AND METHOD**
SYSTEM UND VERFAHREN ZUR PRODUKTION VON WÄRMEENERGIE
SYSTÈME ET PROCÉDÉ DE PRODUCTION D'ÉNERGIE THERMIQUE

(30) Priority: 27.11.2011 US 201161563786 P; 08.07.2012 US 201261669077 P
(43) Date of publication of application: 01.10.2014
(73) Proprietor: Etiam Oy, 15900 Lahti (FI)
(72) Inventor: SOININEN, Pekka, FI-02150 Espoo (FI)
(74) Representative: Seppo Laine Oy
(86) International application number: PCT/FI2012/051171
(87) International publication number: WO 2013/076378

(56) References cited:
- WO-A1-95/20816
- WO-A1-2009/125444
- WO-A1-2010/058288
- BADIEI S ET AL: "Rydberg Matter of K and N2: angular dependence of the time-of-flight for neutral and ionized clusters formed in Coulomb explosions", INTERNATIONAL JOURNAL OF MASS SPECTROMETRY, ELSEVIER SCIENCE PUBLISHERS, AMSTERDAM, NL, vol. 220, no. 2, 1 October 2002 (2002-10-01), pages 127-136, XP004380684, ISSN: 1387-3806, DOI: 10.1016/S1387-3806(02)00689-9

## Description

### TECHNICAL FIELD

The present invention relates generally to the production of thermal energy based on fusion reactions induced by strong electric fields.

### BACKGROUND ART

According to the theory of special relativity energy has an equivalent mass and mass has an equivalent energy. The law of conservation of mass-energy in an isolated system means that the total amount of energy (energy + mass converted into equivalent energy) must be constant. On the other hand, the law of conservation of mass-energy in an isolated system means that the total amount of mass (mass + energy converted into equivalent mass) must be constant. Thus, loss of mass in the system means that energy must be released in the system. As a consequence, energy is released in the fusion reaction if the sum of masses of initial nuclei and possible elementary particles (e.g. neutrons) is larger than the mass of the final nucleus and possible elementary particles (e.g. neutrons).

According to Jeffrey A. Geuthera and Yaron Danon in a publication titled "Electron and positive ion acceleration with pyroelectric crystals", published in Journal of Applied Physics 97, 074109 s2005d, electric field strength of 1.35x10⁷ V/cm was obtained in a lithium niobate crystal with ΔT = 75 °C.

W. Hu et al. present piezoelectric materials made from ternary solid solutions of BiFeO3-PbZrO3-PbTiO3, in Journal of the European Ceramic Society, Volume 31, Issue 5, May 2011, Pages 801 -807. As an example of ternary solid solutions, 0.648BiFeO₃-0.053PbZrO₃-0.299PbTiO₃ has a Curie temperature of 560 °C.

P. Shiv Halasyamani and Kenneth R. Poeppelmeier have compiled and categorized over 500 noncentrosymmetric oxides by symmetry-dependent property and crystal class in Chem. Mater. 1998, 10, pp. 2753 -2769. Noncentrosymmetric (NCS) compounds possess symmetry-dependent properties comprising piezoelectricity and ferroelectricity.

Commercial nanopowders of metals and metal compounds are available from various companies. American Elements, 23 Rue Des Ardennes, 75019 Paris, France, sells various nanopowders, e.g. nickel oxide nanopowder (typical particle diameter 10 - 30 nm, specific surface area 130-150 m²/g).

It is known that metallic hydrides are formed by most of the d- block elements (i.e., transition elements), on reacting with hydrogen. Hydrogen exists in the atomic rather than ionic form. Due to small size of hydrogen atoms when compared to the metal atoms, hydrogen atoms occupy interstitial positions in the metal lattices. Thus these are interstitial compounds and some workers regard them nearly as solid solutions.

Transition metal hydrides have been described by A. Dedieu (ed.) in a book, "Transition metal hydrides", John Wiley & Sons, 1991, ISBN: 978-0-471-18768-8.

S-block elements that have at least one stable isotope consist of hydrogen (H), lithium (Li), sodium (Na), potassium (K), rubidium (Rb), caesium (Cs), helium (He), beryllium (Be), magnesium (Mg), calcium (Ca), strontium (Sr) and barium (Ba). In addition to transition metals, it is known that beryllium and magnesium of s-block elements also form metallic hydrides, i.e. they have low electric resistivity.

When hydrogen is absorbed into the interstices of transition metal lattices, metallic hydrides are formed. For example, palladium metal absorbs hydrogen to form palladium hydride. In some cases, the metals (e.g. palladium Pd) are used as cathodes in the electrolysis of their aqueous solutions so that metals absorb hydrogen during electrolysis and form metal hydrides such as PdH₂. Metallic or interstitial hydrides compounds are non-stoichiometric, and their composition varies with temperature and pressure. As an example, the compositions of titanium and zirconium hydrides are often represented as TiH_{1.7}, and ZrH_{1.9}, respectively. They release hydrogen easily and are strong reducing agents, suggesting that the presence of hydrogen in its atomic state. These compounds are used as industrial reducing agents.

Complex transition metal hydrides have been described in a publication by Klaus Yvon & Guillaume Renaudin, "Hydrides: Solid State Transition Metal Complexes", Encyclopedia of Inorganic Chemistry, Second Edition (ISBN 0-470-86078-2), Volume III, pp. 1814-1846.

Crystal structures can be divided into 32 classes, or point groups. Ten point groups of the 32 point groups are polar. All polar crystals are pyroelectric, so the 10 polar crystal classes are sometimes referred to as the pyroelectric classes. Pyroelectric crystal classes are 1, 2, m, mm2, 3, 3m, 4, 4mm, 6 and 6mm.

Piezoelectric crystal classes are 1, 2, m, 222, mm2, 4, -4, 422, 4mm, -42m, 3, 32, 3m, 6, - 6, 622, 6mm, -62m, 23 and -43m.

Decreasing the grain size (crystallite size) of a dielectric material does not destroy the desired properties of a dielectric material. Actually, desired properties, such as the dielectric constant, are greatly improved by decreasing the crystallite size. Decreasing crystallite size of a dielectric material increased clearly the dielectric constant of the said dielectric material, as published by S. S. Batsanov, V. I. Galko and K. V. Papugin, "Dielectric permittivity and electrical conductivity of polycrystalline materials", Inorganic Materials 2010, vol. 46, no. 12, pp. 1365-1368.

It is generally known that hydrogen is a dielectric gas that does not conduct electricity in normal conditions. In very strong electric field (very steep voltage gradient) electron can be ripped off the hydrogen atom and plasma consisting of electrons and protons is formed. The very strong electric field has typically been created at the macroscopic level where the dimensions of the system are so large that the presence of hydrogen plasma can be observed visually by eye.

B. Naranjo, J.K. Gimzewski and S. Putterman have observed nuclear fusion driven by a pyroelectric crystal. The results were published in Nature 434, 1115-1117 (28 April 2005), digital object identifier doi:10.1038/nature03575. However, the energy required to produce the fusion reactions in their experimental setup exceeded the energy produced by the fusion reactions. Thus, the coefficient of performance COP was below 1.

Metallic (interstitial) hydrides have been described by K. Yvon, "Hydrogen in novel solid-state metal hydrides", Z. Kristallogr. 218 (2003) 108- 116. Metallic hydrides in K. Yvon's publication comprise interstitial hydrides such as quaternary metal hydrides (the first metal, the second metal, the third metal and hydrogen) CeMn_{1.8}Al_{0.2}H_{4.4}, NdNi₄MgH₄ and LaMg₂NiH₇.

The decomposition temperature of the metal hydride depends on the metal hydride compound. For example, nickel hydride exists at temperatures up to hundreds of degrees centigrade (°C) as disclosed by B. Baranowski and S.M. Filipek in Polish J. Chem., 79, 789-806 (2005). On the other hand, copper hydride may decompose near room temperature in basic environment, although in acidic environment the decomposition temperature of copper hydride is higher, as disclosed by Nuala P. Fitzsimons in Catalysis Letters 15 (1992) 83 -94.

Nickel compounds and manufacturing of nickel oxides, nickel hydroxides and nickel carbonate from nickel compounds have been described in Kirk-Othmer Encyclopedia of Chemical Technology (4th Edition), Vol 17, Nickel compounds.

Catalysts used for activating hydrogen by breaking chemical bonds between hydrogen atoms and other atoms and forming reactive hydrogen have been described by James H. Clark, Duncan J. Macquarrie and Mario De bruyn, in Kirk-Othmer Encyclopedia of Chemical Technology, "Catalyst, Supported", Wiley online edition 2011, http://dx.doi.org/10.1002/0471238961.1921161614090512.a01.pub3, and by Olaf Deutschmann, Helmut Knözinger, Karl Kochloefl and Thomas Turek, in Ullmann's Encyclopedia of Industrial Chemistry, Wiley-VCH Verlag GmbH & Co. KGaA online edition 2009, article title "Heterogeneous Catalysis and Solid Catalysts", http://dx.doi.org/10.1002/14356007.a05_313.pub2, and by Carlo Giavarini and Ferruccio Trifirò, in Encyclopaedia of Hydrocarbons, Volume II, Refining and Petrochemicals, Istituto Della Enciclopedia Italiana, Fondata da Giovanni Treccani S.p.A., Italy 2005.

Common industrial catalysts activating hydrogen comprise styrene synthesis catalysts that are examples of dehydrogenation catalysts (also known as hydrogen abstraction catalysts), ammonia (NH₃) synthesis catalysts, Fischer-Tropsch synthesis catalysts, high temperature water gas shift (HT-WGS) catalysts and hydrogenation catalysts (such as oil and fat hydrogenation catalysts).

Precursors for styrene catalysts comprise iron oxide Fe₂O₃ (red iron oxide, hematite) mixed with e.g. at least 10 wt% potassium oxide (K₂O) acting as an electron source and activation promoter, and small amounts of alumina (Al₂O₃) and chromia (Cr₂O₃) acting as structural promoters. Fe₂O₃ has rhombohedral corundum (α-Al₂O₃) crystal structure and when it is reduced with hydrogen during the manufacturing of the styrene catalyst, black iron oxide, magnetite Fe₃O₄ with inverse spinel structure is formed. Fe₃O₄ consists of FeO*Fe₂O₃ and it has iron in two oxidation states, namely Fe(II) and Fe(III). Residual Fe₂O₃ unit cells with the corundum structure induce lattice defects in the Fe₃O₄ catalyst. Addition of stable metal oxides, e.g. the said alumina and chromia and sometimes V₂O₃ with the corundum structure, preserves lattice defects in the catalyst and keeps the catalyst in active condition. Thus, a common composition of the industrial styrene synthesis catalyst is Fe₃O₄:K, Al₂O₃ or Fe₃O₄:K, Cr₂O₃. These catalysts are typically used at temperatures up to about 640 °C.

In the point of catalyst activity, useful structural defects form in the boundaries between the different crystal phases (e.g. hematite / corundum). The activity of the catalyst correlates with the number of lattice defects. Good catalysts have a large number of stable lattice defects. When heated, poor catalysts rearrange their crystal lattice structures so that lattice defects are eliminated and the activity of the catalyst drops.

Paracrystalline matter has short and medium rage crystal order with a lot of structural defects. Materials with paracrystalline structure have distorted lattice cells and local microstrains because of the random point defects and are utilized as very active industrial catalysts. Known paracrystalline catalysts comprise nickel - alumina, iron - alumina and copper - zinc - alumina catalysts. Preparation methods for making highly active paracrystalline catalysts have been disclosed by D.C. Puxley, I.J. Kitchener, C. Komodromos and N.D. Parkyns in "The Effect Of Preparation Method Upon The Structures, Stability And Metal/Support Interactions In Nickel/Alumina Catalysts", Studies in Surface Science and Catalysis, volume 16, 1983, pages 237-271,http://dx.doi.org/10.1016/S0167-2991(09)60025-2.

Ammonia synthesis catalysts, utilized e.g. in the Haber-Bosch method, comprise iron promoted with potassium hydroxide KOH or potassium oxide (K₂O) to increase the local electron density and with textural promoters that are stable metal oxides in process conditions, often Al₂O₃ and/or CaO, to prevent sintering of iron metal particles. For example, a typical ammonia synthesis catalyst contains about 93 wt% Fe₃O₄, about 1 wt% K₂O, about 3 wt% Al₂O₃ and about 3 wt% CaO. These catalysts are typically used at temperatures up to about 450 °C.

Fischer-Tropsch method converts carbon monoxide (CO) and hydrogen into various hydrocarbons. Fischer-Tropsch catalysts comprise cobalt (Co), iron (Fe), ruthenium (Ru) or nickel (Ni) promoted with copper (Cu) or group 1 alkali metals, e.g. potassium (K). Often Fe₂O₃ precursor doped with potassium (in the form of KOH or K₂O) is reduced with hydrogen into Fe₃O₄:K and utilized as the Fischer-Tropsch catalyst. These catalysts are typically used at temperatures up to about 300 °C.

High temperature water gas shift method converts carbon monoxide (CO) and water (H₂O) into carbon dioxide (CO₂) and hydrogen (H₂). High temperature water gas shift catalysts comprise iron oxides doped with potassium or lanthanum niobate LaNiO₃ promoted with potassium. These catalysts are typically used at temperatures up to about 350 °C.

Hydrogenation catalysts comprise platinum (Pt), palladium (Pd), rhodium (Rh), ruthenium (Ru), alloys of Pt, Pd, Rh and Ru, Raney nickel, Urushibara nickel and nickel oxide. Nickel forms stoichiometric green nickel oxide NiO with a NaCl crystal structure, non-stoichiometric black Ni₁₋ₓO, wherein x is about 0.02, and black Ni(III) oxide Ni₂O₃. Potassium is often added to the nickel catalysts for promoting catalytic activity. These catalysts are typically used at temperatures up to several hundred °C.

An alkali metal, usually potassium, is essential for the activity of the styrene catalyst. In the styrene catalyst potassium forms potassium ferrites (potassium-iron-oxides), mainly KFeO₂ surface phase and K₂Fe₂₂O₃₄ phase with a cubic crystal structure similar to the inverse spinel structure of Fe₃O₄ (magnetite).

Crystalline materials have various types of defects. Point defects are cation and anion vacancies and interstitial atoms in the crystal structure. Vacancies can form clusters of vacancies for example in iron oxide crystals. Vacancy clusters are voids, i.e. small regions in the crystal without atoms. Line defects in crystals include edge dislocations and screw dislocations. Planar defects are stacking faults in crystals and grain boundary interfaces. Defects are essential for the high activity of catalysts. Structural promoters added to catalyst materials preserve the defects in the catalyst materials lengthening the lifetime of catalysts.

Stoichiometric nickel oxide NiO has green color and it is an insulator. Nickel-deficient non-stoichiometric nickel oxide Ni₁₋ₓO, wherein x is typically about 0.02, has black color and is a semiconductor. There are nickel vacancies in Ni₁₋ₓO. Adding alkali metal, e.g. lithium Li, to Ni₁₋ₓO makes the nickel oxide a much better conductor of electricity, a metallic metal oxide. Nickel oxide with defective crystal structure has very high catalytic activity and it is used as a hydrogenation catalyst.

Regarding the storage of hydrogen, several metal ammine salts capable of storing hydrogen in the form of ammonia have been disclosed by Rasmus Z. Sørensen, Jens S. Hummelshøj, Asbjørn Klerke, Jacob Birke Reves, Tejs Vegge, Jens K. Nørskov and Claus H. Christensen in "Indirect, Reversible High-Density Hydrogen Storage in Compact Metal Ammine Salts", J. Am. Chem. Soc. 2008, 130, pp. 8660-8668, http://dx.doi.org/10.1021/ja076762c. Specifically, MgCl₂ molecule is capable of binding up to 6 NH₃ molecules and forming Mg(NH₃)₆Cl₂ salt that stores over 9 wt% hydrogen and has only 2.2 mbar NH₃ vapor pressure at +27 °C. Ammonia is released from the metal ammine salt by heating the salt. Ammonia gas is cracked into hydrogen gas and nitrogen gas at elevated temperatures preferably with a catalyst, e.g. Ni, Pt catalyst or a catalyst based on carbon nanotubes doped with ruthenium and potassium hydroxide.

Regarding the penetration of the Coulomb barrier around the atom nucleus, resonance of a wave function of a particle in a quantum well system has been described by David Bohm, "Quantum theory", Prentice-Hall, New York 1951. Specifically, a wave is reflecting back and forth across the potential in a quantum well, a wave coming in the quantum well from outside enhances the wave inside the quantum well and a strong standing wave is built up inside the quantum well when the system is in resonance. Further, the waveform of a proton tunnels through the Coulomb barrier to the nucleus of an atom with certain probability. Near a resonance the waveform intensity of the proton is considerable in the quantum well and the probability of fusing proton with the nucleus is increased. The metastable state of the fused nucleus may have such a long lifetime in solid state structures that it can decay in other ways than by re-emission of the incident proton or by emission of gamma-ray photons, and energy is released over relatively long time also as lower energy photons (e.g. X-ray photons) or as phonons (lattice vibrations) to the surrounding solid lattice. Nuclear reactions generated by the adsorption of hydrogen isotopes in a matrix of clusters of a transition metal are disclosed in WO2010/058288 A1.

When one or more electrons of an atom are excited to high principal quantum number, the excited electron is in the Rydberg state and the atom becomes a Rydberg atom. It is an electrical dipole with a positive core and a negative excited electron orbiting relatively far from the core. As a result, external electric and magnetic fields have a big effect on Rydberg atoms. Rydberg atoms interact with each other because of the electrical dipole properties and are capable of binding together. Rydberg atoms are produced e.g. by electron impact excitation, charge exchange excitation and optical excitation. Excitation energy below the ionization energy produces Rydberg states in atoms. These Rydberg atoms are electrically polarized, which pulls Rydberg atoms together forming clusters of Rydberg atoms.

Until now elements that have been found to possess Rydberg states comprise H, Li, Na, K, Rb, Cs, N, Ni, Ag, Cu, Pd, Ti and Y.

Rydberg formula describes wavelengths of spectral lines observable in atoms that have an electron in Rydberg states. Rydberg formula for any hydrogen-like element is 1/λ_{vac} = RZ²(1/n₁²-1/n₂²), wherein λ_{vac} is the wavelength of the light emitted in vacuum; R is the Rydberg constant for this element; Z is the number of protons in the atomic nucleus of this element (atomic number); n₁ and n₂ are principal quantum number integers such that n₁ < n₂.

Rydberg states are closely spaced and they form Rydberg series (n₂ = n₁ + 1, n₁ +2, ..., n₁ + ∞). In case of hydrogen atom (Z = 1) Rydberg series comprise Lyman series (n₁ = 1, n₂ = 2, 3, ..., ∞) from 121.6 nm (10.2 eV) to 91.18 nm (13.6 eV, Lyman limit, ionization energy), Balmer series (n₁ = 2, n₂ = 3, 4, ..., ∞) from 656.3 nm (1.89 eV) to 364.6 nm (3.4 eV, Balmer limit, ionization energy), Paschen series (n₁ = 3, n₂ = 4, 5, ..., ∞) from 1870 nm (0.66 eV) to 820 nm (1.51 eV, Paschen limit, ionization energy), Brackett series (n₁ = 4, n₂ = 5, 6, ..., ∞) from 4050 nm (0.31 eV) to 1460 nm (0.85 eV, Brackett limit, ionization energy), Pfund series (n₁ = 5, n₂ = 6, 7, ..., ∞) from 7460 nm (0.17 eV) to 2280 nm (0.54 eV, Pfund limit, ionization energy) and Humphreys series (n₁ = 6, n₂ = 7, 8, ..., ∞) from 12400 nm (0.10 eV) to 3280 nm (0.38 eV, Humphreys limit, ionization energy). Wavelengths (nm) can easily be converted to electron volts (eV) and vice versa with the equation E(eV) ≈ 1240 eVnm / λ (nm).

The electron gains energy when its principal quantum number is increased and it emits a photon when its principal quantum number decreases. When the Rydberg atom is ionized, i.e. an electron is excited with an ionization energy, the quantum mechanical unity of the Rydberg atom is lost and separate particles (positive ion and negative electron) are formed. It is possible to excite more than one electron in an atom (excluding hydrogen), but it is easier to form a Rydberg atom with a single excited electron.

Examples of first ionization energies of atoms, where an outer (valence) electron is lifted from n = 1 to n = ∞ and removed from the atom, are: H 13.598 eV, Li 5.392 eV, Na 5.139 eV, K 4.341 eV, Rb 4.177 eV, Cs 3.894 eV, Ni 7.640 eV, Pd 8.337 eV, Ag 7.576 eV and Ti 6.828 eV. Energies of Rydberg states of electrons are smaller than the said ionization energies.

A thorough textbook on Rydberg atoms has been written by Thomas F. Gallagher "Rydberg Atoms" (Cambridge Monographs on Atomic, Molecular and Chemical Physics), Cambridge University Press 1994, ISBN 0-521-38531-8.

Rydberg matter is a phase of matter formed by Rydberg atoms. Rydberg matter is held together by the delocalized excited electrons in Rydberg states to form an overall lower energy state of the cluster of Rydberg atoms. Lifetime of the cluster is in the order of seconds, minutes or even longer depending on the primary quantum number (n) of the Rydberg states. Rydberg matter seeks the lowest total energy of the local system by the dipole-dipole interactions of the Rydberg atoms. Rydberg matter forms a condensed phase when the condensation energy is removed from the Rydberg matter.

Heavy Rydberg systems consisting of anion cation pairs bound together via electrostatic forces are also known, e.g. H⁺H⁻ (proton, hydride ion). Quantum mechanics also allows an inverted system where, instead of an excited electron orbiting the core, the wavefunction corresponds to the setup where the core is in orbit around the excited electron. This kind of system is capable of forming extremely dense clusters of atoms.

Rydberg states of hydrogen molecules H₂* have been observed at 900-1000 K on iron oxide surfaces that have been doped with potassium by Jiaxi Wang and Leif Holmlid in "Formation of long-lived Rydberg states of H2 at K impregnated surfaces", Chemical Physics 261 (2000) 481-488, http://dx.doi.org/10.1016/S0301-0104(00)00288-3.

Density of up to 10²⁹ deuterium atoms /cm³ in Rydberg matter clusters in pores in iron oxide doped with potassium and calcium was confirmed by L. Holmlid, H. Hora, G. Miley and X. Yang in "Ultrahigh-density deuterium of Rydberg matter clusters for inertial confinement fusion targets", Laser and Particle Beams 27 (2009) pp. 529-532, http://dx.doi.org/10.1017/S0263034609990267. The distance between deuterons was only 2.3 pm, which indicated that the deuterium clusters consisted of inverted Rydberg matter.

Hydrogen Rydberg matter and inverted Rydberg matter on potassium doped iron oxide catalyst were exposed to 564 nm laser beam to induce Coulomb explosions and found to emit high energy particles of up to 150 eV / atomic mass unit by Shahriar Badiei, Patric U. Andersson and Leif Holmlid in "Fusion reactions in high-density hydrogen: A fast route to small-scale fusion", International Journal of Hydrogen Energy 34 (2009) pp. 487-495, http://dx.doi.org/10.1016/j.ijhydene.2008.10.024. The energy of the particles corresponds to the 10⁹ K temperature, which indicates that favorable conditions for nuclear fusion processes can be induced in solid state matter with a relatively low power laser.

### SUMMARY OF INVENTION

Utilization of novel physical phenomena at the nanoscale makes it possible to construct a compact thermal energy source with cheap common materials.

A reaction container is filled with a reaction material and is pressurized with hydrogen gas.

The reaction material comprises a dielectric material that possesses electric polarizability, a metallic material capable of forming interstitial and/or electrically conductive metal hydrides and a material promoting the formation and storage of Rydberg matter.

Hydrogen isotopes utilized in the present invention are protium H, deuterium D and tritium T (generally hydrogen).

Hydrogen molecules H₂ are activated by breaking the chemical bond between hydrogen atoms. Activation is preferably done with a material comprising a transition metal, transition metals or mixtures of transition metals capable of forming metal hydrides such as nickel and platinum group metals. Atomic hydrogen (H) is formed by activation.

Atomic hydrogen H is ionized into H⁺ (proton) in strong electric field. Hydrogen ions and electrons are accelerated to high kinetic energy by the strong electric field that has steep voltage gradient.

Original source of the electric field is preferably a dielectric material that can be polarized comprising piezoelectric material (electric polarization is induced by mechanical vibration, e.g. by an ultrasonic source), pyroelectric material (electric polarization is induced by variable temperature) and/or multiferroic material (electric polarization is induced by a magnetic field). Polarization of a material creates the electric field near the material.

Fusion reactions are initiated at the nanoscale (at least one dimension smaller than about 100 nm) by the combination of three control factors: sufficiently high hydrogen gas pressure in the reaction container, sufficiently high temperature in the reaction container and the polarization of a dielectric material.

Ionized hydrogen and electrons are accelerated with the local electric field to a kinetic energy that corresponds to the strength of the local electric field. Ionized hydrogen and electrons gain kinetic energy because of the acceleration. Ionized hydrogen with sufficiently high kinetic energy tunnels with sufficiently high probability through the Coulomb barrier between the ionized hydrogen and target atomic nucleus and fuses with the target atomic nucleus. Ionized hydrogen and electrons with relatively low kinetic energy excite electrons on particle surfaces and create Rydberg atoms. Local electric field is greatly enhanced by the geometry of the metallic nanoparticles and the short distance between the nanoparticles. An electron can be ripped away from the hydrogen atom that is near the metallic tip in strong electric field or is between metallic nanoparticles in strong electric field.

Based on the above, it is an aim of the present invention to provide a method of producing energy. It is a second aim of the invention to provide a nuclear fusion system for producing thermal energy. It is a third aim of the invention to provide a fusion energy production process. It is a fourth aim of the invention to provide a fusion energy reaction material. It is a fifth aim of the invention to provide a use of hydrogen-containing Rydberg matter and/or inverted Rydberg matter.

### Technical Problem

The price of energy increases continuously. The production of energy from fossil fuels is problematic due to green house gas emissions. Solar energy and wind energy suffer from variable power output. Nuclear energy is not generally favored because of catastrophic accidents in nuclear power plants. Fusion energy research has not yet produced any working solution in spite of multi-billion dollar investments.

### Solution to Problem

Electric field strengths capable of accelerating hydrogen ions to kinetic energies high enough to tunnel through the Coulomb barrier of nuclei and fusing with the nuclei are generated with a novel system comprising dielectric materials possessing electric polarizability that act as electric charge sources and metallic nanopowders capable of forming interstitial and/or electrically conductive metal hydrides that act as electric field focusing and electric field strength enhancing materials and hydrogen ion sources.

Electric field strengths capable of accelerating hydrogen ions and electrons to kinetic energies high enough to excite electrons on solid surfaces to Rydberg states and form Rydberg matter are generated with a novel system comprising dielectric materials possessing electric polarizability that act as electric charge sources, metallic nanopowders capable of forming interstitial and/or electrically conductive metal hydrides that act as electric field focusing and electric field strength enhancing materials and hydrogen ion sources and catalytic nanopowders promoting the formation and storage of Rydberg matter.

### Advantageous Effects of Invention

The price of thermal energy or electrical energy produced by the present invention is less than about 1 euro-cent / 3.6 MJ or kWh. The amount and cost of fuel needed for the present thermal-energy generating system is very small compared to any system utilizing fossil fuels.

### BRIEF DESCRIPTION OF DRAWINGS

Fig. **1** depicts prior art describing the enhancement of electric field in very small dimensions. Reference: http://juluribk.com/2011/04/09/electric-field-in-metal-nanoparticle-dimers/
Fig. **2** depicts prior art describing the enhancement of electric field by the formation of surface plasmons by photons. Reference: "Modern Aspects of Electrochemistry 44, Modeling and Simulations II", Vol. 2, pp. 70-73, M. Schlesinger, ed., Springer 2009.
Fig. **3** depicts an example embodiment of the fusion system of the present invention.
Fig. **4** depicts the details of the reaction container shown in Fig. 3.
Fig. **5** depicts another example embodiment of the fusion system of the present invention.
Fig. **6** depicts the cross section of the reaction container shown in Fig. 5.
Fig. **7** depicts an example embodiment of the fusion system of the present invention.
Fig. **8** depicts the cross section of the reaction container shown in Fig. 7.
Figs. **9a, 9b** and **9c** depict another example embodiment of the fusion system of the present invention.
Fig. **10** depicts a close up view of the reaction material according to an example embodiment of the present invention.
Fig. **11** depicts the enhancement of electric field strength according to an example embodiment of the present invention.
Fig. **12** depicts the acceleration of ions according to an example embodiment of the present invention.
Fig. **13** depicts the acceleration of ions according to another example embodiment of the present invention.
Figs. **14a** and **14b** depict the electron shell structure of the potassium atom and the excitation of the valence electron of the potassium atom into a hydrogen Rydberg atom, respectively.
Figs. **15a** and **15b** depict the electron shell structure of the hydrogen atom, and the excitation of the valence electron of the hydrogen atom into a hydrogen Rydberg atom, respectively.
Figs. **16a, 16b** and **16c** depict the electrostatic attraction between two hydrogen Rydberg atoms, between two potassium Rydberg atoms, and between two hydrogen Rydberg atoms and a potassium Rydberg atom, respectively.
Figs. **17a** and **17b** illustrate a structure of a defect-free crystal, and a structure of a crystal that has a structural defect, respectively.
Fig. **18** illustrates a defective crystal that has stored a cluster of Rydberg atoms in condensed phase.
Fig. **19** depicts a flow chart of the nuclear fusion process according to an embodiment of the present invention.

### DESCRIPTION OF EMBODIMENTS

The reaction material of the reaction container comprises metallic material capable of forming interstitial and/or electrically conductive metal hydrides (active hydrogen material), dielectric material possessing electrical polarizability and material promoting the formation and storage of Rydberg matter. The active hydrogen material is preferably in the form of nanopowder capable of enhancing local electric field.

In an embodiment the polarizable dielectric material comprises a material or materials or a mixture of materials possessing electric polarizability, comprising pyroelectric material, multiferroic material and/or piezoelectric material. The material possessing electric polarizability is preferably in the form of powder or nanoporous material. Electric polarization of the polarizable dielectric material is induced by a controlled polarization factor comprising temperature variation, static or variable magnetic field and/or mechanical vibrations.

In an embodiment the active hydrogen material comprises generally transition metals that are capable of forming interstitial metal hydrides such as nickel, titanium, zirconium, hafnium, platinum group metals or generally metals that are capable of forming metallic metal hydrides.

In an embodiment transition metals capable of forming interstitial hydrides that have negative hydrogen ions (hydrides) and/or hydrogen with a metallic bond are utilized in the metallic nanopowder. Negative or positive hydrogen ions are pulled away by the local electric field from the surface of the metallic nanopowder. According to the definition the metallic bonding is based on the electrostatic attractive forces between the delocalized electrons (conduction electrons) and the positively charged metal ions (e.g. hydrogen ions, protons, p⁺). Thus, positively charged hydrogen exists near the surface of the transition metal hydride and that hydrogen ion can be ripped away from the transition metal hydride and accelerated with the strong local electric field until with a noticeable probability it can tunnel through the Coulomb barrier between its nucleus and another nucleus and fuse with that other nucleus releasing fusion energy.

In an embodiment the active hydrogen material comprises metallic or interstitial hydrides having partly ionic and metallic bond between metal and hydrogen. Examples of interstitial hydrides comprise transition metal hydrides. The said transition metal hydrides are preferably electrically conductive (i.e. they have low electrical resistivity). Electrical conductivity of the metal hydride is beneficial for the present invention for focusing the electric field and enhancing the local electric field strength.

Common unit for electrical resistivity (resistivity, specific electrical resistance, volume resistivity) is µΩcm or Ωm. In an embodiment the resistivity of the active hydrogen material is preferably smaller than about 1000 µΩcm, more preferably smaller than about 500 µΩcm, most preferably smaller than about 100 µΩcm. Common unit for electrical conductivity (specific conductance) is S·m⁻¹. In other words, the active hydrogen material preferably has high electrical conductivity.

In an embodiment the active hydrogen material comprises hydrogen-storage alloys that are known to be used in nickel-metal hydride secondary batteries. The said hydrogen-storage alloys are optionally doped with traces of a third metal to adjust dissociation pressures and/or temperatures to ranges utilized in the present invention. Transition metal hydrides form also complexes that can be used as the active hydrogen material. Certain transition metal hydride complexes, i.e., interstitial metal hydride complexes, have metallic properties, meaning that they conduct electricity, i.e. they have sufficiently low electrical resistivity (i.e. sufficiently high electrical conductivity).

In an embodiment the active hydrogen material comprises so called AB₅ and AB₂ hydrogen storage alloys. The said AB₅ hydrogen storage alloys combine a hydride forming metal A, comprising a rare earth metal (La, Ce, Nd, Pr, Y or their mixture), with another element, comprising nickel and/or nickel doped with other metals, such as Co, Sn or Al. The said doping adjusts convenient equilibrium hydrogen pressure and convenient temperature range required for charging and discharging the AB₅ hydrogen storage alloy with hydrogen. The said AB₂ hydrogen storage alloys (Laves phases) comprise alloys containing titanium, zirconium or hafnium at the A-site and a transition metal(s) at a B-site (such as Mn, Ni, Cr and V).

In an embodiment the active hydrogen material comprises electrically conductive alloys that are known to be hydrogenation catalysts, used in the industry for example for adding hydrogen to organic compounds. Examples of hydrogen catalysts comprise cerium-magnesium alloy CeMg₂.

In an embodiment the active hydrogen material comprises rare earth elements having at least one stable isotope comprising Y, La, Ce, Pr, Nd, Sm, Eu, Gd, Tb, Dy, Ho, Er, Tm, Yb and Lu that are capable of forming rare earth hydrides. Examples of rare earth hydrides comprise lanthanum dihydride LaH₂, lanthanum trihydride LaH₃, cerium dihydride CeH₂, non-stoichiometric cerium hydrides CeHₓ, wherein x is a real number up to about 3 and rare earth metal hydrides of Y, Pr, Nd, Sm, Eu, Gd, Tb and Dy with varying metal-hydrogen composition.

In an embodiment the active hydrogen material comprises material capable of forming binary metal hydride consisting of a metal and hydrogen. Examples of formed binary metal hydrides comprise group 4B metal hydrides comprising titanium hydride TiH₂, zirconium hydride ZrH₂ and hafnium hydride HfH₂ and group 5B metal hydrides comprising vanadium hydride VH, niobium hydride NbH, niobium dihydride NbH₂ and tantalum hydride TaH and group 8B metal hydrides comprising nickel hydrides NiHₓ, wherein x is a real number bigger than 0 and smaller than about 3.

In an embodiment the active hydrogen material comprises material capable of forming ternary metal hydrides consisting of the first metal, the second metal and hydrogen. Examples of formed ternary metal hydrides comprise stoichiometric ternary hydrides, such as FeTiH₂, Mg₂TiH₆, MgTi₂H₆, and nonstoichiometric ternary hydrides, such as LaNi₅H_{6.7}.

In an embodiment the active hydrogen material comprises electrically conductive materials selected from complex transition metal hydrides.

In an embodiment the hydrogen content of the active hydrogen material is altered and controlled with the hydrogen gas pressure over the metal hydride. For example, increasing the hydrogen gas pressure increases the hydrogen content of the metal hydride.

Increasing the reaction container temperature increases the number of collisions of gaseous hydrogen atoms and molecules with the solid surfaces of the nanopowders. Increasing the reaction container temperature increases the available thermal activation energy for forming atomic hydrogen. It is easier to ionize atomic hydrogen than molecular hydrogen, because molecular hydrogen is kept intact with the chemical bond between the hydrogen atoms.

In an embodiment the hydrogen content of the active hydrogen material is altered and controlled with the temperature of the said active hydrogen material. For example, decreasing the temperature increases the hydrogen content of the metal hydride.

Hydrogen gas is the primary hydrogen source. Primary hydrogen source provides hydrogen to the active hydrogen material.

In an embodiment the primary hydrogen gas source comprises hydrogen gas bottle that has pure hydrogen gas or a gas mixture having hydrogen gas mixed with other gases comprising nitrogen, helium, argon, neon, xenon, or krypton.

In an embodiment the primary hydrogen gas source comprises metal hydride that releases hydrogen gas by heating.

In an embodiment the primary hydrogen gas source comprises hydrogen gas generator based on chemical reactions comprising mixing of an acid comprising H₂SO₄, HCl, H₃PO₄, HCOOH, CH₃COOH, or a base comprising NaOH or KOH with reactive metals comprising Zn, Al or Mg or reactive metal alloys comprising aluminum activated with gallium or mercury, or based on electrolysis of water or water-containing solutions.

In an embodiment the primary hydrogen gas source comprises hydrogen generator based on chemical reactions comprising mixing of water with reactive metal alloys comprising aluminum activated with gallium or mercury.

In an embodiment the primary hydrogen source is an organic compound comprising an alcohol that releases hydrogen gas when it is cracked with moist air in the presence of a catalyst comprising cerium dioxide CeO₂ doped for example with Fe, Co or Ir. Examples of the said alcohol comprise ethanol, isopropanol, n-propanol, n-butanol, sec-butanol, tert-butanol and methanol.

In an embodiment hydrogen is stored in the form of ammonia NH₃ in metal salts comprising LiCl, LiBr, LiI, MgCl₂, MgBr₂, MgI₂,CaCl₂, CaBr₂, CaI₂, SrCl₂, SrBr₂, SrI₂, BaCl₂, BaBr₂, BaI₂, MnCl₂, MnBr₂, MnI₂, FeCl₂, FeBr₂, FeI₂, CoCl₂, CoBr₂, CoI₂, NiCl₂, NiBr₂, NiI₂, SnCl₂, SnBr₂, and SnI₂, to form metal ammine salts, preferably MgCl₂ to form Mg(NH₃)₆Cl₂, and ammonia is released by heating from the metal ammine salts, and released ammonia is cracked into hydrogen and nitrogen gases, and formed hydrogen gas is introduced to the fusion reaction container and utilized for the nuclear fusion processes.

In an embodiment the fusion process temperature is controlled by at least one means of control selected from the external heating power, mass flow rate of the cooling fluid in the cooling fluid circulation and hydrogen gas pressure of the fusion reaction container.

In an embodiment the active hydrogen material is formed *in situ* in the form of metallic nanopowder in the reaction container by decomposing a metal compound nanopowder into a metal oxide nanopowder and reducing the said metal oxide nanopowder into elemental metal or metallic nanopowder. As a non-limiting example, the metal compound nanopowder comprises nickel nitrate or nickel carbonate nanopowder and the decomposition into nickel oxide nanopowder is done by heating the metal compound nanopowder to the decomposition temperature. Further, the said nickel oxide nanopowder is reduced e.g. with hydrogen gas at least partially into elemental nickel metal nanopowder that serves as an example of the metallic nanopowder that is used as the active hydrogen material in the reaction container of the present invention.

Because molecular hydrogen H₂ and atomic hydrogen H is electrically neutral without an electric charge and electric field does not affect it, it is preferred to create hydrogen ions from hydrogen. Removal the electron from the hydrogen atom creates positive hydrogen ion H⁺ (proton), D⁺ or T⁺. Addition of electron to the hydrogen atom creates negative hydrogen ion H⁻ (hydride ion), D or T . Positive and negative hydrogen ions have electric charge and they can be accelerated in electric field. Positive hydrogen ions (such as H⁺, D⁺, T⁺) are accelerated towards the negative pole in the electric field. Negative hydrogen ions (such as H⁻, D⁻, T⁻) are accelerated towards the positive pole in the electric field. The proton (H⁺) is the lightest hydrogen ion and it is the easiest hydrogen isotope to accelerate in electric field. Local electric field strength is greatly enhanced with nanotips and/or nanoparticles. Acceleration increases kinetic energy. Near the nanotips and between the nanoparticles the giant electric field accelerates hydrogen ions (protium ion H⁺, hydride ion H , deuterium ion D⁺, deuteride ion D , tritium T⁺ ion or tritide ion T⁻) to such high kinetic energies that they can enter other atom nuclei by tunneling through the Coulomb barrier and fuse with the atom nuclei releasing fusion energy.

Molecular hydrogen has a chemical bond between two hydrogen atoms. It is beneficial to break the said chemical bond by absorbing hydrogen gas into metal that can form metallic or interstitial metal hydride or by activating hydrogen by a transition metal preferably comprising nickel or a platinum group metal.

In an embodiment the activation of hydrogen is done by metal that can form metallic or interstitial metal hydride, preferably in the form of nanoparticles, inside the reaction container.

In another embodiment the activation of hydrogen is done by a transition metal or transition metal oxide preferably comprising nickel, nickel oxide, iron, iron oxide or a platinum group metal such as platinum and palladium, preferably in the form of nanoparticles, inside the reaction container.

The equilibrium of the reaction equation MHₓ <-> M + ^{x}/₂H₂ depends on the surrounding temperature and pressure. At low pressure more hydrogen gas H₂ is released from the metal hydride MHₓ. At high pressure more hydrogen is bound to the metal forming more metal hydride MHₓ. At high temperature more hydrogen gas H₂ is released from the metal hydride MHₓ. At low temperature more hydrogen is bound to the metal forming more metal hydride MHₓ.

In an embodiment of the present invention a small amount of paracrystalline material doped with an element capable of forming Rydberg matter is added to the mixture of a dielectric material possessing electrical polarizability and an element capable of forming metallic metal hydride to promote nuclear fusion in solid state matter and on surface of solid state matter.

In an embodiment of the present invention paracrystalline material utilized as a template for forming and storing Rydberg atom clusters and inverted Rydberg atom clusters in lattice defects of the said paracrystalline material comprises a metal oxide mixture made from the first metal oxide and the second metal oxide, wherein the metal of the first metal oxide is capable of changing its oxidation state in reducing atmosphere and the metal of the second metal oxide is stable and does not change its oxidation state in reducing atmosphere, the second metal oxide being a structural promoter that maximizes and stabilizes the number of lattice defects in the paracrystalline material.

In an embodiment of the present invention paracrystalline material utilized as a template for forming and storing Rydberg atom clusters and inverted Rydberg atom clusters in lattice defects of the said paracrystalline material comprise nickel mixed with alumina and/or chromia, nickel oxide mixed with alumina and/or chromia, iron mixed with alumina and/or chromia, iron oxide mixed with alumina and/or chromia and copper-zinc alloy mixed with alumina and/or chromia.

In an embodiment of the present invention paracrystalline material utilized for forming and storing Rydberg atom clusters and inverted Rydberg atom clusters is doped with an element that possesses Rydberg states due to the excitation of an electron of the element and is capable of becoming a Rydberg atom, the element comprising Li, Na, K, Rb, Cs, N, Ni, Ag, Cu, Pd, Ti and Y.

The electron of a hydrogen atom is excited from the ground energy level by the collision of accelerated electrons and protons to a higher energy level that is a Rydberg state. The energy that the colliding electron or proton must donate to the ground state electron of a hydrogen atom is only about 10.2 - 13.6 eV. In an embodiment electrons or protons are at least part of the operating time of the thermal-energy producing system accelerated to about 10 - 20 eV kinetic energy, preferably to a kinetic energy below the amount of energy required for ionizing hydrogen atom to a separate proton and a separate electron with small or moderate electric fields in small gaps between the powder particles to create hydrogen Rydberg atoms on a surface.

In an embodiment electrons or protons are at least part of the operating time of the thermal-energy producing system accelerated to about 10 - 100 eV kinetic energy to destabilize Rydberg matter and inverted Rydberg matter by ionization of the said matter with accelerated electrons or protons to induce Coulomb explosion in the said matter.

In an embodiment electrons of hydrogen atoms on a surface with structural defects are excited to Rydberg states with deep UV light (UVC light).

In an embodiment of the present invention styrene catalyst is utilized for enhancing nuclear fusion in a solid state system. The precursor for the styrene catalyst, hematite Fe₂O₃, having corundum crystal structure is reduced with hydrogen gas into magnetite Fe₃O₄. The precursor (iron oxide) is doped with alkali metal hydroxide comprising lithium hydroxide LiOH, sodium hydroxide NaOH, potassium hydroxide KOH, rubidium hydroxide RbOH and/or cesium hydroxide CsOH or with alkali metal oxide comprising lithium oxide Li₂O, sodium oxide Na₂O, potassium oxide K₂O, rubidium oxide Rb₂O and/or cesium oxide Cs₂O. The alkali metal hydroxide is preferably KOH and the alkali metal oxide is preferably K₂O. Textural promoters comprising alumina Al₂O₃ and/or chromia Cr₂O₃ are added to the iron oxide. The said textural promoters are stable in process conditions in hot, highly reducing environment and they prevent the loss of lattice defects that are necessary for storing Rydberg matter and inverted Rydberg matter.

In an embodiment the typical precursor composition of the styrene catalyst applicable for the present invention comprises about 80 - 95 wt% Fe₂O₃, preferably 88 wt% Fe₂O₃, about 5 - 15 wt% K₂O, preferably 10 wt% K₂O, and about 1 - 4 wt% Al₂O₃ or Cr₂O₃, preferably 2 wt% Al₂O₃ or Cr₂O₃. This mixture is reduced with hydrogen gas into Fe₃O₄:K,Al₂O₃ and Fe₃O₄:K,Cr₂O₃, known as styrene catalyst materials in the chemical industry. The metal oxide, in this embodiment reduced iron oxide (Fe₃O₄), adopts a new crystal structure, in this embodiment inverse spinel. Structural promoters (e.g. Al₂O₃, Cr₂O₃) that cannot be reduced keep their original crystal structure (corundum) and induce strain and lattice defects to the inverse spinel iron oxide lattice. Styrene catalysts comprising Fe₃O₄:K,Al₂O₃ and Fe₃O₄:K,Cr₂O₃ are utilized in the present invention. In case of styrene catalysts it is assumed that a combination of lattice defects on catalyst particle surfaces and an element capable of forming Rydberg atoms, such as potassium, promotes the formation of condensed Rydberg matter, which enhanced solid state nuclear fusion in the present invention.

In an embodiment of the present invention ammonia synthesis catalyst is utilized for enhancing nuclear fusion in a solid state system. The precursor for the ammonia synthesis catalyst, iron oxide, typically magnetite Fe₃O₄, has inverse spinel crystal structure that changes into body-centered or face-centered cubic crystal structure when Fe₃O₄ is reduced with hydrogen gas into elemental iron Fe. The precursor (iron oxide) is doped with alkali metal hydroxide comprising lithium hydroxide LiOH, sodium hydroxide NaOH, potassium hydroxide KOH, rubidium hydroxide RbOH and/or cesium hydroxide CsOH or with alkali metal oxide comprising lithium oxide Li₂O, sodium oxide Na₂O, potassium oxide K₂O, rubidium oxide Rb₂O and/or cesium oxide Cs₂O. The alkali metal hydroxide is preferably KOH and the alkali metal oxide is preferably K₂O. Textural promoters comprising alumina Al₂O₃ and calcium oxide CaO are added to the iron oxide. The said textural promoters are stable in process conditions in hot, highly reducing environment and they prevent the sintering of elemental iron.

In an embodiment typical composition of the ammonia synthesis catalyst suitable for the present invention comprise, before reducing the iron oxide, about 90 - 95 wt% Fe₃O₄, preferably 93 wt% Fe₃O₄, about 0,1 - 2 wt% K₂O, preferably 1 wt% K₂O, about 2 - 4 wt% Al₂O₃, preferably 3 wt% Al₂O₃, and about 2 - 4 wt% CaO, preferably 3 wt% CaO. After reducing Fe₃O₄ into elemental iron, this type of ammonia synthesis catalyst Fe:K₂O,Al₂O₃,CaO, preferably crushed into about 10 - 100 nm powder, has a lot of lattice defects and it is suggested herein that the said catalyst promotes efficiently the formation of potassium and hydrogen Rydberg atoms and, further, the formation of condensed Rydberg matter leading to enhanced rate of nuclear fusion in the reaction container of the present invention.

In an embodiment of the present invention high temperature water gas shift catalysts comprising potassium doped iron oxide FeₓO_{y}:K and potassium doped lanthanum niobate LaNiO₃:K are utilized as Rydberg matter hatchery (formation and storage of Rydberg atoms) for enhancing nuclear fusion in a solid state system.

In an embodiment of the present invention Fischer-Tropsch catalysts comprising metals and metal oxides of cobalt (Co, Co₁₋ₓO), iron (Fe, Fe₁₋ₓO), ruthenium (Ru, RuO₂, RuO₂₋ₓ and nickel (Ni, Ni₁₋ₓO) doped with copper or group 1 alkali metals (Li, Na, K, Rb, Cs) are utilized as Rydberg matter hatchery for enhancing nuclear fusion in a solid state system within the reaction container.

In an embodiment of the present invention hydrogenation catalysts comprising platinum, palladium, rhodium, ruthenium, alloys of Pt, Pd, Rh and Ru, Raney nickel, Urushibara nickel and alkali metal doped nickel oxide, preferably Ni₂O₃ and non-stoichiometric Ni₁₋ₓO doped with alkali metal, preferably potassium, wherein x is a non-integer in a range of about 0.005 - 0.1, preferably about 0.02, are utilized as Rydberg matter hatchery for enhancing nuclear fusion in a solid state system within the reaction container.

Industrial catalysts have been optimized for specific chemical processes. For example, formation of coke (solid carbonaceous material) on the catalyst surface is avoided if the process temperature is kept in a specified temperature range. The present invention does not utilize compounds that form coke and temperatures above the normal temperature range for catalytic processes can be used in the present thermal-energy producing reactor.

The probability for obtaining nuclear fusion near a single structural defect of a material is very small. Arranging a very large number of particles with surface and lattice defects to the reaction container increases the probability for nuclear fusion events per time unit within the reaction container to a noticeable and useful level. For example, if a 50 g piece of nickel is converted into 5 nm Ni nanoparticles with about 6000 atoms, about 8.55*10¹⁹ Ni nanoparticles is obtained. Each Ni nanoparticle may be in contact with a catalyst nanoparticle that promotes the formation of Rydberg atoms and clusters. Even a very small probability for obtaining nuclear fusion near a single Ni nanoparticle becomes considerable and useful when all the 8.55*10¹⁹ probabilities are added together.

In an embodiment of the present invention the reaction material used for the solid state nuclear fusion reactions is made by mixing dielectric material possessing electrical polarizability (the first process material) with material capable of forming interstitial metal hydrides and/or electrically conductive metal hydrides (the second process material) and with material capable of forming and storing Rydberg matter and inverted Rydberg matter (the third process material). The mixing ratio of the first, the second and the third process material may be varied in a wide range selected from 0 - 100 wt%.

In an embodiment the reaction material used for the solid state nuclear fusion reactions may contain about 5 - 80 wt% of the first process material, about 15 - 90 wt% of the second process material and about 1 - 10 wt% of the third process material.

The present invention includes the surprising finding that increasing the pressure of the reaction container with hydrogen gas increases the heat production rate to such a high value that chemical reactions (for example burning hydrogen gas with oxygen into water) are not capable of producing as much thermal energy. Increasing the pressure increases the rate of hydrogen molecule collisions with the surfaces. Nanoparticles have very high surface area and the number of hydrogen molecule collisions with the surface is very high.

The amount of thermal energy released from the reaction container is so far above the amount of energy released by any known chemical reaction that non-binding afterwards interpretation of the possible reactions in the reaction container and suggestions for a theory explain the possible reactions in the reaction container are presented herein, not to be negatively affecting to the novelty of the present invention and not to make the present invention obvious.

Without restricting to a specific theory to explain the production of thermal energy, it is herein suggested that the benefit of increasing the pressure is somehow related to the formation of high electric field strength. For example, hydrogen ions form plasma and plasma formed at high pressure possesses smaller Debye length than plasma formed at low pressure. Localized space charge regions may build up large potential drops (electric double layers) over distances of about ten Debye lengths. It is also herein suggested that the presence of very high dielectric constant material possessing electric polarizability makes it possible to decrease the Debye length down to the nanometer range in the system of the present invention. Very large potential drop over a very short distance (in other words very steep voltage gradient) leads to extremely high electric field strength that is capable of accelerating ions to high kinetic energies.

The present invention also includes the finding that increasing the temperature of the reaction container increases the fusion rate. Increasing the temperature increases the rate of hydrogen molecule collisions to the surfaces. Although the increasing temperature decreases the amount of metal hydride, higher temperature provides more high energy photons because of the strengthened thermal radiation within the pores of the porous material and between the particles in the powder. Without restricting to a specific theory to explain the production of thermal energy, it is herein suggested that photons interact with surface plasmons on the surface of the metallic nanopowder forming polaritons that proceed along the surface of the metallic nanopowder and further enhance the electric field strength especially near tips and sharp edges of the metallic nanopowder particles. Thus, increased pressure is utilized for keeping some of the hydrogen in the form of metal hydride and increased temperature is utilized for providing thermal activation energy for breaking molecular H₂ into atomic H and for forming enhanced thermal radiation for creating polaritons. As already disclosed hereinbefore, materials especially good for activating molecular hydrogen into atomic hydrogen on the surface of said materials comprise nickel, nickel oxide, and platinum group metals such as platinum and palladium.

Increasing the temperature of the reaction container shortens the wavelength of the heat radiation emitting from all hot surfaces. These photons are mostly in the infrared wavelength range when the temperature is below 500 °C, but more photons are emitted in the visible light wavelength range when the temperature goes above 500 °C. These photons can be utilized for exciting surface plasmons.

In an embodiment the reaction container with the reaction material operates under external control and the temperature of the reaction container with the reaction material is kept in a temperature range of about 100 - 1200 °C during the generation of heat energy, preferably at about 300 - 900 °C and more preferably at about 400 - 700 °C.

The thermal-energy generating system of the present invention is provided with novel safety features. In an embodiment means of heating the reaction container with external power is provided for bringing the reaction container (or reaction cartridge) to the operating temperature and for providing external control of the reaction container temperature based on the feedback from the temperature measurements of the reaction container. External power is used for heating, for example, a heater cartridge placed inside the reaction container or placed to the wall of the reaction container.

In another embodiment the dielectric material possessing electrical polarizability provides an intrinsic safety feature, meaning that when the temperature of the said dielectric material increases above the Curie temperature of the said dielectric material, the said dielectric material looses polarization and, as a consequence, hydrogen ion acceleration stops, fusion of hydrogen nucleus with other nuclei stops, the generation of thermal energy (or heat energy) stops and the temperature of the said dielectric material cannot any longer increase to a higher value.

In still another embodiment the sinterability of the nanoparticles provides an intrinsic safety feature, meaning that at temperatures above the normal operation temperature of the reaction container the nanoparticles of the active hydrogen material start to sinter together forming so few large particles that the probability of fusion reactions decreases to a negligible value and heat generation based on fusion reactions stops permanently.

In still another embodiment the melting point of the nanoparticles provides an intrinsic safety feature, meaning that above the normal operation temperature of the reaction container the nanoparticles of the active hydrogen material reach the melting point and the said nanoparticles form large droplets of material that cannot sustain fusion reactions. As a result, surface area collapses to a low value, enhancement of the local electric field is lost, the probability of the fusion of hydrogen nucleus with other nuclei drops to a negligible value and generation of thermal energy based on fusion reactions stops permanently.

The surroundings of the reaction container is shielded with a heavy metal mantel (e.g. lead) for converting gamma and X-ray radiation into heat and with an optional neutron grabber mantle for stopping free neutrons. Free protons, electrons and alpha particles have short absorption depth in normal construction materials, such as steel. Walls of the reaction container made of a durable material preferably comprising steel are utilized for stopping free protons, electrons and alpha particles.

In an embodiment thermal energy generators of the present invention are clustered to increase the amount of produced thermal energy. Clusters of thermal energy generators comprise thermal energy generator units that produce more than about 1 kW / unit or more than about 5 kW /unit or more than about 10 kW / unit or more than about 25 kW / unit or more than about 50 kW / unit to produce up to multi MW or more of thermal energy power in clusters.

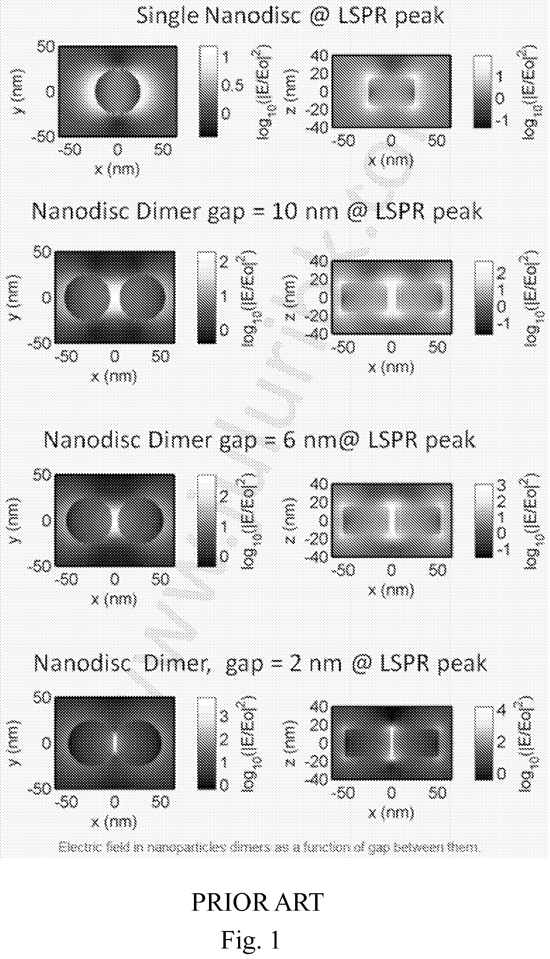

Referring now to the prior art published by Dr. B. K. Juluriat at the http://juluribk.com/2011/04/09/electric-field-in-metal-nanoparticle-dimers/ web site, in Fig. 1 there are shown simulated electric field strengths obtainable between very small pieces of material. The smaller the distance between said pieces of material is the stronger is the electric field. The bottom right-hand side drawing depicts a 2-nm gap between two rectangles. The electric field strength is enhanced by a factor of 10⁴ (i.e. 10000) in the said gap. Comparing the left-hand side drawings of spheres and right-hand side drawings of rectangles of **Fig**.**1** it can be seen that the geometry of the pieces of material affects the electric field strength. Pieces of material with sharp edges enhance the electric field strength more that pieces of material with round shape.

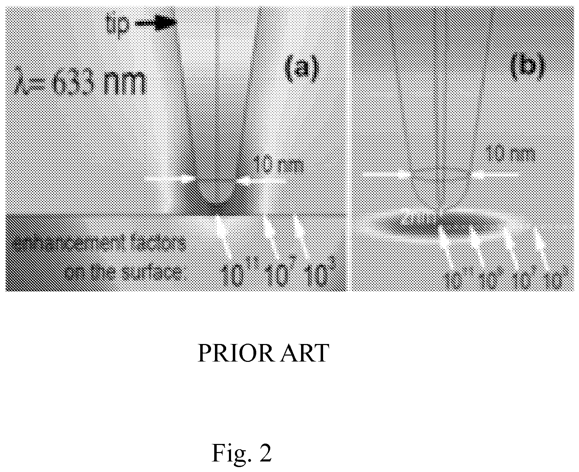

Referring now to the prior art in **Fig. 2****,** there is shown a metallic tip having an apex diameter of 10 nm and separated by a 2-nm gap from a surface. Surface plasmons coupled with the electromagnetic radiation (e.g. visible light or infrared light) enhance the electric field strength by up to a factor of 10¹¹ (i.e. 100000000000) in the gap.

To clarify the term "surface plasmon", according to Wikipedia from the web site http://en.wikipedia.org/wiki/Plasmon "Surface plasmons are those plasmons that are confined to surfaces and that interact strongly with light resulting in a polariton. They occur at the interface of a vacuum or material with a positive dielectric constant, and a negative dielectric constant (usually a metal or doped dielectric)."

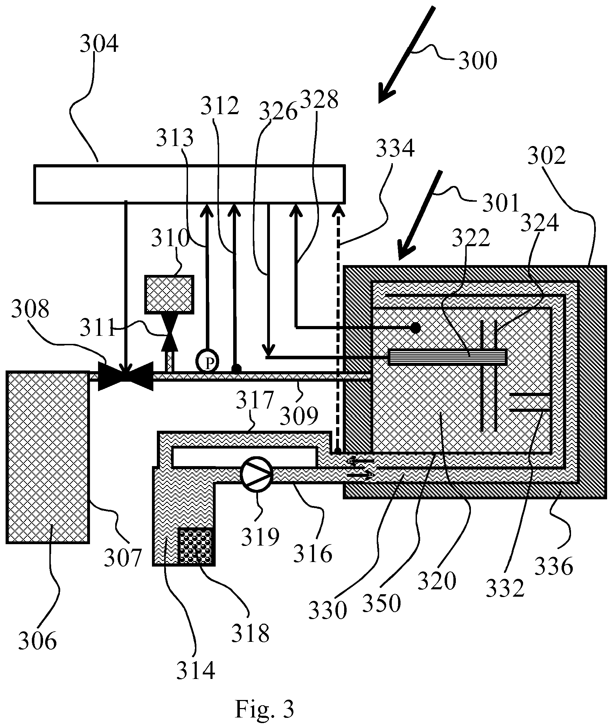

Referring now to the invention in more detail, in **Fig. 3** there is shown a system **300** for producing and utilizing thermal energy. The system **300** comprises a reaction container system **301,** a control system **304,** a hydrogen source **306** and a secondary heat exchange unit **314.**

In more detail, still referring to the embodiment of **Fig. 3****,** the reaction container system **301** comprises reaction material **320** in a specified form, such as powder material or porous material, a heater cartridge **322** with optional heat conducting extensions **324** for distributing heat from the heater cartridge **322** to the reaction material **320,** an external power line **326** connected to the heater cartridge **322,** a first temperature measurement system **328** for measuring the temperature of the solid reaction material **320,** a cooling fluid circulation in a mantle **330** with optional heat conducting extensions **332** for collecting and removing thermal energy from the reaction container system **301,** and a second temperature measurement system **334** for measuring the temperature of the cooling fluid. Optionally, a third temperature measurement system 312 is used for measuring the external temperature for verifying that the reaction container system 301 is operating normally and thermal energy does not excessively leak to the surroundings.

Still referring to the invention of **Fig. 3****,** the hydrogen gas source **306** comprises a housing **307** for storing and / or generating hydrogen gas, a gas control valve **308** in fluid communication with the hydrogen gas source **306** for dosing hydrogen gas from the hydrogen gas source **306** via a gas conduit **309** to the reaction container **350,** a pressure measurement system **313** for measuring the gas pressure of the gas conduit **309,** a surplus fluid reservoir **310** equipped with a flow control valve **311** for draining surplus hydrogen gas from the gas conduit **309** and the reaction container **350.** Still referring to the embodiment of **Fig. 3****,** the secondary heat exchange unit **314** comprises a cooling fluid circulation pump **319** in the cooling fluid conduit **316** in fluid communication with the secondary heat exchange unit **314** and the reaction container system **301.**

Still referring to the embodiment of **Fig. 3****,** the control system **304** receives input from the temperature measurement systems **328, 334** and the pressure measurement system **313** and produces control output to the valves **308, 311,** and to the cooling fluid circulation pump **319.**

In further detail, still referring to the embodiment of **Fig. 3****,** the reaction container **350** is filled with the reactive material **320.** The reaction container system **301** is attached to cooling fluid circulation that transfers cooling fluid between the cooling fluid mantle **330** and the secondary heat exchange unit **314** along at least two cooling fluid conduits. The inlet cooling fluid conduit **316** transports cooled cooling fluid from the secondary heat exchange unit **314** to the cooling fluid mantle **330,** and the outlet cooling fluid conduit **317** returns heated cooling fluid to the secondary heat exchange unit **314.** The amount of cooling fluid flowing in the cooling fluid circulation is affected by the cooling fluid circulation pump **319** and controlled by the control system **304.** The reaction container **350** is attached to the gas conduit **309** that is in controlled fluid communication with the hydrogen gas source **306.** The control of the hydrogen gas flow and pressurization of the reaction container (pressure vessel) **350** is performed with the gas control valve (hydrogen valve) **308** that is preferably a normally-closed valve that closes automatically in case of power failure. The hydrogen valve **308** is controlled with the control system **304.** When it is necessary to increase the pressure of the pressure vessel, the control system opens the hydrogen valve **308,** monitors the pressure of the gas conduit and closes the hydrogen valve **308** when the pressure reading obtained by the control system **304** from the pressure measurement system **313** shows that the target pressure range, e.g. 20 - 21 bar (gauge), has been reached.

The system is controlled by the heater cartridge **322** power, e.g. at maximum of 50 W, 100 W, 500 W or 1 kW heating power level, or with hydrogen gas pressure preferably above room pressure, more preferably 1 barg, 5 barg, 10 barg or 20 barg and / or by cooling fluid circulation with a flow rate of e.g. 1 liters per minute (lpm), 2 lpm, 5 lpm, 10 lpm or 50 lpm.

**In an embodiment heat energy transfer is implemented with a closed loop primary coolant system arranged to receive heat energy from the reaction container system (primary heat exchanger) and a secondary coolant system arranged to receive heat energy from the closed loop primary coolant system (secondary heat exchanger).** Fluid circulation in the primary heat exchange unit removes heat from the reaction container. Primary fluid is directed to the secondary heat exchange unit that has secondary fluid circulation. Heat energy transferred to the secondary fluid is utilized for heating or for generating electricity e.g. with a generator based on Rankine cycle. In an embodiment the secondary heat exchanger **314** has an electric generator **318** based on closed-loop Rankine cycle.

In an embodiment the primary fluid is directly utilized in the generator based on Rankine cycle. Rankine cycle is a hermetically sealed closed loop system meaning that the primary fluid never leaves the primary fluid circulation and can be safely used for generating electricity, which simplifies the construction of the electric generator. Hot liquid primary fluid vaporizes, the vapor powers a turbine, the turbine with a mechanical coupling with the electricity generator produces electricity, vapor is condensed to liquid after the turbine and pumped back to the primary heat exchanger inside the reaction container system.

Electricity is used for pre-heating the reaction container and controlling the system and thermal energy based on nuclear fusion is taken out of the reaction container, so that coefficient of performance COP is more than 1, preferably more than 5, still more preferably more than 10, most preferably more than 20. Part of the generated electricity is used for operating and controlling the heat generator.

Replacement reaction container system comprises valves, fittings, a heating cartridge and thermocouples. Depleted reaction container system is removed from the thermal energy generator and a new reaction container system is attached to the thermal energy generator in the field.

The construction details of the embodiment as shown in **Fig. 3** are that the pressure vessel **350** may be made of any sufficiently strong material such as metal, and the like. The radiation shield **302** may be made of any appropriate material **336** that stops specified radiation, such as lead in case gamma radiation must be stopped and high neutron absorption cross section material selected from Table 1 in case neutron radiation must be stopped.

Gamma and X-ray radiation is stopped and its energy is converted into thermal energy by a heavy metal shield (e.g. lead). Neutron radiation is absorbed and its released energy is converted into thermal energy by a material that has high neutron capture cross section e.g. elements or chemical compounds of lithium or boron. Kinetic energy of any released proton radiation is converted into thermal energy with the surrounding material. Kinetic energy of the alpha radiation (helium nuclei) is converted into thermal energy by collisions between alpha particles and the surrounding material. Kinetic energy of the beta radiation (high speed electrons) is converted into thermal energy by collisions between beta radiation and the surrounding material. Generated thermal energy is utilized for heating gases or liquids. Removal of heat from the structures near the cartridge is arranged for example by flowing gas or liquid. Electricity is generated from said heated gases or liquids.

**Table 1. Selected isotopes, isotope concentrations (%) and absorption cross sections for 2200 m/s neutrons (barn)**

| | | | | | | | | |
|---|---|---|---|---|---|---|---|---|
| ³He | 0.00014 | 5333 | **In** | 100 | 193.8 | ¹⁷⁴Yb | 31.8 | 69.4 |
| **Li** | 100 | 70.5 | ¹¹⁵In | 95.7 | 202 | **Lu** | 100 | 74 |
| ⁶Li | 7.5 | 940 | **Xe** | 100 | 23.9 | ¹⁷⁵Lu | 97.39 | 21 |
| ⁷Li | 92.5 | 0.0454 | ¹²⁹Xe | 26.4 | 21 | ¹⁷⁶Lu | 2.61 | 2065 |
| **B** | 100 | 767 | ¹³⁰Xe | 4.1 | 26 | **Hf** | 100 | 104.1 |
| ¹⁰B | 20 | 3835 | ¹³¹Xe | 21.2 | 85 | ¹⁷⁶Hf | 5.2 | 23.5 |
| ¹¹B | 80 | 0.0055 | **¹³³Cs** | 100 | 29.0 | ¹⁷⁷Hf | 18.6 | 373 |
| **Cl** | 100 | 33.5 | **¹⁴¹Pr** | 100 | 11.5 | ¹⁷⁸Hf | 27.1 | 84 |
| ³⁵Cl | 75.77 | 44.1 | **Nd** | 100 | 50.5 | ¹⁷⁹Hf | 13.7 | 41 |
| **⁴⁵Sc** | 100 | 27.5 | ¹⁴²Nd | 27.16 | 18.7 | ¹⁸⁰Hf | 35.2 | 13.04 |
| **Ti** | 100 | 6.09 | ¹⁴³Nd | 12.18 | 337 | **Ta** | 100 | 20.6 |
| ⁴⁸Ti | 73.8 | 7.84 | ¹⁴⁵Nd | 8.29 | 42 | ¹⁸¹Ta | 99.988 | 20.5 |
| **Cr** | 100 | 3.05 | **Sm** | 100 | 5922 | **W** | 100 | 18.3 |
| ⁵⁰Cr | 4.35 | 15.8 | ¹⁴⁷Sm | 15.1 | 57 | ¹⁸²W | 26.3 | 20.7 |
| ⁵³Cr | 9.5 | 18.1 | ¹⁴⁹Sm | 13.9 | 42080 | ¹⁸³W | 14.3 | 10.1 |
| **⁵⁵Mn** | 100 | 13.3 | ¹⁵⁰Sm | 7.4 | 104 | ¹⁸⁶W | 28.6 | 37.9 |
| **⁵⁹Co** | 100 | 37.18 | ¹⁵²Sm | 26.6 | 206 | **Re** | 100 | 89.7 |
| **Ni** | 100 | 4.49 | **Eu** | 100 | 4530 | ¹⁸⁵Re | 37.4 | 112 |
| ⁵⁸Ni | 68.27 | 4.6 | ¹⁵¹Eu | 47.8 | 9100 | ¹⁸⁷Re | 62.6 | 76.4 |
| ⁶⁰Ni | 26.1 | 2.9 | ¹⁵³Eu | 52.2 | 312 | **Os** | 100 | 16 |
| ⁶¹Ni | 1.13 | 2.5 | **Gd** | 100 | 49700 | ¹⁸⁶Os | 1.58 | 80 |
| ⁶²Ni | 3.59 | 14.5 | ¹⁵⁴Gd | 2.1 | 85 | ¹⁸⁷Os | 1.6 | 320 |
| ⁶⁴Ni | 0.91 | 1.52 | ¹⁵⁵Gd | 14.8 | 61100 | ¹⁸⁹Os | 16.1 | 25 |
| **Se** | 100 | 11.7 | ¹⁵⁷Gd | 15.7 | 259000 | ¹⁹⁰Os | 26.4 | 13.1 |
| ⁷⁴Se | 0.9 | 51.8 | **¹⁵⁹Tb** | 100 | 23.4 | **Ir** | 100 | 425 |
| ⁷⁶Se | 9 | 85 | **Dy** | 100 | 994 | ¹⁹¹Ir | 37.3 | 954 |
| ¹⁰³**Rh** | 100 | 144.8 | ¹⁶⁰Dy | 2.34 | 56 | ¹⁹³Ir | 62.7 | 111 |
| **Pd** | 100 | 6.9 | ¹⁶¹Dy | 19 | 600 | **Pt** | 100 | 10.3 |
| ¹⁰²Pd | 1.02 | 3.4 | ¹⁶²Dy | 25.5 | 194 | ¹⁹⁰Pt | 0.01 | 152 |
| ¹⁰⁴Pd | 11.14 | 0.6 | ¹⁶³Dy | 24.9 | 124 | ¹⁹²Pt | 0.79 | 10.0 |
| ¹⁰⁵Pd | 22.33 | 20 | ¹⁶⁴Dy | 28.1 | 2840 | ¹⁹⁴Pt | 32.9 | 1.44 |
| ¹⁰⁶Pd | 27.33 | 0.304 | **¹⁶⁵Ho** | 100 | 64.7 | ¹⁹⁵Pt | 33.8 | 27.5 |
| ¹⁰⁸Pd | 26.46 | 8.55 | **Er** | 100 | 159 | ¹⁹⁶Pt | 25.3 | 0.72 |
| ¹¹⁰Pd | 11.72 | 0.226 | ¹⁶⁴Er | 1.56 | 13 | ¹⁹⁸Pt | 7.2 | 3.66 |
| **Ag** | 100 | 63.3 | ¹⁶⁶Er | 33.4 | 19.6 | **¹⁹⁷Au** | 100 | 98.65 |
| ¹⁰⁷Ag | 51.83 | 37.6 | ¹⁶⁷Er | 22.9 | 659 | **Hg** | 100 | 372.3 |
| ¹⁰⁹Ag | 48.17 | 91.0 | **¹⁶⁹Tm** | 100 | 100 | ¹⁹⁹Hg | 17 | 2150 |
| **Cd** | 100 | 2520 | **Yb** | 100 | 34.8 | ²⁰⁰Hg | 23.1 | 60 |
| ¹¹⁰Cd | 12.51 | 11 | ¹⁷⁰Yb | 3.06 | 11.4 | **U** | 100 | 7.57 |
| ¹¹¹Cd | 12.81 | 24 | ¹⁷¹Yb | 14.3 | 48.6 | ²³⁵U | 0.72 | 680.9 |
| ¹¹³Cd | 12.22 | 20600 | ¹⁷³Yb | 16.1 | 17.1 | | | |

Best neutron absorption is obtained with extremely high absorption cross section (more than 5000 barns) element comprising gadolinium Gd, samarium Sm.

Very good neutron absorption is obtained with very high absorption cross section (500 - 5000 barns) element comprising boron B, cadmium Cd, europium Eu and dysprosium Dy. Boron compounds are cheap and they are often preferred as neutron absorbing materials.

Good neutron absorption is obtained with high absorption cross section (50 - 500 barns) element comprising lithium Li, rhodium Rh, silver Ag, indium In, neodymium Nd, erbium Er, thulium Tm, lutetium Lu, hafnium Hf, rhenium Re, iridium Ir, gold Au and mercury Hg.

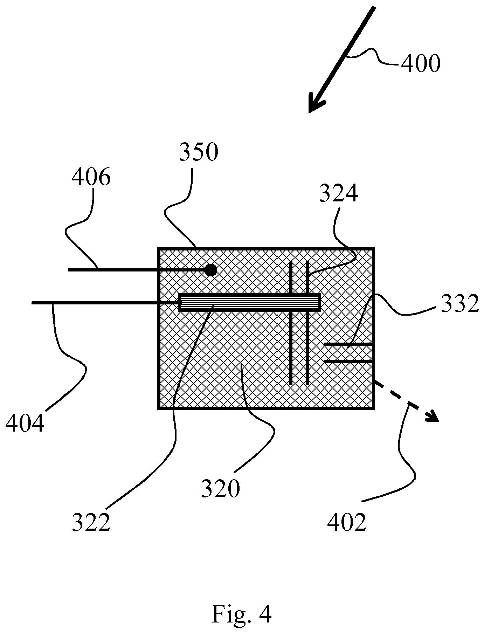

Referring now to the embodiment in **Fig. 4****,** there is shown a reaction space **400** for generating heat **402.** The reaction system **400** comprises a reaction container **350** with optional heat collecting protrusions or heat conducting extensions **332,** the said reaction container **350** being filled with reaction material **320** and pressurized with hydrogen gas, a heater cartridge **322** with optional heat distributing protrusions **324** and a power cable **404** and a thermocouple **406.** Regarding commercial products, the customer receives the replacement reaction container **350** prefilled with the required reaction material, and the pressurization of the replacement reaction container **350** with hydrogen-containing gas is preferably done after attaching the filled replacement reaction container **350** to the heat generating system.

In further detail, still referring to the embodiment of **Fig. 4****,** the heater cartridge **322** receives electrical power along the power cable **404** and converts the electrical power into thermal energy that heats the reaction material **320** to a temperature that promotes reactions within the reaction material **320.** The temperature of the reaction container **350** during the fusion reactions is more than about 0 °C, preferably more than 150 °C, more preferably more than 250 °C and most preferably about 350 - 600 °C. In an embodiment, the temperature of the reaction container is preferably below the Curie temperature of the pyroelectric, piezoelectric or multiferroic material, because above the Curie temperature the polarization of the material may be lost. Depending on the material the Curie temperature can be up to 1000 °C or even higher.

Heating the reaction container **350** of **Fig. 4** to high enough temperature produces certain beneficial effects. All matter emits electromagnetic radiation, the power of the radiation and the wavelength of the radiation at the maximum intensity depending on the temperature of the matter. The hotter the matter is, the higher the emitted power P is, as stated by the Stefan-Boltzmann law modified with the grey body emissivity P = ε*σ*A*T⁴, wherein ε is the emissivity factor of the emitting surface, σ is Stefan-Boltzmann constant 5.670 400×10⁻⁸ W·m⁻²·X, A is the surface area of the emitting surface and T is the temperature of the emitting surface in kelvins. Also, the hotter the matter is the shorter the wavelength of the maximum intensity λₘₐₓ is, as stated by the Wien's law λₘₐₓ = b/T, wherein b is Wien's displacement constant 2.897 7685×10⁻³ m·K and T is the temperature of the emitting surface in kelvins. The wavelength of the emission maximum is in the infrared region near room temperature and moves towards visible light when the temperature of the emitting surface increases.

Still referring to the embodiment of **Fig. 4****,** the reaction container **350** is pressurized with gas that comprises hydrogen gas and optional diluting gases such as nitrogen, helium, neon, argon, krypton or xenon or their mixtures, that decrease the concentration of hydrogen gas. Pure hydrogen gas is preferred for the pressurization. Hydrogen gas comprises at least one hydrogen isotope selected from protium H that has a proton, deuterium D that has a proton and a neutron, and tritium T that has a proton and two neutrons. After pressurization the pressure of the reaction container **350** is more than about 1 bar (gauge), preferably more than 5 bar (gauge), more preferably more than 10 bar (gauge) and most preferably about 15 - 30 bar (gauge), although even higher pressures are applicable. Dilution of hydrogen gas is beneficial in case the reactive materials selected for the fusion reactions tend to form an unstable heat generating system with pure hydrogen gas at high temperatures.

Various methods exist to arrange hydrogen gas to the thermal-energy producing system **300.** A non-exhaustive list of hydrogen gas sources comprise pressurized hydrogen gas bottle, metal hydrides heated to release hydrogen gas, chemical reactions releasing hydrogen gas, comprising chemical reactions between an acid and a metal (e.g. zinc, aluminum, magnesium or iron) forming a metal salt and hydrogen gas, comprising chemical reactions between a base and a metal (e.g. zinc or aluminum) forming a metal salt and releasing hydrogen gas and generating hydrogen from metal ammine salts.

**In an embodiment the a**cid comprises sulfuric acid H₂SO₄, hydrochloric acid HCl, acetic acid CH₃COOH or formic acid HCOOH, and the base comprises sodium hydroxide NaOH or potassium hydroxide KOH.

**In an embodiment a**luminum metal activated with mercury or gallium reacts with water and releases hydrogen gas.

Still referring to the embodiment of **Fig. 4****,** the reaction material **320** comprises preferably coated porous material and / or powder material. The coated porous material comprises preferably porous crystalline material and metallic nanoparticles grown on the pore surfaces of the porous crystalline material. The porous crystalline material preferably comprises a compound or a mixture of compounds that possess electrical polarizability, i.e. are capable of having areas with a positive electrical charge (+) and areas with a negative electrical charge (-). Metallic nanoparticles comprise preferably metallic matter that is capable of forming electrically conductive metal hydrides, more preferably electrically conductive transition metal hydrides. In an embodiment metal nanoparticles are grown to the inner surfaces of pores of the porous dielectric material by thin film deposition methods comprising physical vapor deposition PVD, chemical vapor deposition CVD, atomic layer chemical vapor deposition ALCVD, atomic layer deposition ALD or molecular layer deposition MLD, preferably by the ALCVD, ALD or MLD method that are based on sequential self-saturating surface reactions capable of coating inner surfaces of pores of porous materials with uniform layer of nanoparticles, such as nickel nanoparticles. Catalytic material promoting the formation and storage of Rydberg matter and inverted Rydberg matter is added to the pore surfaces of the porous material by the said thin film deposition methods or by electrochemical methods.

The powder material in the reaction material **320** preferably comprises a mixture of a first reaction material being a compound or a mixture of compounds that possess electrical polarizability, i.e. are capable of having areas with a positive electrical charge (+) and areas with a negative electrical charge (-), a second reaction material that is metallic nanoparticles comprising preferably metallic matter that is capable of forming electrically conductive metal hydrides, more preferably electrically conductive transition metal hydrides, and a third material that is nanoparticles capable of promoting the formation and storage of Rydberg matter and inverted Rydberg matter. Method for inducing electric polarization comprise applying an electric field to multiferroic materials, applying mechanical stress or mechanical vibration to piezoelectric materials and applying temperature changes to pyroelectric materials.

Multiferroic materials preferred for the said porous crystalline material in the reaction material **320** and for the said first reaction material in the reaction material **320** utilized in the present embodiment comprise perovskite transition metal oxides, such as rare earth manganites YMnO₃, HoMnO₃, TbMnO₃, HoMn₂O₅, rare earth ferrites such as LuFe₂O₄, bismuth ferrite BiFeO₃, bismuth manganite BiMnO₃, geometric ferroelectrics, such as BaNiF₄, BaCoF₄, BaFeF₄, BaMnF₄, spinel chalcogenides, such as ZnCr₂Se₄, boracites, such as Ni₃B₇O₁₃I, Ni₃B₇O₁₃Cl, Co₃B₇O₁₃I, doped multiferroics, e.g. Pb(Fe_{2/3}W_{1/3})O₃, Pb(Fe_{0.5}Nb_{0.5})O₃, terbium manganites TbMnO0₃, TbMn₂O₅, nickel vanadite Ni₃V₂O₈, copper ferrite CuFeO₂, cobalt chromite CoCr₂O₄ and lutetium ferrite LuFe₂O₄.

Piezoelectric materials suitable for the said porous crystalline material in the reaction material **320** and for the said first reaction material in the reaction material **320** utilized in the present embodiment comprise materials selected from piezoelectric crystal classes 1, 2, m, 222, mm2, 4, -4, 422, 4mm, -42m, 3, 32, 3m, 6, -6, 622, 6mm, -62m, 23 and -43m. Examples of materials belonging to said piezoelectric crystal classes and suitable for the utilization in the present embodiment comprise quartz SiO₂,

Pyroelectric materials suitable for the said porous crystalline material in the reaction material **320** and for the said first reaction material in the reaction material **320** utilized in the present embodiment comprise materials selected from pyroelectric crystal classes 1, 2, m, mm2, 3, 3m, 4, 4mm, 6 and 6mm. Examples of materials belonging to said pyroelectric crystal classes and suitable for the utilization in the present embodiment comprise quartz SiO₂,

Piezoelectric and / or pyroelectric minerals suitable for the said porous crystalline material in the reaction material **320** and for the said first reaction material in the reaction material **320** utilized in the present embodiment comprise afwillite, alunite, aminoffite, analcime, bastnasite-(Ce), batisite, bavenite, bertrandite, boracites, bromellite, brucite, brushite, buergerite, burbankite, caledonite, clinohedrite, colemanite, dioptase, dravite, edingtonite, elbaite, epistilbite, flagstaffite, gismondine, gmelinite-(Na), gugiaite, helvine, hemimorphite, hilgardite, hydrocalumite, innelite, jarosite, jeremejevite, junitoite, langbeinite, larsenite, leucophanite, londonite, meliphanite, mesolite, mimetite, natrolite, neptunite, nitrobarite, olsacherite, pharmacosiderite, pirssonite, pyromorphite, quartz, rhodizite, schorl, scolecite, searlesite, shortite, spangolite, sphalerite, stibiocolumbite, stibiotantalite, struvite, suolunite, thomsonite, thornasite, tilasite, tugtupite, uvite, weloganite, whitlockite, wulfenite and yugawaralite.

Still referring to the embodiment of **Fig. 4****,** metallic nanoparticles in the reaction material **320** comprise elements that are capable of forming electrically conductive and/or interstitial metal hydrides comprising transition metals that have at least one stable isotope comprising group 3B elements scandium Sc, yttrium Y, lanthanum La, lanthanides (cerium Ce, praseodymium Pr, neodymium Nd, samarium Sm, europium Eu, gadolinium Gd, terbium Tb, dysprosium Dy, holmium Ho, erbium Er, thulium Tm, ytterbium Yb and lutetium Lu), actinides (thorium Th and uranium U), group 4B elements titanium Ti, zirconium Zr, hafnium, group 5B elements vanadium V, niobium Nb, tantalum Ta, group 6B elements chromium Cr, molybdenum Mo, tungsten W, group 7B elements manganese Mn, rhenium Re, group 8B metals iron Fe, ruthenium Ru, osmium Os, cobalt Co, rhodium Rh, iridium Ir, nickel Ni, palladium Pd, platinum Pt, group 1B elements copper Cu, silver Ag, gold Au and group 2B elements zinc Zn, cadmium Cd and mercury Hg. In periodic table of elements where groups of elements are marked with numbers 1 - 18, transition metals are in groups 3 - 12.

Particle size of the metallic nanoparticles in the reaction material **320** is preferably smaller that about 1 µm, more preferably smaller than about 100 nm, even more preferably smaller than about 30 nm, most preferably smaller than about 10 nm. The smaller the metallic nanoparticles are the larger is the active surface area of the said metallic nanoparticles. Metallic nanoparticles have preferably sharp edges and/or tips to enhance the local electric field strength.

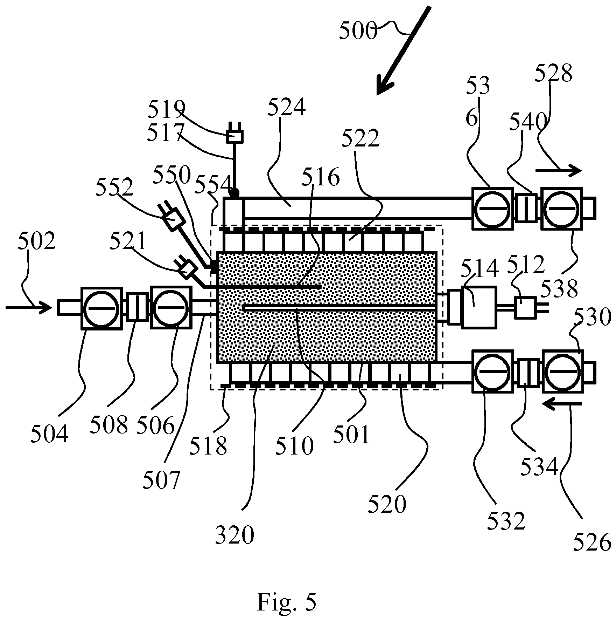

Referring now to the invention in more detail, in **Fig. 5** there is shown a reaction container system **500** for generating thermal energy. The reaction container system **500** comprises active powder material **320** in a reaction container **501.**

In more detail, still referring to the embodiment of **Fig. 5****,** the reaction container **501** is pressurized with hydrogen gas from the direction indicated with an arrow **502** through gas line manual isolation valves **504** and **506** along the hydrogen gas line **507** to the reaction container **501.**

There is a gas line fitting **508** between the gas line manual isolation valves **504, 506.**

In certain example embodiment of the present invention the cooling fluid circulation is arranged with a cooling fluid tube coil **522** (also referred to as cooling fluid circulation 520) placed around the reaction container **501.**

In certain example embodiment of the present invention the cooling fluid circulation is arranged with a cooling fluid mantle essentially surrounding the reaction container **501.**

Cooled cooling fluid enters the cooling fluid tube coil through inlet manual isolation valves **530** and **532** as indicated with the inlet flow direction arrow **526.**

There is a cooling fluid inlet fitting **534** between the inlet manual isolation valves **530, 532.** Cooling fluid collects thermal energy from the reaction container **501** and becomes hot while flowing through the cooling fluid tube coil **522.** Heated cooling fluid leaves the cooling fluid tube coil **522** through outlet manual isolation valves **536** and **538** as indicated with the outlet flow direction arrow **528.**

There is a cooling fluid outlet fitting **540** between the outlet manual isolation valves **536, 538.** The temperature of the powder material is measured with the thermocouple **516** that has a thermocouple connector **521.** The temperature of the heated cooling fluid arriving from the cooling fluid tube coil **522** is measured with the thermocouple **517** having a thermocouple connector **519** and attached to the outlet conduit **524.**

The heater cartridge **510** is placed into the powder material **320** through the refilling port fitting **514.** Electric power plug **512** attached to the heater cartridge **510** is used for connecting an external electric power cable to the heater cartridge **510.**

In another embodiment the reaction container system **500** is equipped with a piezoelectric transducer **550** attached to the reaction container **501.** The piezoelectric transducer **550** with the power plug **552** converts electrical pulses to mechanical vibrations that make the reaction container **501** and the reaction material **320** vibrate. Electric power plug **552** attached to the piezoelectric transducer **550** is used for connecting an external electric power cable to the piezoelectric transducer **550.**

In yet another example embodiment at least one piezoelectric transducer is placed in direct contact with the powder material **320** inside the reaction container **501.**

In certain example embodiments the cartridge system **500** is equipped with an electrical coil **518** placed around the reaction container **501.** Electric current in the electrical coil **518** induce a magnetic field inside the said electrical coil.

The reaction container **501** is surrounded by a radiation shield mantle **554** that stops any residual radioactive radiation arriving from the powder material **320.** The radiation shield mantle converts radioactive radiation into thermal energy and donates the said thermal energy to the cooling fluid tube coil **522.**

To avoid thermal energy losses the reaction container system **500** is thermally insulated by a thermal insulation mantle (not shown in **Fig. 5**) that surrounds the reaction container system **500.**

The reaction container system **500** is replaced by closing the gas line manual isolation valves **504, 506** and closing the inlet manual isolation valves **530, 532** and closing the outlet manual isolation valves **536, 538,** disconnecting power cables from the electric power plugs **512, 552,** disconnecting thermocouple connectors **519, 521,** opening the gas line fitting **508** and opening the cooling fluid inlet fitting **534** and cooling fluid outlet fitting **540.** The used reaction container system **500** now isolated from the surroundings is removed from the installation point and a new reaction container system with active reaction material is attached to the gas line and cooling line fittings and cable plugs and thermocouple connectors that were opened before removing the used reaction container system. The reaction container system **500** becomes in fluid communication with the hydrogen source and the cooling water circulation by opening the outlet manual isolation valves **536, 538,** opening the inlet manual isolation valves **530, 532** and opening the gas line manual isolation valves **504, 506.** The reaction container **501** is pressurized with hydrogen gas.

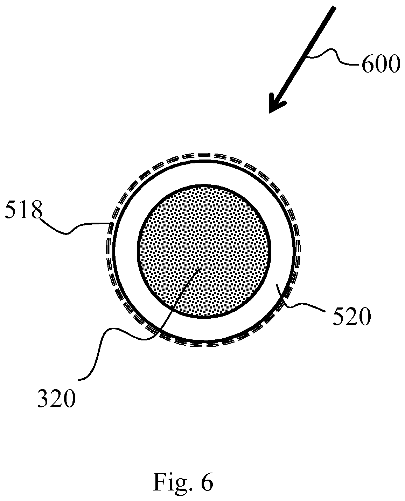

Referring now to the invention in more detail, in **Fig. 6** there is shown a cross section **600** of the parts inside the radiation shield mantle **(554** in **Fig. 5****)** used for generating thermal energy. In the cross section there are seen the reaction material **320,** the cooling fluid circulation **520** and the electrical coil **518** for inducing magnetic field inside the said coil.

In more detail, still referring to the embodiment of **Fig. 6****,** the reaction material **320** generates thermal energy by the fusion of hydrogen with nuclei. The fusion process is controlled by the magnetic field induced by the electrical coil **518.** Magnetic field inside the coil in the powder material polarizes the multiferroic phase of the powder material **320.** Heat energy is transported mostly by thermal conduction from the powder material **320** to the fluid in the cooling fluid circulation **520,** the said fluid preferably been high thermal capacity liquid (e.g. water or molten metal), solution or gas (helium).

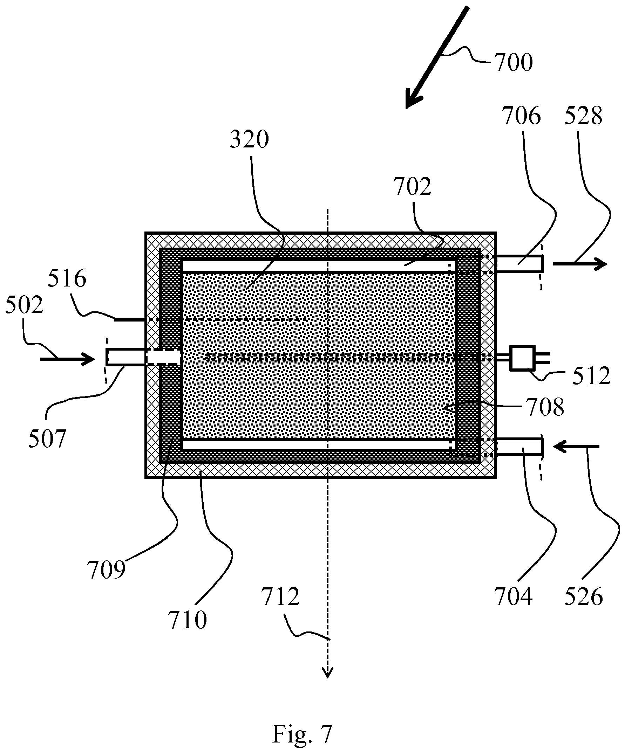

Referring now to the invention in more detail, in **Fig. 7** there is shown a reaction container system **700** according to an embodiment comprising reaction material **320,** hydrogen gas line **507** that is used for pressurizing the reaction container **708** with hydrogen gas, a heater cartridge with a power plug **512** for preheating the reaction material **320** to the optimum reaction temperature range, a thermocouple **516** for measuring the temperature of the reaction material **320,** an internal cooling mantle **702** with a cooling fluid inlet **704** and a cooling fluid outlet **706** for collecting heat from the reaction material **320,** a radiation shield mantle **709** surrounding the powder material and a thermal insulation mantle **710.** A cross section of the reaction container system **700** is indicated with the line **712.**

In more detail, still referring to the embodiment of **Fig. 7****,** the powder material **320** is pressurized with hydrogen gas flowing through the hydrogen gas line **507** along the direction indicated with an arrow **502.** The heater cartridge is heated with electricity and the generated heat energy preheats the reaction material **320** to a suitable reaction temperature range.

In further detail, still referring to the embodiment of **Fig. 7****,** the hydrogen gas in the reaction material **320** is in equilibrium with the metal hydrides forming a part of the reaction material **320,** meaning that increasing the hydrogen gas pressure increases the amount of metal hydrides in the reaction material **320** and decreasing the hydrogen gas pressure decreases the amount of metal hydrides in the reaction material **320.**

Still referring to the embodiment of **Fig. 7****,** hydrogen is activated into atomic hydrogen and ionized into hydrogen ions such as proton in the reaction material **320.** Hydrogen ions are accelerated in the high electric field strength areas in the reaction material **320** to high kinetic energy and fused by tunneling through the Coulomb barrier with the nuclei of the target isotopes in the reaction material **320** creating new isotopes from the target isotopes and releasing energy in the form of thermal energy and radioactive radiation, essentially gamma radiation or X-ray radiation, that is converted into thermal energy by radiation-absorbing materials.

Still referring to the embodiment of **Fig. 7****,** hydrogen ions and electrons are accelerated in low or medium electric field strength areas in the reaction material **320** to relatively low kinetic energy and contacted with powder surfaces having elements capable of forming Rydberg atoms. Rydberg atoms being electrical dipoles are attracted together to form condensed phase Rydberg matter that is stable until the excited electrons return to the ground level or the matter is at least partly ionized and Coulomb explosion tears the Rydberg atom cluster into separate ions that are accelerated away from the cluster because of the repulsive forces between ions. Accelerated ions, such as protons or deuterons, hit surrounding target atoms, such as nickel atoms, and some of the accelerated ions are capable of tunneling through the Coulomb barrier of target atoms fusing with the nuclei of the target atoms creating new isotopes from the target isotopes and releasing energy in the form of thermal energy and radioactive radiation, essentially gamma radiation or X-ray radiation, that is converted into thermal energy by radiation-absorbing materials.

The construction details of the embodiment as shown in **Fig. 7** are that the walls of the reaction container and the cooling fluid mantle are made of materials preferably comprising metals and metal alloys known to be suitable for nuclear reactor construction, such as fine-grained low alloy ferritic steel and pressure vessel steel, e.g. the 20MnMoNi55 alloy. The radiation shield mantle is made of materials that stop radioactive radiation, preferably comprising lead for stopping gamma radiation and materials with high nuclear cross section selected from Table 1, e.g. boron or gadolinium, for stopping neutron radiation. In an embodiment the cooling fluid contains fluid-soluble metal compounds that absorb radioactive radiation releasing thermal energy, e.g. boron compounds such as sodium borate for absorbing neutron radiation.

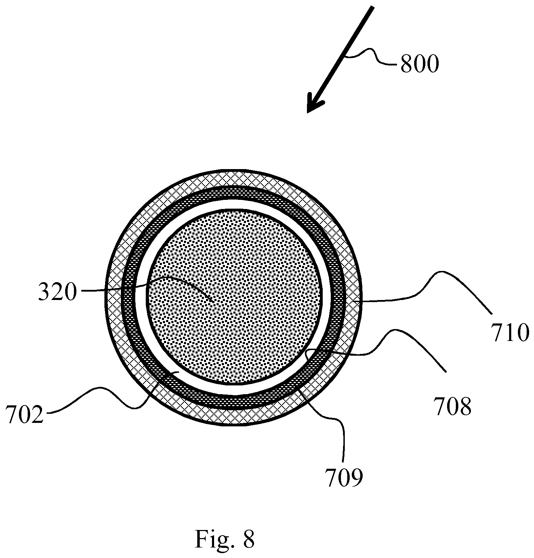

Referring now to the invention in more detail, in **Fig. 8** there is shown a cross section **800** of the reaction container system **700** presented in **Fig. 7** comprising reaction material **320** in a reaction container **708,** the cooling fluid mantle **702,** the radiation shield mantle **709** and the thermal insulation mantle **710.**

In more detail, still referring to the embodiment of **Fig. 8****,** thermal energy released from the reaction material **320** or generated within the radiation shield mantle **709** from the radioactive radiation heats the cooling fluid flowing in the cooling fluid mantle **702.** Radioactive radiation, mostly gamma and X-ray radiation, released from the reaction material **320,** is absorbed by the radiation shield mantle **709** and converted into thermal energy that heats the cooling fluid flowing in the cooling fluid mantle **702.** Thermal insulation mantle **710** limits heat losses from the fusion container to the surroundings.

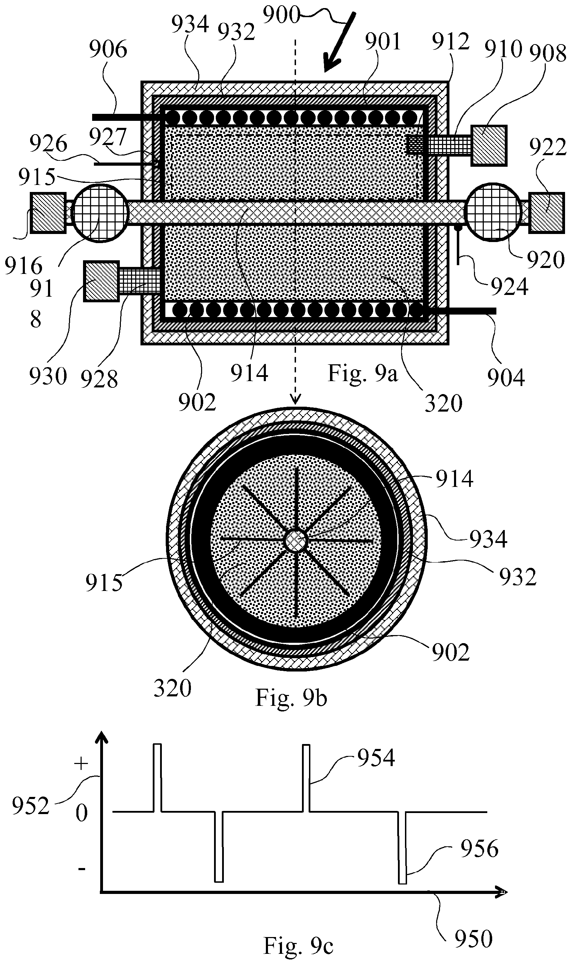

Referring now to the invention in more detail, in **Fig. 9a** there is shown a reaction container system **900** that initiates fusion processes by electromagnetic induction comprising a reaction container **901** (a rectangle with thick black line) that contains reaction material **320,** a cooling fluid tube **914,** a metal coil **902,** a radiation shield mantle **932,** a thermal insulation mantle **934,** a hydrogen gas port **910** and a refill port **928.**

In more detail, still referring to the embodiment of **Fig. 9a****,** the hydrogen gas port **910** has a fitting **908** for attaching the hydrogen gas port **910** to the external hydrogen gas source and a particle filter **912** for preventing the flow of reaction material **320** to the external hydrogen gas source. The cooling fluid tube **914** has manual valves **918, 920** for isolating the cooling fluid tube from external cooling fluid lines and fittings **916, 922** for disconnecting the cooling fluid tube **914** from the external cooling fluid lines. The cooling fluid tube has optional fins or protrusions **915** for enhancing the collection of thermal energy from the reaction material **320.** A thermocouple **924** is attached to the wall of the cooling fluid tube **914** for measuring the temperature of the cooling fluid in the cooling fluid tube **914.** A thermocouple **927** with a measurement cable **926** is attached to the wall of the reaction container **901** for measuring the temperature of the reaction container **901.** A filling port **928** with a blind plug **930** is attached to the reaction container **901** for removing depleted reaction material **320** from the reaction container **901** and filling the reaction container **901** with new reaction material **320.**

In further detail, still referring to the embodiment of **Fig. 9a****,** the metal coil **902** with power cables **904, 906** is used for inducing variable magnetic field inside the reaction container **901.** The variable magnetic field pre-heats the reaction material by electromagnetic induction to the temperature that is suitable for the fusion reactions. After the pre-heat time the metal coil **902** is used for inducing quickly variable magnetic field in the reaction material **320** for polarizing the dielectric material (multiferroic material) present in the reaction material **320** and/or inducing voltage to the metallic material (metallic nanoparticles) present in the reaction material. The frequency of the current going through the metal coil and inducing the magnetic field is preferably in the range of about 10 Hz - 100 MHz. The shape of the current pulses can be sine wave, square wave, step wave, sawtooth wave, triangular wave or an arbitrary waveform easily generated by a computer-controlled arbitrary waveform generator equipped with a power amplifier.

Still referring to the embodiment of **Fig. 9a****,** in an embodiment the dielectric material present in the reaction material **320** is an electric insulator material (polarizable or non-polarizable) and it is used for keeping metallic nanoparticles present in the reaction material **320** separated from each other so that there are a large number of very small gas gaps in the nm-range between metallic nanoparticles, and the metal coil **902** is used for creating a variable magnetic field that induces electric potential (voltage) to the metallic nanoparticles that focus the local electric field caused by the induced electric potential to very high electric field strength suitable for accelerating hydrogen ions (e.g. protons) and causing fusion reactions that release fusion energy.

Still referring to the embodiment of **Fig. 9a****,** the cooling fluid used in the cooling fluid tube **901** for transporting thermal energy comprises a material that is liquid or gas near room temperature, selected from liquids comprising water, solutions containing water, gallium metal alloys, such as galinstan (Ga-In-Sn alloys), and heat transfer oils, such as Shell heat transfer oil S2, and gases comprising helium.

Referring now to the invention in more detail, in **Fig. 9b** there is shown a cross section of the fusion container comprising the cooling fluid tube **914,** reaction material **320,** the metal coil **902,** the radiation shield mantle **932** and the thermal insulation mantle **934.**

In more detail, still referring to the embodiment of **Fig. 9b****,** the cooling fluid tube **914** has thermally-conductive fins or protrusions **915** that enhance the transfer of thermal energy from the reaction material **320** to the cooling fluid flowing in the cooling fluid tube **914.** The material, size and shape of the fins or protrusions **915** and the cooling fluid tube **914** is optimized in such a way that electromagnetic induction from the metal coil is still capable of inducing voltage to the electrically-conducting phases of the reaction material **320.** The thermal insulation mantle **934** prevents thermal losses (thermal conduction, convection, heat radiation) from the fusion container to the surroundings, so that the thermal energy can efficiently be collected by the cooling fluid in the cooling fluid tube **914.**

The construction details of the embodiment of the present invention as shown in **Fig. 9b** are that the thermally-conductive fins or protrusions **915** are made of materials that have good thermal conductivity such as aluminum, copper or silicon carbide. The cooling fluid tube **914** and the reaction container **901** are preferably made of materials suitable for constructions used in environment that have radioactive radiation, such as fine-grained low alloy ferritic steel and pressure vessel steel, e.g. the 20MnMoNi55 alloy. In an embodiment the corrosion resistance of the cooling fluid tube is enhanced with an internal and/or external cladding of a corrosion-resistant material such as zirconium, e.g. Zircaloy. In an embodiment the diffusion of hydrogen gas from the reaction material volume to the cooling fluid tube **914** is prevented by a coating that comprises preferably dense metal compounds such as amorphous tantalum pentoxide, titanium dioxide, aluminum oxide or silicon dioxide made by known coating methods.

Referring now to the invention in more detail, in **Fig. 9c** there is shown a curve of variable voltage that has positive voltage peaks **954** and negative voltage peaks **956.** The magnitude of the voltage is presented in the y-axis **952** and the time scale is presented in the x-axis **950.**

In more detail, still referring to the embodiment of **Fig. 9c****,** according to the method of preheating the reaction container by electromagnetic induction and inducing a voltage to the electrical conductors inside the cartridge, the voltage applied to the induction coil **902** is preferably alternating voltage that has a frequency and intensity depending on the heating or induction power that is needed. The said frequency can be up to the radio frequency range (RF-range, MHz range) or even higher.

In further detail, still referring to the embodiment of **Fig. 9c****,** the driving voltage may comprise positive and/or negative pulses that have certain duration based on pulse-width modulation.

Still referring to the embodiment of **Fig. 9c****,** short and strong voltage pulses create strong variable magnetic field in the reaction material **320** that induces variable voltage to electrically conductive particles in the reaction material **320.** The said variable voltage creates an electric field around the electrically conductive particles (such as titanium, zirconium, hafnium and/or nickel nanoparticles). The electric field is focused with the geometry and dimensions of the electrically conductive particles to very high electric field strength. Ions such as protons are accelerated by the electric field to high kinetic energy. Some of those ions collide with target isotopes, tunnel through the Coulomb barrier shielding nuclei of the target isotopes and fuse with the nuclei forming new isotopes heavier than the original collision target isotopes were before the fusion process and at the same time release energy in the fusion process. Although the probability for the fusion between a single selected target isotope nucleus and a single proton is extremely small, the number of target isotope nuclei and protons in the reaction cartridge (fusion cartridge) is so large and so many collisions between target isotope nuclei and protons occur per time unit that the total sum of probabilities for fusion reactions becomes favorable for the thermal energy production with the coefficient of performance COP clearly above 1.

For example, when 100 g of natural nickel consisting of stable nickel isotopes, that has a density of 8.9 g/cm³, is divided into 5-nm particles (in this example spheres to simplify the calculations, although more useful geometries with sharp tips and edges can also be applied in the invention), the number of Ni nanoparticles is 100 g / 8.9 g/cm³ * (10⁷ nm)³ / cm³ / (4/3 *3.14159 * (2.5 nm)³) = 11.236*10²¹/65.45 pieces = about 1.717*10²⁰ pieces. Because the atomic weight of nickel is 58.69 g/mol and 100 g of nickel contains 100 / 58.69 mol = 1.704 mol of nickel and 1 mol contains about 6.022*10²³ nickel atoms, each 5-nm nickel nanoparticle contains about 1.704 * 6.022*10²³ / 1.717*10²⁰ = about 6000 nickel atoms of various nickel isotopes.

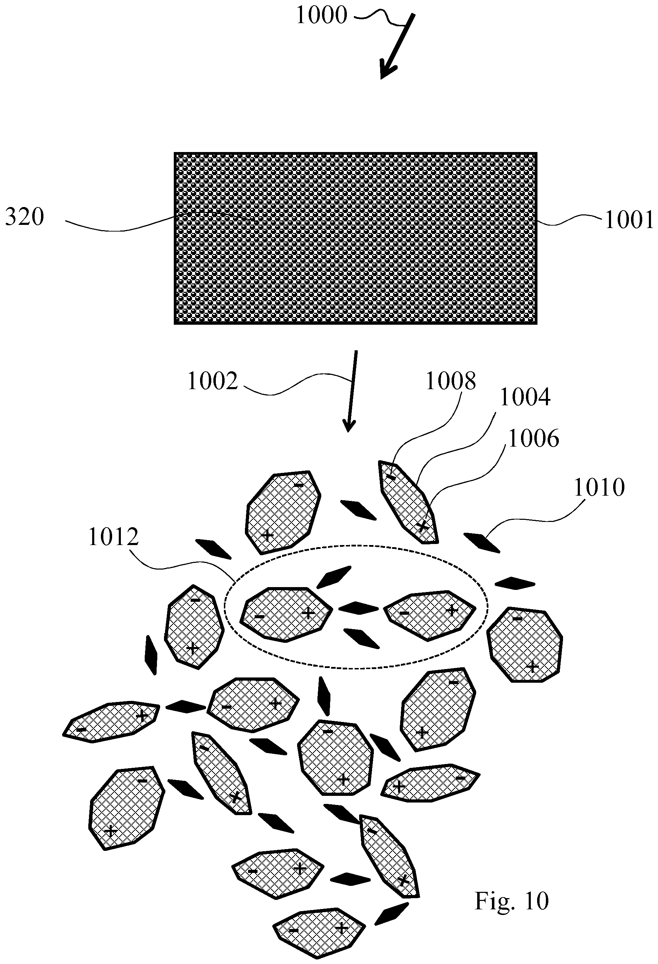

Referring now to the invention in more detail, in **Fig. 10** there is shown the reaction container core **1000** comprising a container or pressure vessel **1001** holding reaction material **320** that in more detail, as indicated with an arrow **1002,** comprises dielectric material **1004** that possesses electric polarizability having positive **1006** and negative **1008** electric poles due to the polarization, metallic material **1010** capable of forming interstitial and/or electrically conductive metal hydrides, and optionally catalytic material capable of forming and storing Rydberg matter and inverted Rydberg matter (not shown in **Fig. 10**).

In more detail, still referring to the embodiment of **Fig. 10****,** the reaction container core **1000** has walls in the pressure vessel **1001** that keep the reaction material **320** inside the reaction container core **1000.**

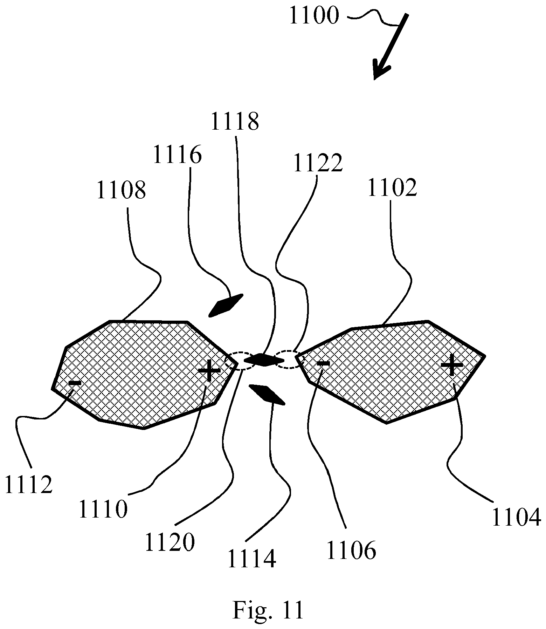

In further detail, still referring to the embodiment of **Fig. 10****,** an area **1012** is selected for detailed description illustrated in **Fig. 11****.**

The construction details of the embodiment of the invention as shown in **Fig. 10** are that the walls in the pressure vessel **1001** are made of a material strong and leak-tight enough to hold high pressure (e.g. over 10 bar gauge) inside the reaction container even after bombardment with radioactive radiation without any considerable leak of gases from the reaction container **1000** to the surroundings of the said reaction container. The material of the walls in the pressure vessel **1001** comprises preferably metals and metal alloys known to be suitable for nuclear reactor construction, such as fine-grained low alloy ferritic steel and pressure vessel steel, e.g. the 20MnMoNi55 alloy. The dielectric material **1004** comprises material that can be electrically polarized with magnetic field, such as multiferroic materials, or that can be electrically polarized with mechanical stress or vibrations, such as piezoelectric materials or that can be electrically polarized with variable temperature, such as pyroelectric materials.

Still referring to **Fig. 10** the construction details of the embodiment of the invention are that the metallic material **1010** comprises material that is capable of forming interstitial metal hydrides and/or electrically conductive metal hydrides, such as transition metal hydrides, e.g. nickel hydrides or titanium hydrides. The dielectric material **1004** comprises porous material that provides large internal surface area in the pores and/or powder that provides large outer surface area on the surface of particles. The metallic material comprises powder that provides large outer surface area on the surface of particles of the metallic material. The reaction material **320** comprises a mixture of the dielectric material **1004** and the metallic material **1010.** In an embodiment in the mixture there is preferably a porous dielectric material coated with metallic nanoparticles so that the nanoparticles are located on the inner surface of the pores of the porous material. In an embodiment in the mixture there are preferably dielectric material **1004** particles having preferably 10 - 10000 nm size mixed with metallic material **1010** nanoparticles having preferably 0.5 - 100 nm size, more preferably 2 - 10 nm size. The metallic material **1010** nanoparticles comprises preferably transition metals, e.g. titanium, zirconium, hafnium or nickel. The dielectric material **1004** comprising multiferroic, pyroelectric and/or piezoelectric material is selected from multiferroic material that become electrically polarized in magnetic field and/or pyroelectric materials selected from pyroelectric crystal classes 1, 2, m, mm2, 3, 3m, 4, 4mm, 6 and 6mm, and/or from piezoelectric materials selected from piezoelectric crystal classes 1, 2, m, 222, mm2, 4, -4, 422, 4mm, -42m, 3, 32, 3m, 6, -6, 622, 6mm, -62m, 23 and -43m.

Referring now to the invention in more detail, in **Fig. 11** there is shown a schema **1100** that comprises dielectric particles **1102, 1108** that possess electrical polarizability and metallic nanoparticles **1114, 1116, 1118** that comprise elements capable of forming interstitial and/or electrically conductive metal hydrides.

In more detail, still referring to the embodiment of **Fig. 11****,** the dielectric particle **1108** has a positive electric pole **1110** pointing towards the metallic nanoparticle **1118** and a negative electric pole **1112** pointing away from the metallic nanoparticle **1118.** The dielectric particle **1102** has a negative electric pole **1106** pointing towards the metallic nanoparticle **1118** and a positive electric pole **1104** pointing away from the metallic nanoparticle **1118.**

In further detail, still referring to the embodiment of **Fig. 11****,** the positive electric pole **1110** and the negative electric pole **1106** create an electric field between the said poles **1110** and **1106.** The metallic nanoparticle **1118** between the electric poles **1110** and **1106** focuses the electric field to a small volume and thus assists the formation of the very strong electric field **1120** between the positive electric pole **1110** and the metallic nanoparticle **1118** and the formation of the very strong electric field **1122** between the metallic nanoparticle **1118** and the negative electric pole **1106.** The voltage gradient is extremely steep in the very strong electric field **1120, 1122.**

Still referring to the embodiment of **Fig. 11****,** ions can be accelerated to high kinetic energy in the very strong electric fields **1120, 1122** (in other words nanoscale particle accelerators are utilized). Positive ions (such as proton, p⁺) are accelerated towards the negative electric pole **1106** and negative ions (such as hydride ion, H⁻) are accelerated towards the positive electric pole **1110.** Polarity of the dielectric particles **1108, 1102** can be quickly altered by the polarization control factors comprising variable magnetic field, mechanical vibrations and/or variable temperature, the polarization control factor being chosen according to the material of the dielectric particles **1108, 1102.**

Still referring to the embodiment of **Fig. 11****,** ions accelerated to high kinetic energy can fuse with the nuclei of the metallic nanoparticle **1118** and the nuclei of the dielectric particles **1108, 1102,** releasing fusion energy e.g. in the form of gamma radiation.

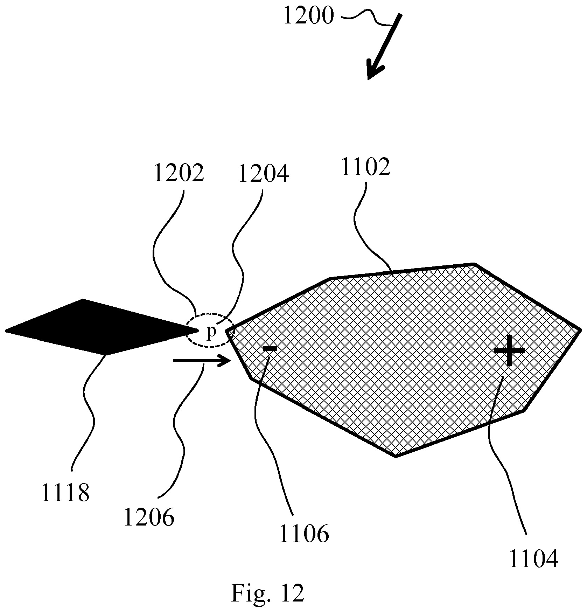

Referring now to the invention in more detail, in **Fig. 12** there is shown a schema **1200** comprising a particle **1102** that possesses electrical polarizability and a nanoparticle **1118** that comprises an element or elements capable of forming interstitial and/or electrically conductive metal hydrides.

In more detail, still referring to the embodiment of **Fig. 12****,** the particle **1102** is polarized and it has a negative electric pole with negative electric charge **1106** and a positive electric pole with positive electric charge **1104.** There is an area **1202** with very high electric field strength between the particle **1102** and the nanoparticle **1118.** The electric field accelerates ions towards the electric pole as indicated with the arrow **1206.** In an embodiment positive hydrogen ions **1204** (p⁺, protons) are accelerated towards the negative electric pole **1106.**

In further detail, still referring to the embodiment of **Fig. 12****,** the protons **1204** acquire kinetic energy in the area of very strong electric field **1202.** The protons arrive to the surface of the polarized particle **1102** colliding with the atoms of the polarized particle **1102.** Some of the accelerated positive hydrogen ions (protons, p⁺) **1204** tunnel through the Coulomb barrier of the atoms of the polarized particle **1102** and fuse with the nuclei of the said atoms forming new isotopes that may also comprise non-stable isotopes, and releasing fusion energy.

Still referring to the embodiment of **Fig. 12****,** in case the polarized particle **1102** comprises lithium tetraborate, accelerated protons fuse with lithium and boron nuclei in the polarized particle **1102** releasing fusion energy.

Still referring to the embodiment of **Fig. 12****,** the polarized particle **1102** and the metallic nanoparticle **1118** may be a part of a larger agglomerate that immobilizes particles and nanoparticles in such a way that at least some of those particles can maintain small gas gaps between those particles.

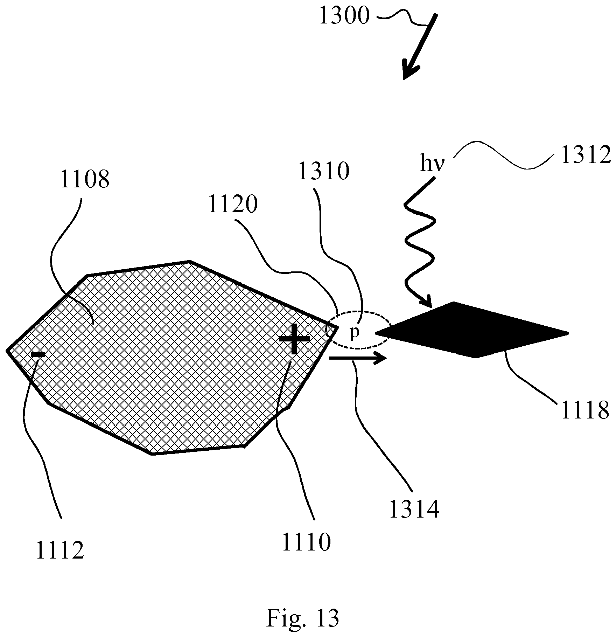

Referring now to the invention in more detail, in **Fig. 13** there is shown a schema **1300** comprising a particle **1108** that possesses electrical polarizability and a nanoparticle **1118** that comprises an element or elements capable of forming interstitial and/or electrically conductive metal hydrides.

In more detail, still referring to the embodiment of **Fig. 13****,** the particle **1108** is polarized and it has a negative electric pole with negative electric charge **1112** and a positive electric pole with positive electric charge **1110.** The surface of the nanoparticle **1118** interacts with thermal radiation. Thermal radiation photon **1312** that has energy hν, wherein h is the Planck constant and ν is the frequency of the photon, excites surface plasmon that is a traveling wave oscillation of electrons and forms a polariton that propagates along the surface of the nanoparticle **1118.** It is not yet clear to what extent the said polariton is capable of enhancing the local electric field strength especially near the tip pointing towards the electric pole **1110.** There is an area **1120** with very high electric field strength between the particle **1108** and the nanoparticle **1118.** The electric field accelerates ions towards the matching electric pole as indicated with the arrow **1314.** In very high electric field electrons can be ripped away from atoms forming ions. In an embodiment very high electric field **1120** ionizes hydrogen and forms low-temperature hydrogen plasma consisting of electrons and protons. In an embodiment positive hydrogen ions **1310** (p⁺, protons) are accelerated towards the nanoparticle **1118.** Accelerated protons **1310** arrive to the surface of the nanoparticle **1118** colliding with the atoms of the nanoparticle **1118.** Some of the accelerated protons **1310** tunnel through the Coulomb barrier of the atoms of the nanoparticle **1118** and fuse with the nuclei of the said atoms forming new isotopes and releasing energy. In an embodiment accelerated protons **1310** fuse with the nuclei of nickel atoms in the nanoparticle **1118** and form new isotopes that are heavier than the original nickel isotopes releasing energy. The amount of released energy is estimated in Examples hereinafter.

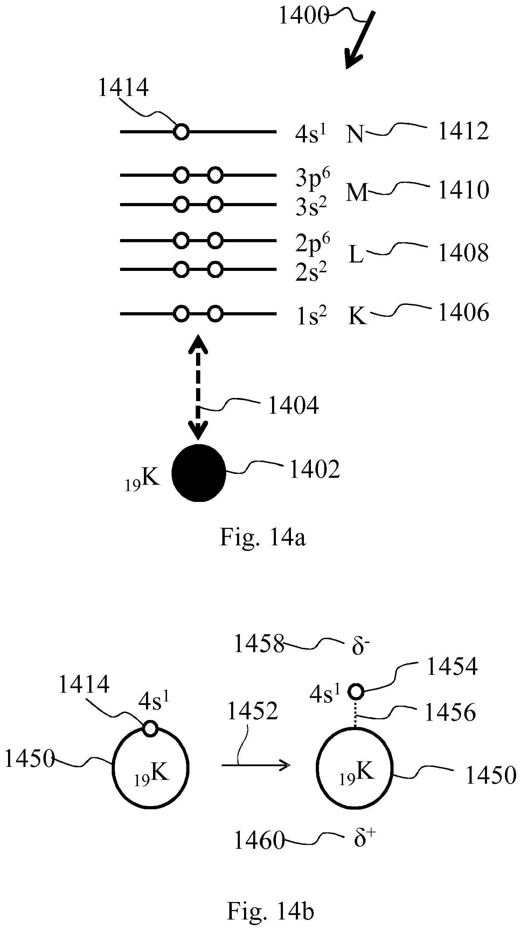

Referring now to the invention in more detail, in **Fig. 14a** there is shown the electron shell structure of the potassium atom, and in **Fig. 14b** there is shown the excitation of an electron of the potassium atom to a Rydberg state.

In more detail, still referring to the embodiment of **Fig. 14a****,** potassium atom **1400** has nucleus **1402** containing 19 protons (₁₉K) and a variable number of neutrons depending on the potassium isotope. Stable potassium isotopes are ³⁹K and ⁴¹K, wherein the numbers 39 and 41 denote the number of nucleons consisting of protons and neutrons in potassium nuclei. Potassium also has a long-lived radioactive isotope ⁴⁰K. The electron shell structure of potassium is 1s²2s²2p⁶3s²3p⁶4s¹. Large distance from the small nucleus **1402** to the first electron shell, K shell **1406,** filled with two 1s electrons, is indicated with the dashed arrow **1404.** L and M shells **1408, 1410** are also completely filled with electrons. The outer shell, N shell **1412,** has one 4s electron that acts as a valence electron capable of forming a chemical bond between atoms. This valence electron (in this case the 4s electron) is important for the formation of the Rydberg atom. The valence electron 4s can be removed from potassium atom with about 4.34 eV ionization energy and Rydberg states of the 4s electron utilized in an embodiment of the present invention are below this ionization energy level.

Still referring to the embodiment of **Fig. 14b****,** the single 4s electron **1414** orbits the potassium atom. The other electrons and the nucleus of the potassium atom are inside the circle **1450.** When the 4s electron **1414** is excited **1452** to the Rydberg state of the electron **1454,** the distance between the 4s electron and the filled electron shells of the potassium atom increases and the potassium atom becomes potassium Rydberg atom. The excited electron is not removed from the potassium atom but the electron **1454** is still orbiting the potassium atom **1450** and it is part of the potassium atom as indicated with the dashed line **1456.** Because the orbit of the excited electron **1454** is far away from the potassium atom **1450** and the angular velocity of the excited electron **1454** is relatively small, the side of the excited electron becomes negatively charged δ⁻ **1458,** and the opposite side of the potassium atom becomes positively charged δ⁺ **1460.** The potassium Rydberg atom behaves like an electric dipole and it will be affected by external electric and magnetic fields.

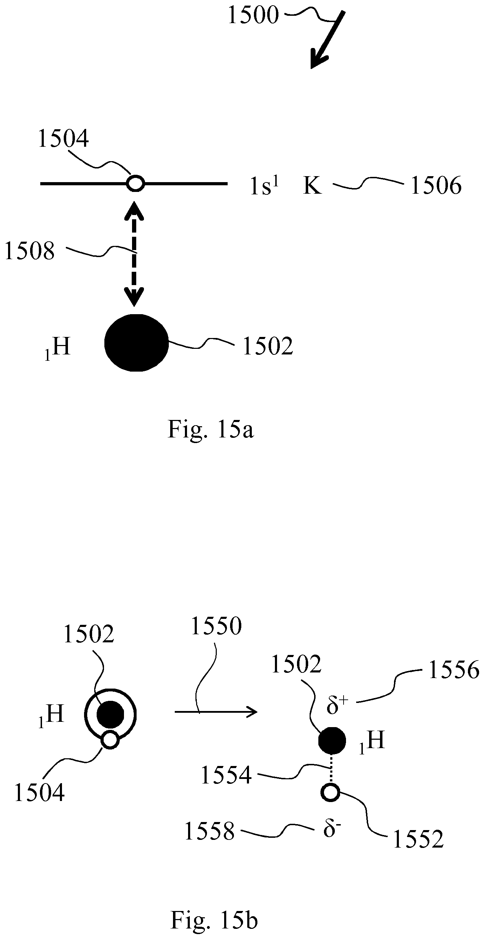

Referring now to the invention in more detail, in **Fig. 15a** there is shown the electron shell structure of the hydrogen atom, and in **Fig. 15b** there is shown the excitation of the electron of the hydrogen atom to a Rydberg state.

In more detail, still referring to the embodiment of **Fig. 15a****,** hydrogen atom **1500** has nucleus **1502** containing one proton (₁H) and a variable number of neutrons depending on the potassium isotope. Stable hydrogen isotopes are ¹H (protium) and ²H (deuterium), where the nucleus has 0 and 1 neutron, respectively. Radioactive hydrogen isotope ³H (tritium) has two neutrons. All these hydrogen isotopes ¹H, ²H and ³H can be used for generating Rydberg atoms and Rydberg matter. Large distance from the small nucleus **1502** to the first electron shell, K shell **1506,** filled with one 1s electron **1504,** is indicated with the dashed arrow **1508.** This valence electron (in this case the 1s electron) is important for the formation of the Rydberg atom.

In more detail, still referring to the embodiment of **Fig. 15b****,** the single 1s electron **1504** orbits the nucleus **1502** of the hydrogen atom. Neutral hydrogen atom does not have any other electrons. When the 1s electron **1504** is excited **1550** to a Rydberg state of the electron **1552,** the distance between the 1s electron and the nucleus of the hydrogen atom increases and the hydrogen atom becomes hydrogen Rydberg atom. Methods for exciting the electron comprise collision with accelerated protons and electrons and exposure to coherent electromagnetic radiation. The excited electron is not removed from the hydrogen atom but the electron **1552** is still orbiting the nucleus **1502** of the hydrogen atom and it is part of the hydrogen atom as indicated with the dashed line **1554.** Because the orbit of the excited electron **1552** is far away from the nucleus **1502** of the hydrogen atom and the angular velocity of the excited electron **1552** is relatively small, the side of the excited electron becomes negatively charged as indicated with the symbol δ⁻ **1558,** and the opposite side of the hydrogen atom becomes positively charged as indicated with the symbol δ⁺ **1556.** The hydrogen Rydberg atom behaves like an electric dipole and it will affected by external electric and magnetic fields.

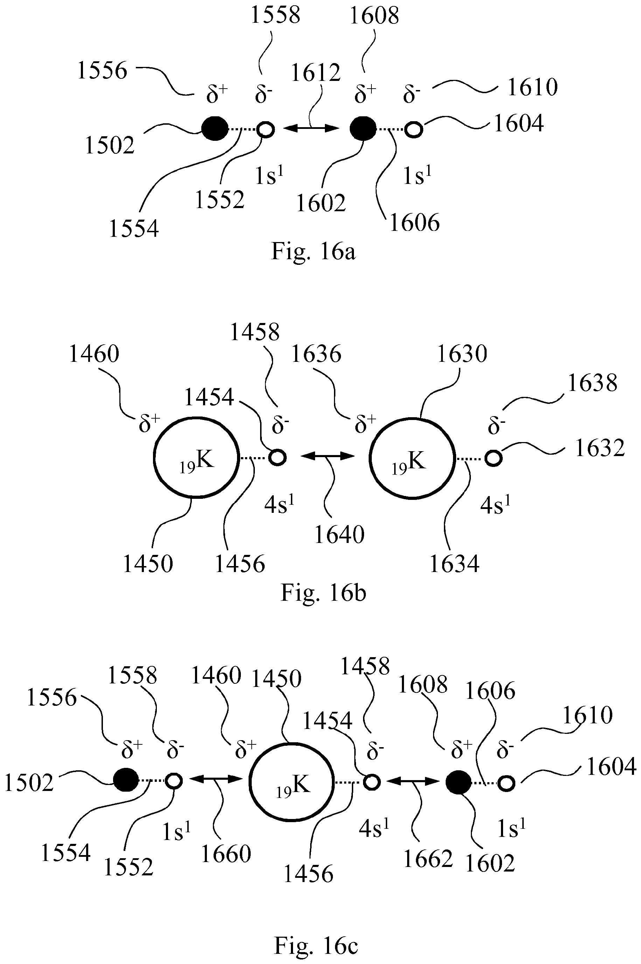

Referring now to the invention in more detail, in **Fig. 16a** there is illustrated the attractive force between two hydrogen Rydberg atoms, in **Fig. 16b** there is illustrated the attractive force between two potassium Rydberg atoms, and in **Fig. 16c** there is illustrated the formation of a small Rydberg atom cluster.

In more detail, still referring to the embodiment of **Fig. 16a****,** there is the first hydrogen Rydberg atom comprising hydrogen nucleus **1502** and an excited electron **1552** bound **1554** together forming the first electric dipole and the second hydrogen Rydberg atom comprising hydrogen nucleus **1602** and an excited electron **1604** bound **1606** together forming the second electric dipole. The first electric dipole has a side with a positive electric charge as indicated with the symbol δ⁺ **1556** and a side with a negative electric charge as indicated with the symbol δ⁻ **1558.** The second electric dipole has a side with a positive electric charge as indicated with the symbol δ⁺ **1608** and a side with a negative electric charge as indicated with the symbol δ⁻ **1610.** The first electric dipole and the second electric dipole are attracted and bound together by electrostatic forces as indicated with the arrow **1612.**

In more detail, still referring to the embodiment of **Fig. 16b****,** there is the first potassium Rydberg atom comprising potassium nucleus ₁₉K with K, L and M electron shells **1450** and an excited electron **1454** bound **1456** together forming the third electric dipole and the second potassium Rydberg atom comprising potassium nucleus ₁₉K with K, L and M electron shells **1630** and an excited electron **1632** bound **1634** together forming the fourth electric dipole. The third electric dipole has a side with a positive electric charge as indicated with the symbol δ⁺ **1460** and a side with a negative electric charge as indicated with the symbol δ⁻ **1458.** The fourth electric dipole has a side with a positive electric charge as indicated with the symbol δ⁺ **1636** and a side with a negative electric charge as indicated with the symbol δ⁻ **1638.** The third electric dipole and the fourth electric dipole are attracted and bound together by electrostatic forces as indicated with the arrow **1640.**

In more detail, still referring to the invention of **Fig. 16c****,** there is a small cluster of Rydberg atoms consisting of two hydrogen Rydberg atoms and one potassium Rydberg atom. The first hydrogen Rydberg atom with the excited electron **1552** in Rydberg state and the potassium Rydberg atom with the positive electric charge side **1460** are attracted and bound together by electrostatic forces as indicated with the arrow **1660.** The second hydrogen Rydberg atom with the positive electric charge side **1608** and the potassium Rydberg atom with the excited electron **1454** in Rydberg state are attracted and bound together by electrostatic forces as indicated with the arrow **1662.** Although the illustrated string comprises only three Rydberg atoms, longer strings are also feasible. Clusters of Rydberg atoms in sheet geometry are also feasible. The strings and sheets of Rydberg atoms may comprise single elements such as hydrogen Rydberg atoms. The strings and sheets of Rydberg atoms may also comprise more than one element such as hydrogen and potassium Rydberg atoms to form mixed element Rydberg matter. The formation of electrostatic bonds between Rydberg atoms releases energy that must be removed from the Rydberg atom cluster to form stable Rydberg matter. Energy released from the condensation of Rydberg atoms to Rydberg matter is dissipated for example by phonons (lattice vibrations) to the surrounding crystal lattice or by the evaporation of nearby atoms or molecules.

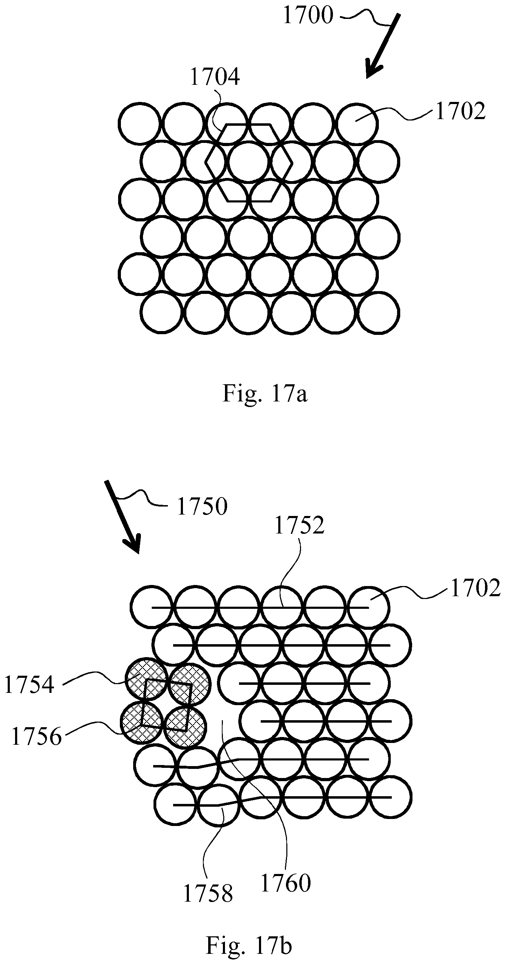

Referring now to the invention in more detail, in **Fig. 17a** there is illustrated a crystal lattice without any defects, in **Fig. 17b** there is illustrated a crystal lattice with a defect induced by the change in crystal structure.

In more detail, still referring to the embodiment of **Fig. 17a****,** the crystal lattice **1700** has atoms **1702** forming a hexagonal crystal lattice as indicated with the hexagon symbol **1704** drawn on the lattice.

In more detail, still referring to the embodiment of **Fig. 17b****,** the mixed crystal lattice **1750** has the first crystal lattice shown with open circle atoms **1702** and the second crystal lattice shown with shaded atoms **1754.** The first crystal lattice has hexagonal structure. Most of the first crystal lattice is without any mechanical strain as indicated with straight lines **1752.** The second crystal lattice has cubic structure as indicated with the square symbol **1756** drawn on the lattice. The first crystal structure and the second crystal structure differ from each other and they do not fit together. The second crystal lattice has induced mechanical strain to the first crystal lattice as indicated with the curved lines **1758.** As a result, a discontinuity area (defect) is formed between the two crystal structures. In this example the formed defect is a void **1760** without any atoms. The void **1760** is utilized for the enhanced generation of Rydberg matter and storing the Rydberg matter or inverted Rydberg matter.

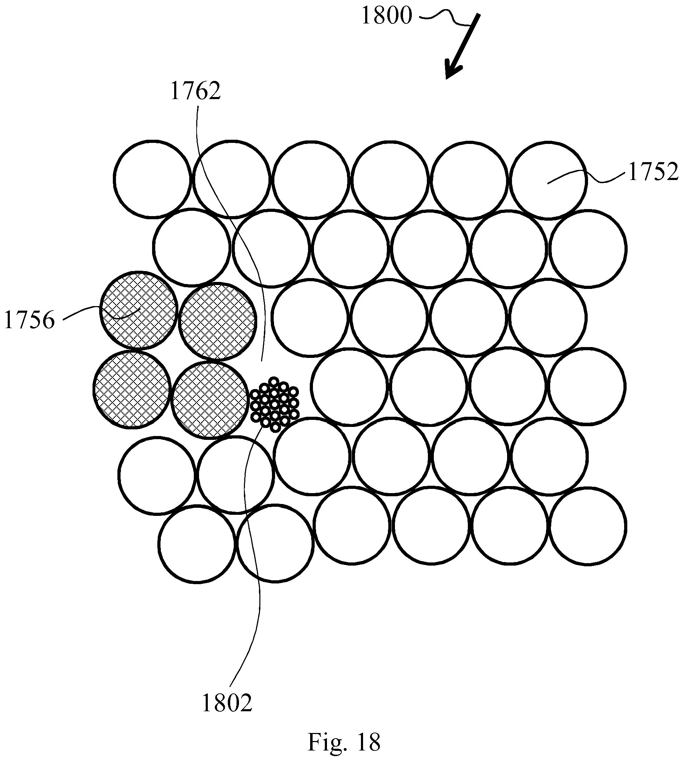

Referring now to the invention in more detail, in **Fig. 18** there is illustrated the mixed crystal lattice structure with a structural defect housing a particle of inverted Rydberg matter.

In more detail, still referring to the embodiment of **Fig. 18****,** the void **1762** between the first crystal lattice having atoms **1752** and the second crystal lattice having atoms **1756** is now occupied with a cluster of atoms **1802** forming a particle of inverted Rydberg matter. The particle may comprise hydrogen atoms in inverted Rydberg matter form.

Still referring to the embodiment of **Fig. 18****,** the first crystal lattice comprises the first material that is often a metal oxide such as alumina Al₂O₃ and the second crystal lattice comprises the second material that is often a metal oxide such as iron oxide Fe₃O₄. Although in this illustration the amount of the first material with the first crystal structure (hexagonal for the illustration purposes) is much larger than the amount of the second material (cubic for the illustration purposes), the ratio of crystal structures can vary in a wide range. For example, in case of a dehydrogenation catalyst (such as styrene catalyst) comprising inverse spinel cubic Fe₃O₄ doped with potassium generally in the form potassium oxide K₂O and also doped with structural promoters such as corundum structure alumina Al₂O₃ and/or chromia Cr₂O₃, the amount of the second material (inverse spinel Fe₃O₄ doped with alkali metal such as potassium) **1756** is much larger than the amount of the first material (hexagonal Al₂O₃ and/or Cr₂O₃) **1752.**

Still referring to the embodiment of **Fig. 18****,** the illustrated mixed crystal structure material that is capable of enhancing the formation of Rydberg atoms and storing the said Rydberg atoms is preferably a constituent of the reaction material **(320** in **Fig. 4****)** comprising a compound or a mixture of compounds possessing electrical polarizability and a compound or a mixture of compounds capable of forming electrically conductive metal hydrides.

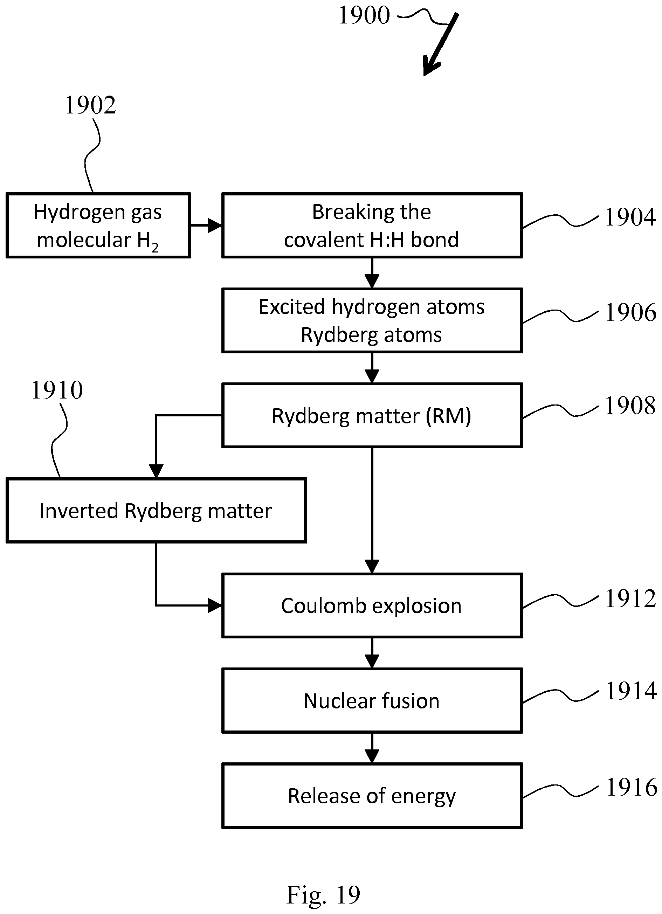

Referring now to the invention in more detail, in **Fig. 19** there is shown a flow chart **1900** of a method for generating energy by solid state nuclear fusion.

In more detail, still referring to the embodiment of **Fig. 19****,** hydrogen gas is originally molecular H₂ **1902.** Between two hydrogen atoms in the hydrogen molecule there is a chemical bond that must be broken. Breaking the covalent H:H chemical bond **1904** forms active hydrogen atoms H*, wherein * denotes an unpaired electron, from the hydrogen molecule. Metals capable of forming metallic metal hydrides are utilized for breaking the H:H bond. Hydrogenation catalysts, such as Fischer-Tropsch catalysts, and dehydrogenation catalysts, such as styrene catalysts, and/or ammonia synthesis catalysts are utilized as promoters for enhancing the formation of active hydrogen atoms.

Still referring to the embodiment of **Fig. 19****,** hydrogen atoms are excited into Rydberg atoms **1906,** where an excited electron in hydrogen atom is in a Rydberg state that is above the ground state of the said electron and below the ionization energy level of the said electron. Excitation methods comprise excitation by accelerated electrons or protons and excitation by coherent electromagnetic radiation. Electrons or protons are accelerated to sufficient kinetic energy with the electric field generated by the dielectric materials possessing electrical polarizability. Rydberg atoms, being electrical dipoles, are attracted together into clusters to form Rydberg matter, shortened as RM **1908.** Alkali metals, such as potassium K, used in catalysts activating hydrogen bond, form potassium Rydberg atoms with less excitation energy than the hydrogen atoms require for forming hydrogen Rydberg atoms. Alkali metals are examples of elements that possess Rydberg states and are capable of forming mixed element Rydberg matter, e.g. potassium - hydrogen Rydberg matter. In a nanopowder system that has large number of Rydberg atom clusters on the surface of powder particles, e.g. Fe₃O₄:K particles, some of those clusters may enter such a quantum mechanical state that they invert their structure to form very dense inverted Rydberg matter **1910** where positively charged atom cores orbit close to negatively charged electrons.

Still referring to the embodiment of **Fig. 19****,** the strength of the local electric field is increased to create higher energy electrons or protons that hit some of the Rydberg matter spots destabilizing Rydberg matter and inducing Coulomb explosion **1912** of the Rydberg matter and inverted Rydberg matter. Destabilization means that enough energy is added to an electron in Rydberg state so that the electron is lifted from the Rydberg state to the ionization energy level, which results in separate positive atom and negative electron and the quantum mechanical wave function of the Rydberg atom collapses.

Still referring to the embodiment of **Fig. 19****,** in the beginning of the Coulomb explosion the atoms still have fixed position in the Rydberg matter meaning that they must have wide range of kinetic energy values. This is because of the Heisenberg uncertainty principle, which states that ΔxΔp≥ℏ/2, wherein Δx is the uncertainty of the position of the particle, Δp is the uncertainty of the momentum of the particle, and h is reduced Planck's constant. Another way of expressing the system state is to apply the uncertainty principle of quantum mechanics, which states that σₓσₚ≥ℏ/2, wherein σₓ is the standard deviation of position and σₚ is the standard deviation of momentum. Fixed positions of atoms in a cluster of Rydberg atoms leads to a large range of momentum values for the said atoms when they leave the cluster during the Coulomb explosion. Some of the atoms leaving the Rydberg matter cluster have very high kinetic energy, because the momentum wavefunction becomes spread out, and have an increased probability of tunneling through the Coulomb barrier of the surrounding atoms to induce nuclear fusion **1914.**

Still referring to the embodiment of **Fig. 19****,** energy is released **1916** from the nuclear fusion between two nuclei, often between the nucleus of hydrogen and the nucleus of e.g. nickel. Depending on the time how long the nucleus is in excited state due to the nuclear fusion, different kinds of de-excitation paths are feasible. Short time for the nucleus in excited state leads to the release of energy in the form of high energy gamma ray photons. Long time for the nucleus in excited state and resonance between the nucleus and the surrounding crystal lattice may lead to the release of de-excitation energy in the form of relatively low energy photons, such as X-ray photons, deep UV photons, or phonons (lattice vibrations) which transmit heat energy through the lattice.

Based on the above a method of producing energy according to the present invention, comprises the steps of
- providing a reaction container (350) comprising reaction material (320), the reaction material (320) being formed by an electrically polarizable dielectric material and metallic material,
- pressurizing the reaction container (350) with hydrogen gas,
- activating hydrogen molecules in the hydrogen gas to provide atomic hydrogen,
- polarizing the dielectric material to produce an electric field,
- pulling hydrogen ions with the electric field from the metallic surface or ionizing the atomic hydrogen in the electric field to provide hydrogen ions, and
- accelerating hydrogen ions in the electric field,
wherein a part of the accelerated hydrogen ions tunnels through a Coulomb barrier between the hydrogen ions and atomic nuclei of the reaction material to fuse the hydrogen ions with the atomic nuclei of the reaction material to release energy.

In a preferred embodiment, the resistivity of the active hydrogen material is smaller than 1000 µΩcm, preferably smaller than 500 µΩcm, in particular smaller than 100 µΩcm. The active hydrogen material comprises, for example, a hydrogen storage alloy, an electrically conductive hydrogenation catalyst, a material capable of forming binary metal hydride consisting of a metal and hydrogen, or a material capable of forming ternary metal hydride consisting of a first metal, a second metal and hydrogen.

A nuclear fusion system (300) of the present kind, for producing thermal energy, comprises
- a reaction container (350),
- reaction material (320) within the reaction container (350), the reaction material comprising electrically polarizable dielectric material and metallic material,
- hydrogen gas source (306) connected to the reaction container (350) for pressurizing the reaction container (350) with hydrogen gas, and
- heat exchange unit (314) for removing thermal energy produced in the reaction container.

The system further comprises
- means for polarizing the dielectric material in order to produce an electric field within the reaction material,
- means for activating hydrogen molecules into hydrogen atoms and ionizing hydrogen atoms in order to accelerate the hydrogen ions in the electric field so that they can tunnel through a Coulomb barrier between the hydrogen ions and atomic nuclei of the reaction material to fuse the hydrogen ions with the atomic nuclei of the reaction material to release energy.

In particularly preferred embodiments the system contains
- a temperature measurement system (328, 334) for measuring the temperature of the reaction material (320) and from the heat exchange unit (314),
- a pressure measurement system (313) for measuring hydrogen gas pressure, and
- a control system (304) adapted to receive input from the temperature measurement system (328, 334) and the pressure measurement system (313) and to control the heat exchange unit (314) and/or hydrogen gas pressure, and optionally the heater (322).

The hydrogen gas source (306) preferably comprises a pressurized hydrogen gas bottle, metal hydrides heated to release hydrogen gas, or a source of chemical reactions releasing hydrogen gas, or a combination thereof.

An exemplary fusion energy production process according to the present technology comprises the steps of
- providing a matrix of porous reaction material,
- filling the pores of the matrix with hydrogen molecules,
- breaking at least part of the covalent bonds of hydrogen molecules by activation to produce hydrogen atoms, and
- exciting at least part of the hydrogen atoms into hydrogen Rydberg atoms so as to form Rydberg matter.

Further, in the process, at least part of the Rydberg matter is collided with ions or electrons accelerated in electric fields inside the reaction material so as to induce a Coulomb explosion of the Rydberg matter to produce high kinetic energy hydrogen ions, and at least part of the high kinetic energy hydrogen ions are fused with the atomic nuclei of the reaction material so as to release fusion energy.

In a preferred exemplary embodiment, the process comprises using metal capable of forming metallic metal hydride for breaking the covalent bonds of hydrogen molecules.

An exemplary fusion energy reaction material according to the present technology comprises a porous or powder mixture of electrically polarizable dielectric material, preferably in porous or powdery form, metallic material capable of forming metallic metal hydride, preferably in nanoparticle form, and a material capable of promoting the formation of Rydberg matter upon interaction with active hydrogen. There is also provided the use of hydrogen-containing Rydberg matter and/or inverted Rydberg matter as an intermediate material for providing high-energy hydrogen ions capable of fusing with other atomic nuclei in a fusion energy production process.

The following non-limiting examples illustrate the present technology.

### EXAMPLE 1

Nickel nanopowder having an average particle size of 10 nm was is mixed with pyroelectric lithium tetraborate Li₂B₄O₇ crystallite powder having particle size range of about 100 nm - 1000 nm. Li₂B₄O₇ crystallite powder was prepared by mechanically crushing commercial Li₂B₄O₇ crystals to powder. The powder mixture is placed to the reaction cartridge. The reaction container was connected to a hydrogen gas line receiving hydrogen gas from a pressurized hydrogen gas bottle. The reaction container was also connected to the cooling fluid circulation. The reaction container was pressurized with hydrogen gas to 20 bar (gauge) and slowly heated to 400 °C.

It is assumed that the pyroelectric crystallite powder was polarized by the temperature changes within the reaction material. The temperature of the reaction material was altered with external control (cooling fluid circulation) to keep the pyroelectric crystallite powder polarized. The system started to produce gamma radiation that had specific gamma photon energies. Generated thermal energy was removed by the cooling fluid circulation from the reaction container. The amount of collected thermal energy was much larger than the energy used for pre-heating the reaction container. After the test the reaction cartridge was de-pressurized and let to cool to room temperature for several days. The reaction material obtained from the cooled reaction container contained possibly some helium gas and traces of copper and beryllium that were not present in the original reaction material before the experiment. The construction materials used for the reaction container were originally free of copper and beryllium.

### EXAMPLE 2

The experimental setup was the same as used in Example 1 but nickel nanopowder was replaced with titanium nanopowder and lithium tetraborate was replaced with piezoelectric quartz SiO₂ powder. Externally controlled mechanical vibrations (ultrasonic source) provided the original electric field by polarization of the piezoelectric material. A lot of thermal energy was produced during the experiment. The COP was over 10. After the reactions the reaction material obtained from the reaction container possibly contained traces of vanadium isotopes and phosphorus that were not present in the original reaction material, although contamination from the steel used for the construction is not entirely excluded.

Secondary nuclear reactions forming stable isotopes from non-stable isotopes release more energy along time depending on the half lifes of the non-stable isotopes until the system consists only of stable isotopes. It is not yet certain how far along the titanium isotope chain it is possible to proceed. It is herein hypothesized that lighter titanium isotopes are fused with hydrogen into heavier titanium isotopes via non-stable vanadium isotopes.

It is not yet known how extensive and fast is the deterioration of the crystal structure of polarizable dielectric materials while operating the system at conditions favorable for fusion. The probability of proceeding further in the transmutation chain from the just created element to the next heavier element (a proton added) is possibly weakened locally after the first fusion reaction but the extent of deterioration that destroys locally the favorable fusion reaction conditions (high local electric field strength) for the transmutation is not yet clear.

### EXAMPLE 3

The experimental setup was the same as used in Example 1 but nickel nanopowder was replaced with zirconium nanopowder and lithium tetraborate was replaced with multiferroic BiFeO₃ powder. Externally controlled magnetic field provided the local electric field by polarization of the multiferroic material. It is hypothesized that hydrogen was fused with zirconium because quite a lot of thermal energy was released accompanied by noticeable gamma radiation. After the reactions the reaction material obtained from the reaction container possibly contained traces of niobium and molybdenum isotopes that were not present in the original reaction material, although contamination from the steel used for the construction cannot be entirely excluded.

### THEORETICAL EXAMPLE 4

The experimental setup is the same as used in Example 1 but nickel nanopowder is generally replaced with transition metal nanopowder that is capable of forming a metallic or interstitial hydride having electrical conductivity.

### THEORETICAL EXAMPLE 5

The experimental setup is the same as used in Example 1 but instead of nanopowder mixtures, nanoporous pyroelectric, piezoelectric or multiferroic material is coated with transition metal nanoparticle thin film that is capable of forming a metallic or interstitial hydride having electrical conductivity. Nanopores provide sufficient surface area for colliding noticeable amount of hydrogen ions with the surface.

### EXAMPLE 6

A method of operating the thermal energy generator is presented herein.

Initiate the cooling media circulation around the reaction cartridge (control the mass flow rate based on the reaction cartridge temperature)

Increase the temperature of the reaction container with the heating means, e.g. with the heater cartridge e.g. to over 300 °C or to over 400 °C.

Increase the pressure of the reaction container with hydrogen gas above room pressure, e.g. to over 10 bar gauge or to over 20 bar gauge.

Polarize the material possessing electric polarizability by creating mechanical vibrations in the reaction cartridge volume (used for polarizing electrically piezoelectric material) or by creating magnetic field in the reaction cartridge volume (used for polarizing electrically multiferroic material) or by changing the temperature in the reaction cartridge volume (used for polarizing electrically pyroelectric material, temperature change is induced by controlling the mass flow rate of the circulated cooling medium and by controlling the electric power going to the heater cartridge).

Collect thermal energy from the reaction cartridge with the heated circulated cooling medium.

### EXAMPLE 7

Instead of using mass defect and binding energy values, the amount of energy released in the fusion process is herein calculated directly from the fusion reaction equation: isotope x + hydrogen -> isotope y + energy, wherein the total amount of energy (energy + energy equivalent of mass) is always constant in the isolated system.

The atomic mass (mₐ) is the mass of a specific isotope, most often expressed in unified atomic mass units. The atomic mass is the total mass of protons, neutrons and electrons in a single atom.

The amount of energy released from the fusion of nickel with hydrogen is now estimated.

Natural nickel ₂₈Ni contains 0.680769 mole fraction of stable ⁵⁸Ni isotope. Fusion of nickel with hydrogen produces copper and releases energy as follows.

⁵⁸₂₈Ni (57.9353429 u) + ¹₁H (1.007825032 u) -> ⁵⁹₂₉Cu (58.939498 u) + 0.003670 u (3.418394926 MeV)

⁵⁹Cu has 81.5 s half life and it emits β⁺ (positron) to form ⁵⁹Ni.

⁵⁹₂₉Cu (58.939498 u) -> ⁵⁹₂₈Ni (58.9343467 u) + β⁺ (0.00054857990943 u, 0.5109989 MeV) + 0.00460272 u (4.287249656 MeV)

Further, a positron β⁺ annihilates immediately with an electron β⁻.

β⁺ (0.00054857990943 u) + β⁻(0.00054857990943 u) -> 2 * 0.5109989 MeV = 1.0219978 MeV

⁵⁹Ni has 76000 year half life and it emits β⁺ to form ⁵⁹Co, which is a stable isotope of ₂₇Co.

⁵⁹₂₈Ni (58.9343467 u) -> ⁵⁹₂₇Co (58.9331950 u) + β⁺ (0.00054857990943 u, 0.5109989 MeV) + 0.00060312 u (0.56178224 MeV)

β⁺ (0.00054857990943 u) + β⁻(0.00054857990943 u) -> 2 * 0.5109989 MeV = 1.0219978 MeV

On the other hand, the life time of ⁵⁹Ni is so long that it can be fused with ¹H before the transmutation into ⁵⁹Co.

⁵⁹₂₈Ni (58.9343467 u) + ¹₁H (1.007825032 u) -> ⁶⁰₂₉Cu (59.9373650 u) + 0.004806732 u (4.477278589 MeV)

⁶⁰Cu has 23.7 min life time and it emits β⁺ to form stable ⁶⁰Ni isotope.

⁶⁰₂₉Cu (59.9373650 u) -> ⁶⁰₂₈Ni (59.9307864 u) + β⁺ (0.00054857990943 u, 0.5109989 MeV) + 0.00603002 u (5.616722514 MeV)

β⁺ (0.00054857990943 u) + β⁻ (0.00054857990943 u) -> 2 * 0.5109989 MeV = 1.0219978 MeV

Natural nickel ₂₈Ni contains 0.262231 mole fraction of stable ⁶⁰Ni isotope.

⁶⁰₂₈Ni (59.9307864 u) + ¹₁H (1.007825032 u) -> ⁶¹₂₉Cu (60.933458 u) + 0.005154 u (4.800402128 MeV)

⁶¹Cu has 3.333 h half life and it emits β⁺ to form stable ⁶¹Ni isotope.

⁶¹₂₉Cu (60.933458 u) -> ⁶¹₂₈Ni (60.9310560 u) + β⁺(0.00054857990943 u, 0.5109989 MeV) + 0.00185342 u (1.726386678 MeV)

β⁺(0.00054857990943 u) + β⁻(0.00054857990943 u) -> 2 * 0.5109989 MeV = 1.0219978 MeV

Natural nickel ₂₈Ni contains 0.011399 mole fraction of stable ⁶¹Ni isotope.

⁶¹Ni (60.9310560 u) + ¹H (1.007825032 u) -> ⁶²₂₉Cu (61.932584 u) + 0.006297 u (5.865433492 MeV)

⁶²Cu has 9.673 min half life and it emits β⁺ to form stable ⁶²Ni isotope.

⁶²₂₉Cu (61.932584 u) -> ⁶²₂₈Ni (61.9283451 u) + β⁺(0.00054857990943 u, 0.5109989 MeV) + 0.00369032 u (3.437385552 MeV)

β⁺(0.00054857990943 u) + β⁻(0.00054857990943 u) -> 2 * 0.5109989 MeV = 1.0219978 MeV

Natural nickel ₂₈Ni contains 0.036345 mole fraction of stable ⁶²Ni isotope.

⁶²₂₈Ni (61.9283451 u) + ¹₁H (1.007825032 u) -> ⁶³₂₉Cu (62.929598 u) + 0.006573 u (6.122143868 MeV)

⁶³Cu is a stable isotope of ₂₉Cu.

Natural nickel ₂₈Ni contains 0.009256 mole fraction of stable ⁶⁴Ni isotope.

⁶⁴₂₈Ni (63.9279660 u) + ¹₁H (1.007825032 u) -> ⁶⁵₂₉Cu (64.927790 u) + 0.008002 u (7.453107062 MeV)

⁶⁵Cu is a stable isotope of ₂₉Cu.

Because copper hydrides are unstable at high temperatures and fusion reactions are somehow enhanced by the presence of electrically conductive metal hydride (in this example hydrides of nickel), it is possible that in this exemplar case the chain of nuclear transmutations stops to copper and copper does not transmutate to heavier elements.

### EXAMPLE 8

The electron is removed from hydrogen atom by ionization and a free proton is formed. The proton is accelerated by the very steep voltage gradient (very strong electric field between the metallic nanoparticle and the lithium tetraborate crystallite) towards the negative electric pole in lithium tetraborate. The amount of energy released from the fusion of hydrogen with lithium and boron in lithium tetraborate is now estimated. Although the fusion process involves free protons, the electron belonging to hydrogen is present in the fusion reaction equation to keep zero electric charge on both sides of the equation.

Natural lithium ₃Li contains 0.0759 mole fraction of stable ⁶Li isotope.

⁶₃Li (6.015122795 u) + ¹₁H (1.007825032 u) → ⁷₄Be (7.01692983 u) + 0.006017997 u (5.605523551 MeV)

The half life of ⁷Be is 53.22 days and it transmutates by electron capture (EC) into stable ⁷Li isotope.

⁷₄Be (7.01692983 u) → ⁷₃Li (7.01600455 u) + 0.00092528 u (0.861861319 MeV)

Natural lithium ₃Li contains 0.9241 mole fraction of stable ⁷Li isotope that can be fused with hydrogen. Natural boron ₅B contains about 19.9 at% of ¹⁰B isotope and about 80.1 at% of ¹¹B isotope. The molecular weight of lithium tetraborate Li₂B₄O₇ is 169.1218 g/mol. One mole of Li₂B₄O₇ contains 2 mol Li (13.88 g) and 4 mol B (43.24 g). Further, 1 mol Li₂B₄O₇ contains 0.152 mol ⁶Li, 1.848 mol ⁷Li and 0.796 mol ¹⁰B, 3.204 mol ¹¹B.

Li₂B₄O₇ + 3H₂ => 2Li + 2p, 4B + 4p + 3.5O₂ => helium + oxygen gas + energy

The nuclear reactions are as follows.

⁷₃Li (7.01600455 u) + ¹₁H (1.007825032 u) → ⁸₄Be (8.00530510 u) + 0.01852448 u (17.25481407 MeV)

The half life of ⁸Be is 6.7×10⁻¹⁷ s and it fissions into two stable ⁴He isotope atoms.

⁸₄Be (8.00530510 u) → 2·⁴₂He (2·4.00260325415 u) + 0.00009859 u (0.091834225 MeV)

Natural boron ₅B contains 0.199 mole fraction of stable ¹⁰B isotope.

¹⁰₅B (10.0129370 u) + ¹₁H (1.007825032 u) → ¹¹₆C (11.0114336 u) + 0.009328432 u (8.689061271 MeV)

The half life of ¹¹C is 20.334 min and it transmutates by positron emission (β⁺) into stable ¹¹B isotope.

¹¹₆C (11.0114336 u) → ¹¹₅B (11.0093054 u) + β⁺ (0.00054857990943 u, 0.5109989 MeV) + 0.00157962 u (1.47135293 MeV)

Positron β⁺ annihilates electron β⁻.

β⁺(0.00054857990943 u) + β⁻(0.00054857990943 u) -> 2 * 0.5109989 MeV = 1.0219978 MeV

One mole natural boron ₅B contains 0.801 mol of stable ¹¹B isotope.

¹¹₅B (11.0093054 u) + ¹₁H (1.007825032 u) → ¹²₆C (12.0000000 u) + 0.017130432 u (15.95631219 MeV)

¹²C isotope is stable.

The amount of energy released in the fusion process is 0.152 * 4.0*10⁶ * 96.48 kJ + 1,848 * 17.2*10⁶ * 96.48 kJ + 3.204 * 8.7*10⁶ * 96.48 kJ = 5814*10⁶ kJ, which corresponds to 1615000 kWh (thermal). Burning diesel in air releases thermal energy 38.6 MJ/liter. On the other hand, fusing about 170 g of lithium tetraborate with about 6.05 g of hydrogen releases about 5814000 MJ, which is equal to burning about 150000 liters (150 m³) of diesel.

It can be understood that the present invention provides an energy source that is very compact and has far higher energy-producing capacity than any energy source based on burning fossil fuels or hydrogen gas fuel cell.

### EXAMPLE 9

The amount of energy released from the fusion of titanium with hydrogen is now estimated.

Natural titanium ₂₂Ti contains 0.0825 mole fraction of stable ⁴⁶Ti isotope.

⁴⁶₂₂Ti (45.9526316 u) + ¹₁H (1.007825032 u) → ⁴⁷₂₃V (46.9549089 u) + 0.005547732 u (5.167490449 MeV)

The half life of⁴⁷V is 32.6 min and it transmutates by positron emission into stable ⁴⁷Ti isotope.

⁴⁷₂₃V (46.9549089 u) →⁴⁷₂₂Ti (46.9517631 u) + β⁺(0.00054857990943 u, 0.5109989 MeV) + 0.00259722 u (2.41920663 MeV)

Positron β⁺ annihilates electron β⁻.

β⁺ (0.00054857990943 u) + β⁻(0.00054857990943 u) → 2 * 0.5109989 MeV = 1.0219978 MeV

One mole of natural titanium ₂₂Ti contains 0.0744 mol of stable ⁴⁷Ti isotope.

⁴⁷₂₂Ti (46.9517631 u) + ¹₁H (1.007825032 u) →⁴⁸₂₃V (47.9522537 u) + 0.007334432 u (6.831730031 MeV)

The half life of ⁴⁸V is 15.9735 d and it transmutates by positron emission into stable ⁴⁸Ti isotope.

⁴⁸₂₃V (47.9522537 u) → ⁴⁸₂₂Ti (47.9479463 u) + β⁺ (0.00054857990943 u, 0.5109989 MeV) + 0.00375882 u (3.50119056 MeV)

Positron β⁺ annihilates electron β⁻.

β⁺ (0.00054857990943 u) + β⁻(0.00054857990943 u) → 2 * 0.5109989 MeV = 1.0219978 MeV

One mole of natural titanium ₂₂Ti contains 0.7372 mol of stable ⁴⁸Ti isotope.

^{4g}₂₂Ti (47.9479463 u) + ¹₁H (1.007825032 u) → ⁴⁹₂₃V (48.9485161 u) + 0.007255232 u (6.757958399 MeV)

The half life of ⁴⁹V is 329 d and it transmutates by electron capture into stable ⁴⁹Ti isotope.

⁴⁹₂₃V (48.9485161 u) →⁴⁹₂₂Ti (48.9478700 u) + 0.00064610 u (0.60181631 MeV)

Natural titanium ₂₂Ti contains 0.0541 mole fraction of stable ⁴⁹Ti isotope.

⁴⁹₂₂Ti (48.9478700 u) + ¹₁H (1.007825032 u) →⁵⁰₂₃V (49.9471585 u) + 0.008536532 u (7.951438097 MeV)

⁵⁰V isotope of ₂₃V element has such a long half life (1.4×10¹⁷ a) that it is practically stable.

Natural titanium ₂₂Ti contains 0.0518 mole fraction of stable ⁵⁰Ti isotope.

⁵⁰₂₂Ti (49.9447912 u) + ¹₁H (1.007825032 u) →⁵¹₂₃V (50.9439595 u) + 0.008656732 u (8.063399589 MeV)

⁵¹V is a stable isotope of ₂₃V.

Primary fusion reactions between titanium isotopes and hydrogen release a lot of energy. The fusion of 1 mol ₂₂Ti (47.867 g) with 1 mol ¹₁H (1.0078 g) releases 0.0825 mol * 96.48533 kJ / mol * 5.167490449 * 10⁶ + 0.0744 mol * 96.48533 kJ / mol * 6.831730031 * 10⁶ + 0.7372 mol * 96.48533 kJ / mol * 6.757958399 * 10⁶ + 0.0541 mol * 96.48533 kJ / mol * 7.951438097 * 10⁶ + 0.0518 mol * 96.48533 kJ / mol * 8.063399589 * 10⁶ = 652667538 kJ = 652667 MJ = 181296 kWh of energy that is converted to thermal energy within the space surrounded by the gamma radiation shield made of, e.g., lead metal.

In case the released energy, about 650 000 MJ, is utilized directly as thermal energy, the amount of thermal energy is comparable to burning about 16800 liters of diesel oil, because burning diesel releases thermal energy about 38.6 MJ/liter (10.7 kWh / liter).

In case the released energy, about 180 000 kWh, is utilized in an electric generator based on e.g. Rankine cycle that has about 30 % efficiency at relatively low fluid temperatures (e.g. 400 °C), 54000 kWh of electric energy is produced. Assuming that an electric car travelling at 80 km / h consumes about 20 kWh / 100 km, the amount of electric energy produced from almost 48 g of titanium and slightly over 1 g of hydrogen is enough for driving that electric car for 270000 kilometers. Estimating that up to 10 % of the electricity (COP =10) is used for operating the fusion system, about 240000 km driving distance is still feasible with the single fuel cartridge.

### EXAMPLE 10

Reaction material for the thermal-energy producing system was prepared from the following constituents. Nickel nanopowder (40 g) having an average particle size of 10 nm was mixed with 10 g of multiferroic bismuth ferrite BiFeO₃ crystallite powder having particle size range of about 100 nm - 1000 nm. BiFeO₃ crystallite powder was prepared by mechanically crushing commercial BiFeO₃ sputtering target to powder. The precursors for the catalyst enhancing the formation of Rydberg matter comprised 85 wt% iron oxide Fe₂O₃, 12 wt. % potassium hydroxide KOH and 3 wt% aluminum oxide Al₂O₃. The precursor mixture was heated to 400 - 450 °C in the presence of hydrogen gas to form Fe₃O₄:K₂O,Al₂O₃. The calcined catalyst powder was then mechanically crushed to catalyst nanopowder that had particle size range of about 10 - 100 nm. About 2.0 g of the catalyst nanopowder was added to the Ni - BiFeO₃ mixture and the powder mixture was placed to the reaction cartridge.

The reaction container was connected to a hydrogen gas line receiving hydrogen gas from a pressurized hydrogen gas bottle. The reaction container was also connected to the cooling fluid circulation. The reaction container was pressurized with hydrogen gas to 20 bar (gauge) and slowly heated to 400 °C with an electric resistance heater. The reaction material was capable of standing temperatures up to at least about 630 - 650 °C without losing its ability to generate heat energy.

Variable current was applied to the metal coil surrounding the reaction material in the reaction container to polarize the multiferroic material and sustain the generation of heat energy.

The presence of some water vapor impurity in the reaction container possibly helped to keep BiFeO₃ and Fe₃O₄:K₂O,Al₂O₃ powders in active form by preventing the reduction of iron oxides into elemental iron and sintering of the powders.

It is assumed that the multiferroic crystallite powder was polarized by the variable magnetic field within the reaction material and the local electric field due to the polarization was capable of accelerating electrons or protons to excite electrons to Rydberg states. The variable magnetic field was generated with an alternating current fed to a metal coil around the reaction container. The frequency of the alternating current could be adjusted up to the megahertz (MHz) range to provide control of the solid state fusion reactions inside the reaction container.

The system produced mostly relatively low energy photons (X-ray photons or deep UV photons) and the gamma radiation was very weak. In spite of that the system generated at least 5 kW of thermal energy with less than 1 kW input power. It is herein hypothesized that excitation state of the metastable fused nucleus (e.g. nickel-hydrogen) was so long-lived that the excitation state of the nucleus was capable of decaying via the energy transfer to K-shell electrons and resulting in X-ray photon emission. Generated thermal energy was removed by the cooling fluid circulation from the reaction container. The amount of collected thermal energy was at least 6 times larger than the energy used for pre-heating and controlling the reaction container (COP > 6). After the tests the reaction cartridge was de-pressurized and let to cool to room temperature for several days while the amount of residual radiation was monitored. Highly radioactive isotopes were not observed.

### INDUSTRIAL APPLICABILITY

Apparatuses and methods based on various embodiments of the present invention produce very cheap thermal and electric energy. Targets for the utilization of the thermal energy produced by the reaction container comprise real estates for heating or cooling, farms, factories, houses, blocks of flats, green houses, private persons, private companies or public companies melting ice and snow from streets, roads, bridges and air ports. Applications for the utilization of thermal energy also comprise adsorption cooling especially in tropical or subtropical climates for the cooling of buildings, production of purified water by distillation or by freezing water into ice with adsorption cooling and producing fresh water from melted ice, and unit processes in chemical industry where solutions are fractionated into separate components, solutions are evaporated until a solid product is obtained or moist products are dried.

Targets for the utilization of electricity made from the thermal energy produced by the reaction container comprise farms, houses, blocks of flats, other real estates, green houses, factories, water purification plants, automotive industry, vehicles, cars, trucks, trains, ships and air planes.

It will be appreciated by those skilled in the art that various modifications and changes can be made without departing from the scope of the invention. Similar other modifications and changes are intended to fall within the scope of the invention, as defined by the appended claims.

## Claims

1. A method of producing energy, comprising
- providing a reaction container (350) comprising reaction material (320), the reaction material (320) comprising electrically polarizable dielectric material and metallic material,
- pressurizing the reaction container (350) with hydrogen gas,
- activating hydrogen molecules in the hydrogen gas to provide atomic hydrogen,
- polarizing the dielectric material to produce an electric field,
- pulling positive hydrogen ions with the electric field from the metallic surface or ionizing the atomic hydrogen in the electric field to provide positive hydrogen ions, the method being **characterized in that** it comprises the further step of
- accelerating hydrogen ions in the electric field,
wherein part of the accelerated positive hydrogen ions tunnels through a Coulomb barrier between the positive hydrogen ions and atomic nuclei of the reaction material to fuse the positive hydrogen ions with the atomic nuclei of the reaction material to release energy,
wherein the reaction material further comprises material promoting the formation and storage of Rydberg matter, said material preferably being arranged near the electrically polarizable dielectric material or to the surface of the electrically polarizable dielectric material; and
wherein electrons are accelerated in the electric field in addition to positive hydrogen ions, the electric field strength being capable of producing a kinetic energy for the positive hydrogen ions and electrons high enough to excite electrons in the reaction material to Rydberg states and to form Rydberg matter.

2. The method according to claim 1, wherein the metallic material is capable of forming active hydrogen material comprising interstitial and/or electrically conductive metal hydrides, such as transition metal hydrides, in particular nickel, titanium, zirconium, hafnium, platinum group metal or other metal capable of forming metallic metal hydride, and wherein the resistivity of the active hydrogen material preferably being smaller than 1000 µΩcm, preferably smaller than 500 µΩcm, in particular smaller than 100 µΩcm.

3. The method according to claim 2, wherein the active hydrogen material comprises
- a hydrogen storage alloy,
- electrically conductive hydrogenation catalyst,
- material capable of forming binary metal hydride consisting of a metal and hydrogen, or
- material capable of forming ternary metal hydride consisting of a first metal, a second metal and hydrogen.

4. The method according to any of the preceding claims, wherein the metallic material comprises transition metal having hydrogen in the form of hydride and/or hydrogen with a metallic bond.

5. The method according to any of the preceding claims, wherein the metallic material is in the form of nanopowder comprising metallic nanoparticles, the method further comprising enhancing and focusing the electric field locally by metallic nanoparticles.

6. The method according to any of the preceding claims, wherein the dielectric material comprises piezoelectric material, pyroelectric material and/or multiferroic material, which is polarized by mechanical vibration, temperature variation, and/or magnetic field, respectively.

7. The method according to any of the preceding claims, comprising initiating the fusion reactions at the nanoscale, at least one dimension being less than 100 nm, and wherein the dielectric material preferably is in the form of a powder or nanoporous material, and/or wherein the reaction material preferably comprises powdery material and/or porous material.

8. The method according to any of the preceding claims, comprising keeping the temperature of the reaction material at a range of 100 - 1200 °C, preferably at 300 - 900 °C, in particular at 400 - 700 °C.

9. The method according to any of the preceding claims, comprising
- colliding at least part of the Rydberg matter with ions or electrons accelerated in an electric field so as to induce a Coulomb explosion of the Rydberg matter to produce high-energy hydrogen ions, and
- fusing at least part of the high-energy hydrogen ions with atomic nuclei of the reaction material so as to release energy, said material promoting the formation and storage of Rydberg matter preferably being in the form of catalytic nanopowder.

10. The method according to any of the preceding claims, wherein the reaction material comprises paracrystalline material doped with an element capable of forming Rydberg matter.

11. The method according to claim 10, wherein the paracrystalline material comprises
- a metal oxide mixture comprising a first metal oxide and a second metal oxide, the metal of the first metal oxide being capable of changing its oxidation state in reducing atmosphere and the metal of the second metal oxide is stable and does not change its oxidation state in reducing atmosphere,
- nickel mixed with alumina and/or chromia,
- nickel oxide mixed with alumina and/or chromia,
- iron mixed with alumina and/or chromia,
- iron oxide mixed with alumina and/or chromia, or
- copper-zinc alloy mixed with alumina and/or chromia.
and optionally
wherein the doping element capable of forming Rydberg matter possesses Rydberg states due to the excitation of an electron of the element and is capable of becoming a Rydberg atom, the element preferably comprising Li, Na, K, Rb, Cs, N, Ni, Ag, Cu, Pd, Ti or Y.

12. The method according to any of any of the preceding claims, wherein the material promoting the formation and storage of Rydberg matter comprises
- styrene catalyst,
- ammonia synthesis catalyst,
- high temperature water gas shift catalyst comprising potassium doped iron oxide and/or potassium doped lanthanum niobate,
- Fischer-Tropsch catalyst comprising metals and metal oxides of cobalt, iron, ruthenium and/or nickel doped with copper or group 1 alkali metals, or
- hydrogenation catalyst comprising platinum, palladium, rhodium, ruthenium, alloys of Pt, Pd, Rh and Ru, Raney nickel, Urushibara nickel and alkali metal doped nickel oxide, preferably Ni₂O₃ and non-stoichiometric Ni₁₋ₓO doped with alkali metal, preferably potassium, wherein x is a non-integer in a range of about 0.005 - 0.1, preferably about 0.02.

13. The method according to any of the preceding claims, wherein in the reaction material
- the amount of said dielectric material is 5 - 80 wt%,
- the amount of said metallic material is 15 - 90 wt%, and
- the amount of said material promoting the formation and storage of Rydberg matter is 1-10 wt%.

14. The method according to any of the preceding claims, wherein
- the electric field is adapted to accelerate hydrogen ions and electrons to a first kinetic energy sufficient to form Rydberg atoms in the reaction material,
- the Rydberg atoms are attracted together to form condensed Rydberg matter,
- the condensed Rydberg matter is destabilized by ionization of the said condensed Rydberg matter to induce Coulomb explosion so as to accelerate the hydrogen ions separated from the condensed Rydberg matter due to repulsive force to a second kinetic energy, and
- at least part of the accelerated hydrogen ions tunnels through a Coulomb barrier between the hydrogen ions and atomic nuclei of the reaction material so as to release energy.

15. A nuclear fusion system (300) for producing thermal energy, the system comprising
- a reaction container (350),
- reaction material (320) within the reaction container (350), the reaction material comprising electrically polarizable dielectric material and metallic material,
- hydrogen gas source (306) connected to the reaction container (350) for pressurizing the reaction container (350) with hydrogen gas,
- heat exchange unit (314) for removing thermal energy produced in the reaction container,
wherein the system further comprises
- means for polarizing the dielectric material in order to produce an electric field within the reaction material,
- means for activating hydrogen molecules into hydrogen atoms and ionizing hydrogen atoms in order to accelerate the positive hydrogen ions in the electric field so that they can tunnel through a Coulomb barrier between the positive hydrogen ions and atomic nuclei of the reaction material to fuse the positive hydrogen ions with the atomic nuclei of the reaction material to release energy, and wherein the reaction material further comprises material promoting the formation and storage of Rydberg matter.

16. The system according to claim 15, comprising a heater (322) for heating the reaction material (320), and optionally
- temperature measurement system (328, 334) for measuring the temperature of the reaction material (320) and from the heat exchange unit (314),
- pressure measurement system (313) for measuring hydrogen gas pressure, and
- a control system (304) adapted to receive input from the temperature measurement system (328, 334) and the pressure measurement system (313) and to control the heat exchange unit (314) and/or hydrogen gas pressure, and optionally the heater (322).

17. The system according to any of the preceding claims, wherein the electrically polarizable dielectric material comprises piezoelectric material and said means for polarizing the dielectric material to create electric field comprise a transducer (550) for inducing mechanical vibrations to the piezoelectric material for creating said electric field, or wherein the electrically polarizable dielectric material comprises multiferroic material and said means for polarizing the dielectric material to create electric field comprise an electrical coil (518) for inducing a magnetic field to the multiferroic material for creating said electric field.

18. The system according to any of claims 15 to 17, wherein the reaction material comprises dielectric material in the form of particles (1004, 1102, 1108) having a size of 10 - 10000 nm mixed with metallic material in the form of nanoparticles (1010, 1114, 1116, 1118) having a size of 0.5 - 100 nm.

## Patentansprüche

1. Ein Verfahren zur Energieerzeugung, aufweisend
- Bereitstellen eines Reaktionsbehälters (350), welcher ein Reaktionsmaterial (320) aufweist, wobei das Reaktionsmaterial (320) elektrisch polarisierbares dielektrisches Material und metallisches Material aufweist,
- Druckbeaufschlagen des Reaktionsbehälters (350) mit Wasserstoffgas,
- Aktivieren von Wasserstoffmolekülen in dem Wasserstoffgas, um atomaren Wasserstoff bereitzustellen,
- Polarisieren des dielektrischen Materials, um ein elektrisches Feld zu erzeugen,
- Ziehen von positiven Wasserstoffionen mit dem elektrischen Feld aus der metallischen Oberfläche oder Ionisieren des atomaren Wasserstoffs in dem elektrischen Feld, um positive Wasserstoffionen bereitzustellen, wobei das Verfahren **dadurch gekennzeichnet ist, dass** es den weiteren Schritt aufweist eines
- Beschleunigens von Wasserstoffionen in dem elektrischen Feld,
wobei ein Teil der beschleunigten positiven Wasserstoffionen durch eine Coulombbarriere zwischen den positiven Wasserstoffionen und den Atomkernen des Reaktionsmaterials tunnelt, um die positiven Wasserstoffionen mit den Atomkernen des Reaktionsmaterials zu verschmelzen, um Energie freizusetzen,
wobei das Reaktionsmaterial ferner ein Material aufweist, welches die Bildung und Speicherung von Rydberg-Materie begünstigt, wobei besagtes Material bevorzugt nahe dem elektrisch polarisierbaren dielektrischen Material oder zu der Oberfläche des elektrisch polarisierbaren dielektrischen Materials angeordnet ist, und
wobei Elektronen in dem elektrischen Feld zusätzlich zu positiven Wasserstoffionen beschleunigt werden, wobei die elektrische Feldstärke fähig ist, eine kinetische Energie für die positiven Wasserstoffionen und die Elektronen zu erzeugen, die hoch genug ist, um Elektronen in dem Reaktionsmaterial in Rydberg-Zustände anzuregen und um Rydberg-Materie zu bilden.

2. Das Verfahren gemäß Anspruch 1, wobei das metallische Material fähig ist, aktives Wasserstoffmaterial zu bilden, welches interstitielle und/oder elektrisch leitende Metallhydride aufweist, wie zum Beispiel Übergangsmetallhydride, insbesondere Nickel, Titan, Zirconium, Hafnium, ein Platingruppenmetall oder ein anderes Metall, welches fähig ist, metallisches Metallhydrid zu bilden, und wobei bevorzugt der elektrische Widerstand des aktiven Wasserstoffmaterials kleiner als 1000 µΩcm ist, bevorzugt kleiner als 500 µΩcm, insbesondere kleiner als 100 µΩcm.

3. Das Verfahren gemäß Anspruch 2, wobei das aktive Wasserstoffmaterial aufweist
- eine Wasserstoffspeicherungslegierung,
- einen elektrisch leitenden Hydrierkatalysator,
- ein Material, welches fähig ist, binäres Metallhydrid zu bilden, das aus einem Metall und Wasserstoff besteht, oder
- ein Material, welches fähig ist, ternäres Metallhydrid zu bilden, das aus einem ersten Metall, einem zweiten Metall und Wasserstoff besteht.

4. Das Verfahren gemäß einem der vorhergehenden Ansprüche, wobei das metallische Material ein Übergangsmetall aufweist, welches Wasserstoff in der Form von einem Hydrid und/oder Wasserstoff mit einer Metallbindung aufweist.

5. Das Verfahren gemäß einem der vorhergehenden Ansprüche, wobei das metallische Material in der Form von Nanopulver ist, welches metallische Nanopartikel aufweist, wobei das Verfahren ferner aufweist ein lokales Verstärken und Fokussieren des elektrischen Feldes durch metallische Nanopartikel.

6. Das Verfahren gemäß einem der vorhergehenden Ansprüche, wobei das dielektrische Material piezoelektrisches Material, pyroelektrisches Material und/oder multiferroisches Material aufweist, welche entsprechend durch eine mechanische Schwingung, eine Temperaturveränderung und/oder ein magnetisches Feld polarisiert werden.

7. Das Verfahren gemäß einem der vorhergehenden Ansprüche, aufweisend ein Initiieren der Fusionsreaktionen auf der Nanoskala, wobei mindestens eine Dimension kleiner ist als 100 nm, und wobei das dielektrische Material bevorzugt in der Form von einem Pulver oder einem nanoporösem Material ist und/oder wobei das Reaktionsmaterial bevorzugt pulverförmiges Material und/oder poröses Material aufweist.

8. Das Verfahren gemäß einem der vorhergehenden Ansprüche, aufweisend ein Halten der Temperatur des Reaktionsmaterials in einem Bereich von 100 - 1200 °C, bevorzugt bei 300 - 900 °C, insbesondere bei 400 - 700 °C.

9. Das Verfahren gemäß einem der vorhergehenden Ansprüche, aufweisend
- ein Zusammenstoßen von mindestens einem Teil der Rydberg-Materie mit Ionen oder Elektronen, welche in einem elektrischen Feld beschleunigt werden, so dass eine Coulombexplosion der Rydberg-Materie induziert wird, um hochenergetische Wasserstoffionen zu erzeugen, und
- ein Verschmelzen von mindestens einem Teil der hochenergetischen Wasserstoffionen mit Atomkernen des Reaktionsmaterials, so dass Energie freigesetzt wird, wobei besagtes Material, das die Bildung und Speicherung von Rydberg-Materie begünstigt, bevorzugt in der Form von katalytischem Nanopulver ist.

10. Das Verfahren gemäß einem der vorhergehenden Ansprüche, wobei das Reaktionsmaterial ein parakristallines Material aufweist, welches mit einem Element dotiert ist, das fähig ist, Rydberg-Materie zu bilden.

11. Das Verfahren gemäß Anspruch 10, wobei das parakristalline Material aufweist
- eine Metalloxidmischung, welche ein erstes Metalloxid und ein zweites Metalloxid aufweist, wobei das Metall des ersten Metalloxids fähig ist, seinen Oxidationszustand in reduzierender Atmosphäre zu ändern, und das Metall des zweiten Metalloxids stabil ist und seinen Oxidationszustand in reduzierender Atmosphäre nicht ändert,
- Nickel gemischt mit Aluminiumoxid und/oder Chromoxid,
- Nickeloxid gemischt mit Aluminiumoxid und/oder Chromoxid,
- Eisen gemischt mit Aluminiumoxid und/oder Chromoxid,
- Eisenoxid gemischt mit Aluminiumoxid und/oder Chromoxid, oder
- eine Kupfer-Zink-Legierung gemischt mit Aluminiumoxid und/oder Chromoxid,
und optional
wobei das Dotierelement, welches fähig ist Rydberg-Materie zu bilden, Rydberg-Zustände aufgrund der Anregung eines Elektrons des Elements besitzt und fähig ist, ein Rydberg-Atom zu werden, wobei das Element bevorzugt aufweist Li, Na, K, Rb, Cs, N, Ni, Ag, Cu, Pd, Ti oder Y.

12. Das Verfahren gemäß einem der vorhergehenden Ansprüche, wobei das Material, welches die Bildung und Speicherung von Rydberg-Materie begünstigt, aufweist
- einen Styrolkatalysator,
- einen Ammoniaksynthese-Katalysator,
- einen Hochtemperatur-Wassergas-Shift-Katalysator, welcher Kalium-dotiertes Eisenoxid und/oder Kalium-dotiertes Lanthanniobat aufweist,
- einen Fischer-Tropsch-Katalysator, welcher aufweist Metalle und Metalloxide aus Kobalt, Eisen, Ruthenium und/oder Nickel dotiert mit Kupfer oder Gruppe-1-Alkalimetalle, oder
- einen Hydrierkatalysator, welcher aufweist Platin, Palladium, Rhodium, Ruthenium, Legierungen von Pt, Pd, Rh und Ru, Raney-Nickel, Urushibara-Nickel und Alkalimetall-dotiertes Nickeloxid, bevorzugt Ni₂O₃ und nichtstöchiometrisches Ni₁₋ₓO dotiert mit Alkalimetall, bevorzugt Kalium, wobei x eine nicht-ganze-Zahl in einem Bereich von etwa 0,005 - 0,1 ist, bevorzugt etwa 0,02.

13. Das Verfahren gemäß einem der vorhergehenden Ansprüche, wobei in dem Reaktionsmaterial
- die Menge von besagtem dielektrischen Material 5 - 80 wt% ist,
- die Menge von besagtem metallischen Material 15 - 90 wt% ist und
- die Menge von besagtem Material, das die Bildung und Speicherung von Rydberg-Materie begünstigt, 1 - 10 wt% ist.

14. Das Verfahren gemäß einem der vorhergehenden Ansprüche, wobei
- das elektrische Feld angepasst wird, um Wasserstoffionen und Elektronen zu einer ersten kinetischen Energie zu beschleunigen, welche ausreicht, um Rydberg-Atome in dem Reaktionsmaterial zu bilden,
- die Rydberg-Atome zueinander angezogen werden, um kondensierte Rydberg-Materie zu bilden,
- die kondensierte Rydberg-Materie durch Ionisation der besagten kondensierten Rydberg-Materie destabilisiert wird, um eine Coulombexplosion zu induzieren, so dass die Wasserstoffionen, die von der kondensierten Rydberg-Materie getrennt sind, aufgrund einer abstoßenden Kraft auf eine zweite kinetische Energie beschleunigt werden, und
- mindestens ein Teil der beschleunigten Wasserstoffionen durch eine Coulombbarriere zwischen den Wasserstoffionen und den Atomkernen des Reaktionsmaterials tunnelt, so dass Energie freigesetzt wird.

15. Ein Nuklear-Fusion-System (300) zum Erzeugen von thermischer Energie, das System aufweisend
- einen Reaktionsbehälter (350),
- ein Reaktionsmaterial (320) in dem Reaktionsbehälter (350), wobei das Reaktionsmaterial elektrisch polarisierbares dielektrisches Material und metallisches Material aufweist,
- eine Wasserstoffgasquelle (306), welche mit dem Reaktionsbehälter (350) verbunden ist, zum Druckbeaufschlagen des Reaktionsbehälters (350) mit Wasserstoffgas,
- eine Wärmetauschereinheit (314) zum Entfernen von thermischer Energie, welche in dem Reaktionsbehälter erzeugt wird,
wobei das System ferner aufweist
- Mittel zum Polarisieren des dielektrischen Materials, um ein elektrisches Feld in dem Reaktionsmaterial zu erzeugen,
- Mittel zum Aktivieren von Wasserstoffmolekülen zu Wasserstoffatomen und Ionisieren von Wasserstoffatomen, um die positiven Wasserstoffionen in dem elektrischen Feld zu beschleunigen, so dass sie durch eine Coulombbarriere zwischen den positiven Wasserstoffionen und den Atomkernen des Reaktionsmaterials tunneln können, um die positiven Wasserstoffionen mit den Atomkernen des Reaktionsmaterials zu verschmelzen, um Energie freizusetzen, und wobei das Reaktionsmaterial ferner ein Material aufweist, welches die Bildung und Speicherung von Rydberg-Materie begünstigt.

16. Das System gemäß Anspruch 15, aufweisend eine Heizvorrichtung (322) zum Heizen des Reaktionsmaterials (320) und optional
- ein Temperaturmesssystem (328, 334) zum Messen der Temperatur des Reaktionsmaterials (320) und von der Wärmetauschereinheit (314),
- ein Druckmesssystem (313) zum Messen eines Wasserstoffgasdruckes und
- ein Steuersystem (304), welches angepasst ist, um eine Eingabe von dem Temperaturmesssystem (328, 334) und dem Druckmesssystem (313) zu erhalten und um die Wärmetauschereinheit (314) und/oder den Wasserstoffgasdruck und optional die Heizvorrichtung (322) zu steuern.

17. Das System gemäß einem der vorhergehenden Ansprüche, wobei das elektrisch polarisierbare dielektrische Material ein piezoelektrisches Material aufweist und die besagten Mittel zum Polarisieren des dielektrischen Materials, um ein elektrisches Feld zu erzeugen, einen Transducer (550) aufweisen zum Induzieren mechanischer Schwingungen in dem piezoelektrischen Material zum Erzeugen des besagten elektrischen Felds, oder wobei das elektrisch polarisierbare dielektrische Material ein multiferroisches Material aufweist und die besagten Mittel zum Polarisieren des dielektrischen Materials, um ein elektrisches Feld zu erzeugen, eine elektrische Spule (518) aufweisen zum Induzieren eines magnetischen Feldes in dem multiferroischen Material zum Erzeugen des besagten elektrischen Felds.

18. Das System gemäß einem der Ansprüche 15 bis 17, wobei das Reaktionsmaterial ein dielektrisches Material in der Form von Partikeln (1004, 1102, 1108), welche eine Größe von 10 - 10000 nm haben, aufweist, gemischt mit metallischem Material in der Form von Nanopartikeln (1010, 1114, 1116, 1118), welche eine Größe von 0,5 -100 nm haben.

## Revendications

1. Procédé de production d'énergie, comprenant
- la fourniture d'un récipient à réaction (350) comprenant un matériau réactionnel (320), le matériau réactionnel (320) comprenant un matériau diélectrique électriquement polarisable et un matériau métallique,
- la pressurisation du récipient à réaction (350) avec un gaz d'hydrogène,
- l'activation des molécules d'hydrogène du gaz d'hydrogène pour obtenir de l'hydrogène atomique,
- la polarisation du matériau diélectrique pour produire un champ électrique,
- l'extraction des ions hydrogène à l'aide du champ électrique de la surface métallique ou l'ionisation de l'hydrogène atomique dans le champ électrique pour obtenir des ions hydrogène, et
- l'accélération des ions hydrogène dans le champ électrique,
dans lequel une partie des ions hydrogène accélérés franchit une barrière de Coulomb entre les ions hydrogène et les noyaux atomiques du matériau réactionnel pour fusionner les ions hydrogène avec les noyaux atomiques du matériau réactionnel pour libérer de l'énergie,
dans lequel le matériau réactionnel comprend en outre un matériau favorisant la formation et le stockage de la matière de Rydberg, ledit matériau étant de préférence disposé près du matériau diélectrique électriquement polarisable ou sur la surface du matériau diélectrique électriquement polarisable et
dans lequel les électrons sont accélérés dans le champ électrique en plus des ions hydrogène, la force du champ électrique étant capable de produire une énergie cinétique pour les ions hydrogène et les électrons suffisamment élevée pour exciter les électrons du matériau réactionnel aux niveaux de Rydberg et pour former la matière de Rydberg.

2. Procédé selon la revendication 1, dans lequel le matériau métallique est capable de former un matériau à base d'hydrogène actif comprenant des hydrures de métaux interstitiels et/ou conducteurs, tels que des hydrures de métaux de transition, en particulier d'un métal du groupe du nickel, du titane, du zirconium, de l'hafnium, du platine ou d'un autre métal capable de former un hydrure de métal métallique, et dans lequel la résistivité du matériau à base d'hydrogène actif est de préférence inférieure à 1 000 µΩcm, de préférence inférieure à 500 µΩcm, en particulier inférieure à 100 µΩcm.

3. Procédé selon la revendication 2, dans lequel le matériau à base d'hydrogène actif comprend
- un alliage de stockage d'hydrogène,
- un catalyseur d'hydrogénation conducteur,
- un matériau capable de former un hydrure de métal binaire constitué d'un métal et d'hydrogène, ou
- un matériau capable de former un hydrure de métal ternaire constitué d'un premier métal, d'un second métal et d'hydrogène.

4. Procédé selon l'une quelconque des revendications précédentes, dans lequel le matériau métallique comprend un métal de transition comportant de l'hydrogène sous la forme d'hydrure et/ou d'hydrogène présentant une liaison métallique.

5. Procédé selon l'une quelconque des revendications précédentes, dans lequel le matériau métallique se présente sous la forme d'une nanopoudre comprenant des nanoparticules métalliques, le procédé comprenant en outre le renforcement et la focalisation du champ électrique localement par les nanoparticules métalliques.

6. Procédé selon l'une quelconque des revendications précédentes, dans lequel le matériau diélectrique comprend un matériau piézoélectrique, un matériau pyroélectrique et/ou un matériau multiferroïque, qui est polarisé par une vibration mécanique, une variation de température et/ou un champ magnétique, respectivement.

7. Procédé selon l'une quelconque des revendications précédentes, comprenant l'amorçage des réactions de fusion à l'échelle du nanomètre, au moins une dimension étant inférieure à 100 nm, et dans lequel le matériau diélectrique se présente de préférence sous la forme d'une poudre ou d'un matériau nanoporeux, et/ou dans lequel le matériau réactionnel comprend de préférence un matériau en poudre et/ou un matériau poreux.

8. Procédé selon l'une quelconque des revendications précédentes, comprenant le maintien de la température du matériau réactionnel dans une plage de 100 à 1 200 °C, de préférence à 300 - 900 °C, en particulier à 400 - 700 °C.

9. Procédé selon l'une quelconque des revendications précédentes, comprenant
- la collision d'au moins une partie de la matière de Rydberg avec des ions ou des électrons accélérés dans un champ électrique de manière à induire une explosion coulombienne de la matière de Rydberg pour produire des ions hydrogène de haute énergie, et
- la fusion d'au moins une partie des ions hydrogène de haute énergie avec les noyaux atomiques du matériau réactionnel de manière à libérer de l'énergie, ledit matériau favorisant la formation et le stockage de la matière de Rydberg étant de préférence sous la forme de nanopoudre catalytique.

10. Procédé selon l'une quelconque des revendications précédentes, dans lequel le matériau réactionnel comprend un matériau paracristallin dopé à un élément capable de former de la matière de Rydberg.

11. Procédé selon la revendication 10, dans lequel le matériau paracristallin comprend
- un mélange d'oxydes de métaux comprenant un premier oxyde de métal et un second oxyde de métal, le métal du premier oxyde de métal étant capable de changer d'état d'oxydation dans une atmosphère réductrice et le métal du second oxyde de métal étant stable et ne changeant pas d'état d'oxydation dans une atmosphère réductrice,
- du nickel mélangé avec de l'alumine et/ou de l'oxyde de chrome,
- de l'oxyde de nickel mélangé avec de l'alumine et/ou de l'oxyde de chrome,
- du fer mélangé avec de l'alumine et/ou de l'oxyde de chrome,
- de l'oxyde de fer mélangé avec de l'alumine et/ou de l'oxyde de chrome, ou
- un alliage de cuivre-zinc mélangé avec de l'alumine et/ou de l'oxyde de chrome.
et facultativement
dans lequel l'élément dopant capable de former de la matière de Rydberg possède des niveaux de Rydberg dus à l'excitation d'un électron de l'élément et est capable de devenir un atome de Rydberg, l'élément comprenant de préférence le Li, le Na, le K, le Rb, le Cs, le N, le Ni, l'Ag, le Cu, le Pd, le Ti ou l'Y.

12. Procédé selon l'une quelconque des revendications précédentes, dans lequel le matériau favorisant la formation et le stockage de la matière de Rydberg comprend
- un catalyseur à base de styrène,
- un catalyseur de synthèse d'ammoniac,
- un catalyseur de conversion de l'eau en gaz à haute température comprenant de l'oxyde de fer dopé au potassium et/ou du niobate de lanthane dopé au potassium,
- un catalyseur de Fischer-Tropsch comprenant des métaux et des oxydes de métaux de cobalt, fer, ruthénium et/ou nickel dopés au cuivre ou aux métaux alcalins du groupe 1, ou
- des catalyseur d'hydrogénation comprenant le platine, le palladium, le rhodium, le ruthénium, les alliages de Pt, Pd, Rh et Ru, le nickel de Raney, le nickel d'Urushibara et l'oxyde de nickel dopé à un métal alcalin, de préférence le Ni₂O₃ et le Ni₁₋ₓO non stoechiométrique dopé à un métal alcalin, de préférence au potassium, dans lequel x représente un nombre non entier dans une plage d'environ 0,005 à 0,1, de préférence d'environ 0,02.

13. Procédé selon l'une quelconque des revendications précédentes, dans lequel dans le matériau réactionnel
- la quantité dudit matériau diélectrique est de 5 à 80 % en poids,
- la quantité dudit matériau métallique est de 15 à 90 % en poids, et
- la quantité dudit matériau favorisant la formation et le stockage de la matière de Rydberg est de 1 à 10 % en poids.

14. Procédé selon l'une quelconque des revendications précédentes, dans lequel
- le champ électrique est adapté pour accélérer les ions hydrogène et les électrons à une première énergie cinétique suffisante pour former des atomes de Rydberg dans le matériau réactionnel,
- les atomes de Rydberg s'attirent les uns les autres pour former de la matière de Rydberg condensée,
- la matière de Rydberg condensée est déstabilisée par ionisation de ladite matière de Rydberg condensée pour induire une explosion coulombienne de manière à accélérer les ions hydrogène séparés de la matière de Rydberg condensée en raison de la force répulsive à une seconde énergie cinétique, et
- au moins une partie des ions hydrogène accélérés franchit une barrière de Coulomb entre les ions hydrogène et les noyaux atomiques du matériau réactionnel de manière à libérer de l'énergie.

15. Système de fusion nucléaire (300) destiné à produire de l'énergie thermique, le système comprenant
- un récipient à réaction (350),
- un matériau réactionnel (320) à l'intérieur du récipient à réaction (350), le matériau réactionnel comprenant un matériau diélectrique électriquement polarisable et un matériau métallique,
- une source de gaz d'hydrogène (306) reliée au récipient à réaction (350) en vue de la pressurisation du récipient à réaction (350) avec un gaz d'hydrogène,
- un élément d'échange de chaleur (314) servant à évacuer l'énergie thermique produite dans le récipient à réaction,
dans lequel le système comprend en outre
- des moyens de polarisation du matériau diélectrique destinés à produire un champ électrique à l'intérieur du matériau réactionnel,
- des moyens d'activation des molécules d'hydrogène en atomes d'hydrogène et d'ionisation des atomes d'hydrogène destinés à accélérer les ions hydrogène dans le champ électrique de manière à ce qu'ils puissent franchir une barrière de Coulomb entre les ions hydrogène et les noyaux atomiques du matériau réactionnel pour fusionner les ions hydrogène avec les noyaux atomiques du matériau réactionnel pour libérer de l'énergie, et dans lesquels le matériau réactionnel comprend en outre un matériau favorisant la formation et le stockage de la matière de Rydberg.

16. Système selon la revendication 15, comprenant un élément chauffant (322) destiné à chauffer le matériau réactionnel (320), et facultativement
- un système de mesure de la température (328, 334) destiné à mesurer la température du matériau réactionnel (320) et de l'élément d'échange de chaleur (314),
- un système de mesure de la pression (313) destiné à mesurer la pression du gaz d'hydrogène, et
- un système de régulation (304) adapté pour recevoir des données d'entrée en provenance du système de mesure de la température (328, 334) et du système de mesure de la pression (313) et pour réguler l'élément d'échange de chaleur (314) et/ou de pression du gaz d'hydrogène, et facultativement l'élément chauffant (322).

17. Système selon l'une quelconque des revendications précédentes, dans lequel le matériau diélectrique électriquement polarisable comprend un matériau piézoélectrique et lesdits moyens de polarisation du matériau diélectrique pour créer un champ électrique comprennent un transducteur (550) servant à induire des vibrations mécaniques sur le matériau piézoélectrique pour créer ledit champ électrique, ou dans lequel le matériau diélectrique électriquement polarisable comprend un matériau multiferroïque et lesdits moyens de polarisation du matériau diélectrique pour créer un champ électrique comprennent une bobine électrique (518) servant à induire un champ magnétique sur le matériau multiferroïque pour créer ledit champ électrique.

18. Système selon l'une quelconque des revendications 15 à 17, dans lequel le matériau réactionnel comprend un matériau diélectrique sous la forme de particules (1004, 1102, 1108) ayant une taille de 10 à 10 000 nm mélangé avec un matériau métallique sous la forme de nanoparticules (1010, 1114, 1116, 1118) ayant une taille de 0,5 à 100 nm.
